# EUROPEAN PATENT APPLICATION

(11) **EP 4 428 541 A1**
(43) Date of publication of application: **11.09.2024**
(21) Application number: 24161997.2
(22) Date of filing: 07.03.2024
(51) Int. Cl.: G01N 35/02, G01N 35/04

(54) **SPECIMEN ANALYZER AND SPECIMEN PROCESSING SYSTEM**

(30) Priority: 09.03.2023 JP 2023036935
(71) Applicant: SYSMEX CORPORATION, Kobe-shi Hyogo 651-0073 (JP)
(72) Inventor: Nakanishi, Noriyuki, Kobe-shi, Hyogo, 651-0073 (JP); Nagai, Takaaki, Kobe-shi, Hyogo, 651-0073 (JP); Misawa, Kota, Kobe-shi, Hyogo, 651-0073 (JP)
(74) Representative: Hoffmann Eitle

(57) **Abstract**

Disclosed is a specimen analyzer that uses a specimen rack in which a plurality of specimen containers can be held to analyze a specimen in each of the specimen containers, and the specimen analyzer includes: a measurement unit configured to measure the specimen; and a transport unit comprising a first placement region which is disposed in front of the measurement unit and in which a plurality of the specimen racks can be placed, and a second placement region which is disposed in a left-right direction relative to the first placement region and in which a plurality of the specimen racks can be placed, the transport unit configured to transport the specimen racks placed in the first placement region and the second placement region to a start position at which the measurement unit starts measurement.

## Description

### CROSS REFERENCE TO RELATED APPLICATIONS

This application claims priority from prior Japanese Patent Application No. 2023-036935, filed on March 9, 2023, entitled "SPECIMEN ANALYZER AND SPECIMEN PROCESSING SYSTEM", the entire content of which is incorporated herein by reference.

### FIELD OF THE INVENTION

The present invention relates to a specimen analyzer that uses a specimen rack in which a plurality of specimen containers can be held to analyze a specimen in each of the specimen containers, and a specimen processing system including the specimen analyzer.

### BACKGROUND OF THE INVENTION

Japanese Laid-Open Patent Publication No. 2009-229233 discloses an analyzer that includes an analyzer body, and a sampler disposed in front of the analyzer body. The sampler transports a specimen rack placed by an operator to a position at which sampling is performed by a suction nozzle of the analyzer body.

In recent years, the number of specimens that can be processed by an analyzer body per unit time has been increased. Therefore, if the sampler of the analyzer disclosed in Japanese Laid-Open Patent Publication No. 2009-229233 is applied to an analyzer body in which the number of specimens that can be processed per unit time is increased, frequency at which the operator places specimen racks in the sampler may be increased.

An object of the present invention is to provide a specimen analyzer and a specimen processing system that can reduce frequency at which an operator places specimen racks.

### SUMMARY OF THE INVENTION

The present invention is directed to a specimen analyzer (1) that uses a specimen rack (100) in which a plurality of specimen containers (110) can be held to analyze a specimen in each of the specimen containers (110). The specimen analyzer (1) of the present invention includes: a measurement unit (10) configured to measure the specimen; and a transport unit (20) including a first placement region (201) which is disposed in front of the measurement unit (10) and in which a plurality of the specimen racks (100) can be placed, and a second placement region (221) which is disposed in a left-right direction relative to the first placement region (201) and in which a plurality of the specimen racks (100) can be placed, the transport unit (20) configured to transport the specimen racks (100) placed in the first placement region (201) and the second placement region (221) to a start position (P32, P32a, P32b) at which the measurement unit (10) starts measurement.

In the specimen analyzer according to the present invention, since the transport unit includes the first placement region and the second placement region, an operator is allowed to place the specimen racks in both of the placement regions, and the frequency at which the operator places specimen racks can be reduced.

The present invention is directed to a specimen analyzer (1) that uses a specimen rack (100) in which a plurality of specimen containers (110) can be held to analyze a specimen in each of the specimen containers (110). The specimen analyzer (1) of the present invention includes: a measurement unit (10) configured to measure the specimen; and a transport unit (20) including a first placement region (201, 221) which is disposed in front of the measurement unit (10) and in which a plurality of the specimen racks (100) can be placed, and a second placement region (501) which is disposed in an up-down direction relative to the first placement region (201, 221) and in which a plurality of the specimen racks (100) can be placed, the transport unit (20) configured to transport the specimen racks (100) placed in the first placement region (201, 221) and the second placement region (501) to a start position (P32, P32a, P32b) at which the measurement unit (10) starts measurement.

In the specimen analyzer according to the present invention, since the transport unit includes the first placement region and the second placement region, an operator is allowed to place the specimen racks in both of the placement regions, and the frequency at which the operator places specimen racks can be reduced.

A specimen processing system (3) of the present invention includes the above-described specimen analyzer (1) and a smear preparation device (2).

In the specimen processing system according to the present invention, since the transport unit includes the first placement region and the second placement region in the specimen analyzer, an operator is allowed to place the specimen racks in both of the placement regions, and the frequency at which the operator places specimen racks can be reduced.

The present invention is directed to a specimen analyzer (1) that uses a specimen rack (100) in which a plurality of specimen containers (110) can be held to analyze a specimen in each of the specimen containers (110). The specimen analyzer (1) of the present invention includes: a measurement unit (10) configured to measure the specimen; and a transport unit (20) including a placement region (201, 221, 501) in which a plurality of the specimen racks (100) can be placed, the transport unit (20) configured to transport the specimen racks (100) placed in the placement region (201, 221, 501) to a start position (P32, P32a, P32b) at which the measurement unit (10) starts measurement. A number of the specimen containers (110) which can be placed in the placement region (201, 221, 501) at one time is 160 or more and 800 or less, and a number of specimens that can be analyzed per one hour by the specimen analyzer (1) is 130 or more and 400 or less.

The specimen analyzer according to the present invention has a size suitable for installation in a laboratory, and can increase the number of specimens processed per unit time while reducing the frequency at which the operator places the specimen racks.

The present invention can provide the specimen analyzer and the specimen processing system which can reduce the frequency at which an operator places specimen racks.

### BRIEF DESCRIPTION OF THE DRAWINGS

FIG. 1 is a side view schematically showing a configuration of a specimen analyzer according to Embodiment 1;
FIG. 2 is a perspective view of configurations of a specimen rack and a specimen container according to Embodiment 1;
FIG. 3 is a plan view schematically showing the number of the specimen racks that can be stored in a transport unit, and positions at which a measurement unit, a placement region, and a collection region are disposed, according to Embodiment 1;
FIG. 4 is a plan view schematically showing a configuration of the transport unit, according to Embodiment 1;
FIG. 5 is a plan view schematically showing an internal configuration of the measurement unit, according to Embodiment 1;
FIG. 6 illustrates a procedure of transporting the specimen rack to the collection region, according to Embodiment 1;
FIG. 7 illustrates a procedure of transporting the specimen rack to the collection region, according to Embodiment 1;
FIG. 8 is a block diagram illustrating a functional configuration of a control unit, according to Embodiment 1;
FIG. 9 is a block diagram illustrating a functional configuration of the measurement unit, according to Embodiment 1;
FIG. 10 is a block diagram illustrating a functional configuration of the transport unit, according to Embodiment 1;
FIG. 11 is a flow chart showing a process of pushing out the specimen rack from the placement region on the left side to a transport path on the front side, according to Embodiment 1;
FIG. 12 is a flow chart showing a process of transporting the specimen rack in the transport path on the front side, in the lateral direction, according to Embodiment 1;
FIG. 13 is a flow chart showing a process of pushing out the specimen rack from the transport path on the front side to the placement region on the right side, according to Embodiment 1;
FIG. 14 is a flow chart showing a process of pushing out the specimen rack from the placement region on the right side to a transport path on the rear side, according to Embodiment 1;
FIG. 15 is a flow chart showing a process of transporting the specimen rack in the transport path on the rear side, in the lateral direction, according to Embodiment 1;
FIG. 16 is a flow chart showing a process of pushing out the specimen rack from the transport path on the rear side to the collection region on the left side, according to Embodiment 1;
FIG. 17 is a flow chart showing a process of transporting the specimen rack in the lateral direction from the collection region on the left side to the collection region on the right side, according to Embodiment 1;
FIG. 18 is a side view schematically showing a configuration of a specimen analyzer according to Embodiment 2;
FIG. 19 is a plan view schematically showing the number of the specimen racks that can be stored in the transport unit, and positions at which the measurement units, the placement region, and the collection region are disposed, according to Embodiment 2;
FIG. 20 is a plan view schematically showing a configuration of the transport unit, according to Embodiment 2;
FIG. 21 is a side view schematically showing a configuration of a specimen processing system, according to Embodiment 3;
FIG. 22 is a plan view schematically showing the number of the specimen racks that can be stored in the transport unit on the right side, and positions at which the measurement units and the placement region are disposed, according to Embodiment 3;
FIG. 23 is a plan view schematically showing the number of the specimen racks that can be stored in the transport unit on the left side, and positions at which a smear preparation unit and the collection region are disposed, according to Embodiment 3;
FIG. 24 is a plan view schematically showing a configuration of the transport unit on the right side, according to Embodiment 3;
FIG. 25 is a plan view schematically showing a configuration of the transport unit on the left side, according to Embodiment 3;
FIG. 26 is a block diagram illustrating a functional configuration of the smear preparation unit, according to Embodiment 3;
FIG. 27 is a block diagram illustrating a functional configuration of the transport unit on the left side, according to Embodiment 3;
FIG. 28 is a side view schematically showing a configuration of a specimen analyzer, according to Embodiment 4;
FIG. 29 is a perspective view schematically showing a configuration of a rack holder, according to Embodiment 4;
FIG. 30 is a plan view schematically showing the number of the specimen racks that can be stored in a first tier of the transport unit, and positions at which the measurement unit, the placement region, and the collection region are disposed, according to Embodiment 4;
FIG. 31 is a plan view schematically showing the number of the specimen racks that can be stored in second to fourth tiers of the transport unit, and positions at which the placement region and the collection region are disposed, according to Embodiment 4;
FIG. 32 is a plan view schematically showing a configuration of the first tier of the transport unit, according to Embodiment 4;
FIG. 33 is a side view schematically showing a configuration of an ascending/descending mechanism, according to Embodiment 4;
FIG. 34 is a plan view schematically showing a configuration of each of the second to the fourth tiers of the transport unit, according to Embodiment 4;
FIG. 35 is a side view schematically showing a procedure of transporting the specimen rack in the placement region in each of the second to the fourth tiers, according to Embodiment 4;
FIG. 36 is a side view schematically showing a configuration of a specimen analyzer, according to Embodiment 5;
FIG. 37 is a plan view schematically showing the number of the specimen racks that can be stored in a first tier of the transport unit, and positions at which the measurement units, the placement region, and the collection region are disposed, according to Embodiment 5;
FIG. 38 is a plan view schematically showing the number of the specimen racks that can be stored in second to fourth tiers of the transport unit, and positions at which the placement region and the collection region are disposed, according to Embodiment 5;
FIG. 39 is a plan view schematically showing a configuration of the first tier of the transport unit, according to Embodiment 5;
FIG. 40 is a plan view schematically showing a configuration of each of the second to the fourth tiers of the transport unit, according to Embodiment 5;
FIG. 41 is a side view schematically showing a configuration of a specimen processing system, according to Embodiment 6;
FIG. 42 is a plan view schematically showing the number of the specimen racks that can be stored in a first tier of the transport unit on the right side, and positions at which the measurement units and the placement region are disposed, according to Embodiment 6;
FIG. 43 is a plan view schematically showing the number of the specimen racks that can be stored in second to fourth tiers of the transport unit on the right side, and positions at which the placement regions are disposed, according to Embodiment 6;
FIG. 44 is a plan view schematically showing the number of the specimen racks that can be stored in a first tier of the transport unit on the left side, and positions at which the smear preparation unit and the collection region are disposed, according to Embodiment 6;
FIG. 45 is a plan view schematically showing the number of the specimen racks that can be stored in second to fourth tiers of the transport unit on the left side, and positions at which the collection regions are disposed, according to Embodiment 6;
FIG. 46 is a plan view schematically showing a configuration of the first tier of the transport unit on the right side, according to Embodiment 6;
FIG. 47 is a plan view schematically showing a configuration of each of the second to the fourth tiers of the transport unit on the right side, according to Embodiment 6;
FIG. 48 is a plan view schematically showing a configuration of the first tier of the transport unit on the left side, according to Embodiment 6;
FIG. 49 is a plan view schematically showing a configuration of each of the second to the fourth tiers of the transport unit on the left side, according to Embodiment 6;
FIG. 50 schematically illustrates configurations of specimen analyzers having been mainly examined by the present inventors in examination of the number of the specimen containers that can be placed, and a processing rate; and
FIG. 51 shows a table that collectively indicates values of placement frequency indexes obtained from the configurations shown in FIG. 50 in the examination of the number of the specimen containers that can be placed, and the processing rate.

### DETAILED DESCRIPTION

Hereinafter, the up-down direction, the left-right direction, and the front-rear direction are indicated in the drawings, for convenience sake. On the front sides of a specimen analyzer and a specimen processing system, an operator places specimen racks in a transport unit and takes out the specimen racks from the transport unit.

### <Embodiment 1>

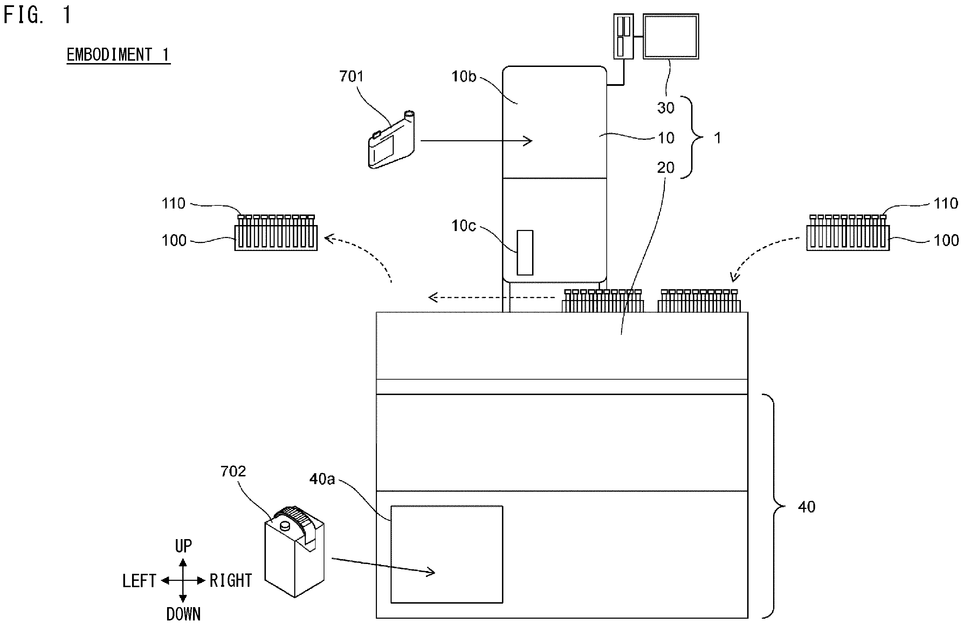

FIG. 1 is a side view schematically showing a configuration of a specimen analyzer 1.

The specimen analyzer 1 includes a measurement unit 10, a transport unit 20, a control unit 30, and a rack 40.

The specimen analyzer 1 is a device that automatically analyzes a specimen. The specimen is whole blood collected from a subject. The specimen analyzer 1 prepares a measurement sample from the specimen and a reagent, measures the measurement sample to obtain measurement data, and counts blood cells contained in the specimen based on the obtained measurement data. A specimen container 110 containing the specimen is transported in a state where the specimen container 110 is held by a specimen rack 100.

The measurement unit 10 suctions the specimen from the specimen container 110, and mixes the suctioned specimen with a reagent to prepare a measurement sample, measures the prepared measurement sample, and generates measurement data. The transport unit 20 transports the specimen rack 100 holding the specimen containers 110. The control unit 30 controls the measurement unit 10 and the transport unit 20. The control unit 30 analyzes the specimen based on the measurement data obtained by the measurement unit 10. The rack 40 supports the lower portions of the measurement unit 10 and the transport unit 20.

The measurement unit 10 has an openable and closable front cover 10b at the upper front surface portion. An operator opens the front cover 10b, and disposes a reagent container 701 which contains a staining liquid as a reagent used for preparing the measurement sample, into the measurement unit 10, from the front side. The rack 40 includes a box member 40a. The box member 40a can be drawn forward, and has an open upper face. The operator draws the box member 40a forward, disposes a reagent container 702 which contains a hemolytic agent as a reagent used for preparing the measurement sample, into the box member 40a, from the front side, and inserts a tube of the measurement unit 10 into the reagent container 702.

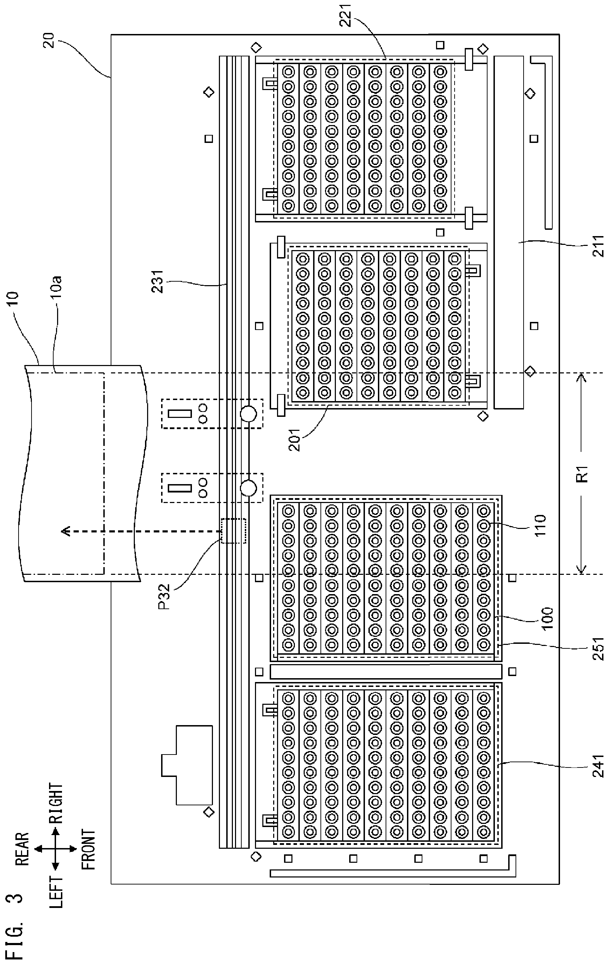

The operator sets the specimen container 110 containing the specimen, in the specimen rack 100, and places the specimen rack 100 in a placement region 201, 221 (see FIG. 3) of the transport unit 20. Thus, the specimen rack 100 is transported by the transport unit 20, and the specimen container 110 is taken out from the specimen rack 100 at a start position P32 (see FIG. 3) in front of the measurement unit 10. The specimen container 110 taken out from the specimen rack 100 is returned to the specimen rack 100 at the start position P32 after the specimen in the specimen container 110 has been suctioned. When necessary analyses for all the specimen containers 110 in one specimen rack 100 have ended, the specimen rack 100 is transported to a collection region 241, 251 (see FIG. 3) of the transport unit 20. The operator takes out the specimen rack 100 transported to the collection region 241, 251.

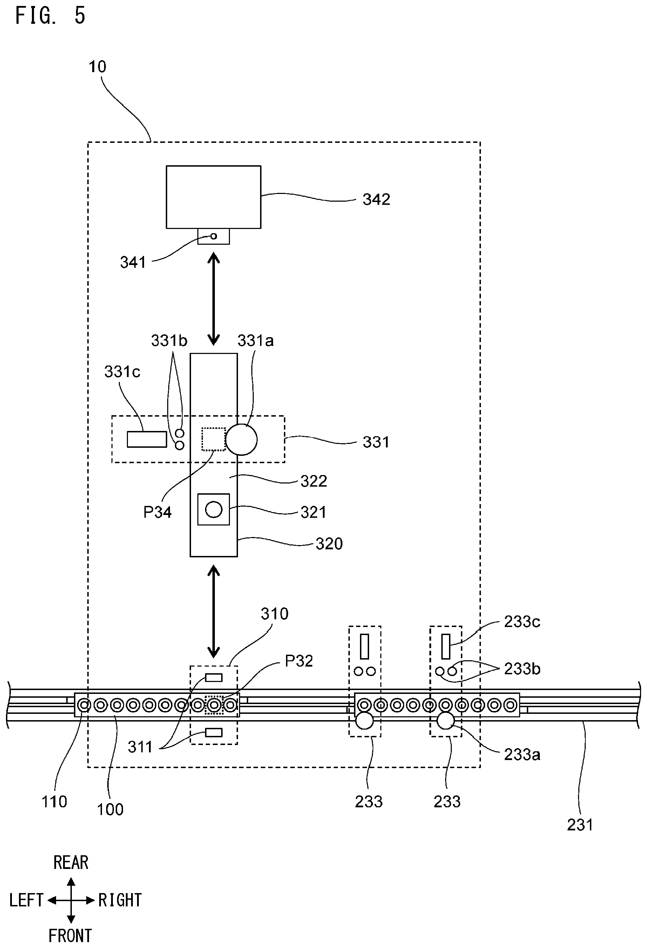

The specimen analyzer 1 can also analyze a specimen without using the transport unit 20. The measurement unit 10 has, at a front lower portion on the left side, a container holding portion 10c that can be drawn forward. The container holding portion 10c has a forward-rearward transfer portion 320 (see FIG. 5) described below, and a holding portion 321 (see FIG. 5) is exposed at the front surface of the measurement unit 10 when the container holding portion 10c has been drawn forward. The operator draws the container holding portion 10c forward, disposes the specimen container 110 at the holding portion 321 from the front side, and causes the measurement unit 10 to start the measurement.

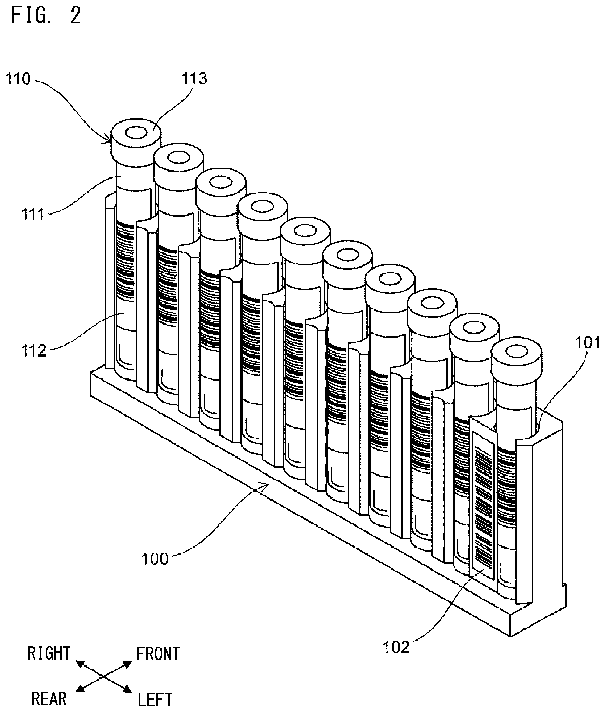

FIG. 2 is a perspective view of configurations of the specimen rack 100 and the specimen container 110.

The specimen rack 100 has ten holes 101 in which the specimen containers 110 can be held, and a bar code label 102. The bar code label 102 is adhered to the rear side surface of the specimen rack 100. On the bar code label 102, a bar code representing a rack ID is printed as identification information that allows the specimen rack 100 to be individually identified.

The specimen container 110 includes a trunk portion 111, a bar code label 112, and a lid 113. The trunk portion 111 forms a tubular container having an open upper end, and stores a specimen thereinside. The bar code label 112 is adhered to the side surface of the trunk portion 111. On the bar code label 112, a bar code representing a specimen ID is printed as identification information that allows the specimen stored therein to be individually identified. The lid 113 is disposed at the upper end of the trunk portion 111 so as to seal the inside of the trunk portion 111. The lid 113 is structured so as to allow a piercer 341 (see FIG. 5) in the measurement unit 10 to penetrate through the lid 113 in the up-down direction.

FIG. 3 is a plan view schematically showing the number of the specimen racks 100 that can be stored in the transport unit 20, and positions at which the measurement unit 10, the placement regions 201, 221, and the collection regions 241, 251 are disposed.

The transport unit 20 includes the placement regions 201, 221 in which the specimen racks 100 are placed by the operator, and the collection regions 241, 251 in which the specimen racks 100 for which the analyses have ended are stored. The placement regions 201, 221 are each a region in which the specimen racks 100 exist when the maximum number of the specimen racks 100 have been placed. The collection regions 241, 251 are each a region in which the specimen racks 100 exist when the maximum number of the specimen racks 100 have been collected.

FIG. 3 shows a state where the maximum number of the specimen racks 100 are stored in each of the placement regions 201, 221 and the collection regions 241, 251. In this example, up to eight specimen racks 100 can be stored in each of the placement regions 201, 221, and up to ten specimen racks 100 can be stored in each of the collection regions 241, 251. Therefore, the operator is allowed to place up to 16 specimen racks 100 (160 specimen containers 110) in total in the placement regions 201, 221 at one time, and take out up to 20 specimen racks 100 (200 specimen containers 110) in total from the collection regions 241, 251 at one time.

When the operator places the specimen rack 100 in the placement region 201, 221 in a state where the collection regions 241, 251 are empty, the transport unit 20 starts transporting the specimen rack 100, the measurement unit 10 measures the specimen, and the control unit 30 analyzes the specimen. In a case where 16 specimen racks 100, that is, the maximum number of the specimen racks 100, are placed in the placement regions 201, 221 at one time, when necessary analyses for all the specimen racks 100 have ended, the 16 specimen racks 100 in total are collected in the collection regions 241, 251.

The total number of the specimen racks 100 that can be stored in all the collection regions 241, 251 is larger, by four, than the total number of the specimen racks 100 that can be stored in all the placement regions 201, 221. Therefore, the operator is allowed to further place four specimen racks 100 in the placement region 201, 221 after the start of the process. In this case, when necessary processes for all the specimen racks 100 have ended, the 20 specimen racks 100 in total are collected in the collection region 241, 251.

Thus, a lot of the specimen racks 100 can be stored in the placement regions 201, 221 and the collection regions 241, 251 of the transport unit 20. Therefore, the frequency at which the operator places the specimen racks 100 in the placement regions 201, 221, and the frequency at which the operator takes out the specimen racks 100 from the collection regions 241, 251 can be reduced.

The upper portion of the measurement unit 10 protrudes forward of a transport path 231 of the transport unit 20 as indicated by broken lines in FIG. 5, whereas a bottom surface 10a of the measurement unit 10 is disposed at the rack 40 (see FIG. 1) in the rear of the transport path 231 as indicated by an alternate long and short dash line in FIG. 3.

Apart of the placement region 201 and a part of the collection region 251 are disposed in front of the measurement unit 10. The "disposed in front of the measurement unit 10" means "disposed in a range R1 of a left-right width of the bottom surface 10a of the measurement unit 10 in front of the measurement unit 10". That is, the placement region 201 and the collection region 251 are disposed so as to overlap the range R1 in the left-right direction. Thus, the width, in the left-right direction, of the specimen analyzer 1 can be reduced, so that the size of the specimen analyzer 1 can be reduced.

The entirety of the placement region 201 instead of a part of the placement region 201 may be disposed in front of the measurement unit 10. In this case, a part of the placement region 221 may be disposed in front of the measurement unit 10, or the entirety of the placement region 221 may be disposed in front of the measurement unit 10. Similarly, the entirety of the collection region 251 instead of a part of the collection region 251 may be disposed in front of the measurement unit 10. In this case, a part of the collection region 241 may be disposed in front of the measurement unit 10, or the entirety of the collection region 241 may be disposed in front of the measurement unit 10.

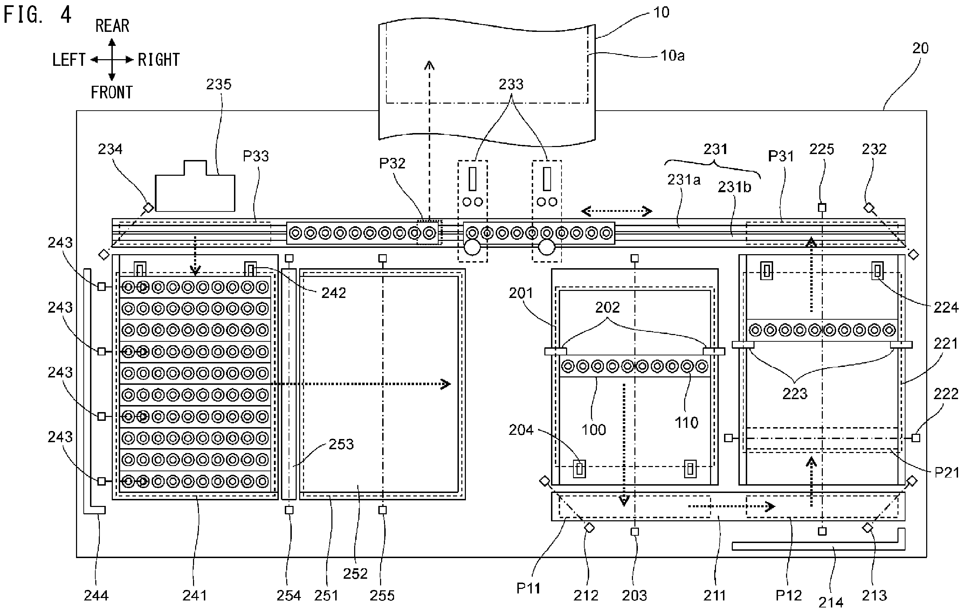

FIG. 4 is a plan view schematically showing a configuration of the transport unit 20.

The transport unit 20 includes the placement region 201, a transport mechanism 202, a sensor 203, a stopper 204, a transport path 211, sensors 212, 213, a transport mechanism 214, the placement region 221, a sensor 222, a transport mechanism 223, a stopper 224, a sensor 225, a transport path 231, a sensor 232, two reading units 233, a sensor 234, a transport mechanism 235, the collection region 241, a stopper 242, four sensors 243, a transport mechanism 244, the collection region 251, a transport path 252, a shutter 253, and sensors 254, 255.

The placement region 201 is formed of a plate member having an upper surface parallel to the horizontal plane. The transport mechanism 202 includes a pair of members for pushing a side surface, on the rear side, of the specimen rack 100 and a motor for driving the pair of members, and pushes out the specimen rack 100 placed in the placement region 201 in the forward direction to transport the specimen rack 100 to a position P1 1 in the transport path 211. The sensor 203 is a transmission-type photoelectric sensor, and detects the specimen rack 100 positioned at the placement region 201 and the position P11. The stopper 204 includes a pair of members that move upward and downward relative to the upper surface of the placement region 201 and a motor for driving the pair of members, and prevents the specimen rack 100 disposed vertically above the stopper 204 and the specimen rack 100 disposed in the rear of the stopper 204 from moving forward.

The transport path 211 extends in the left-right direction, and is disposed in front of the placement regions 201, 221. The transport path 211 includes a conveyor belt that moves in the left-right direction and a motor for driving the conveyor belt, transports rightward the specimen rack 100 positioned at the position P11 at the left end of the transport path 211, and positions the specimen rack 100 at a position P12 at the right end of the transport path 211. The sensor 212 is a transmission-type photoelectric sensor, and detects the specimen rack 100 positioned at the position P11. The sensor 213 is a transmission-type photoelectric sensor, and detects the specimen rack 100 positioned at the position P12. The transport mechanism 214 includes a member for pushing the side surface, on the front side, of the specimen rack 100 and a motor for driving the member, and pushes out the specimen rack 100 positioned at the position P12 in the rearward direction, to transport the specimen rack 100 to a position P21 in the placement region 221.

The placement region 221 is disposed rightward of the placement region 201. The placement region 221 is formed of a plate member having an upper surface parallel to the horizontal plane. The sensor 222 is a transmission-type photoelectric sensor, and detects the specimen rack 100 positioned at the position P21 in the placement region 221. The transport mechanism 223 includes a pair of members for pushing the side surface, on the front side, of the specimen rack 100 and a motor for driving the pair of members, and pushes out the specimen rack 100 placed in the placement region 221 in the rearward direction, to transport the specimen rack 100 to a position P31 at the right end of the transport path 231. The stopper 224 includes a pair of members that move upward and downward relative to the upper surface of the placement region 221 and a motor for driving the pair of members, and prevents the specimen rack 100 disposed vertically above the stopper 224 and the specimen rack 100 disposed in front of the stopper 224 from moving rearward. The sensor 225 is a transmission-type photoelectric sensor, and detects the specimen rack 100 positioned in the placement region 221, at the position P12 in the transport path 211, and at the position P31 in the transport path 231.

The transport path 231 is disposed in front of the measurement unit 10 and in the rear of the placement regions 201, 221 and the collection regions 241, 251. The transport path 231 includes two conveyor belts 231a, 231b that independently move in the left-right direction, and two motors for driving the two conveyor belts 231a, 231b, respectively, and transports the specimen rack 100 on the transport path 231 in the left-right direction. The sensor 232 is a transmission-type photoelectric sensor, and detects the specimen rack 100 positioned at the position P31 at the right end of the transport path 231. The reading unit 233 reads a rack ID and a specimen ID from the specimen rack 100 and the specimen container 110 on the transport path 231.

The start position P32 at which the measurement unit 10 starts the measurement is on the transport path 231. When the specimen container 110 is positioned at the start position P32, the measurement unit 10 takes out the specimen container 110 from the specimen rack 100, moves the taken-out specimen container 110 into the measurement unit 10, suctions the specimen in the specimen container 110, mixes the suctioned specimen with a reagent to prepare a measurement sample, and obtains measurement data from the measurement sample. Thereafter, the control unit 30 analyzes the specimen based on the measurement data. When the specimen in the specimen container 110 taken by the measurement unit 10 has been suctioned, the measurement unit 10 returns the specimen container 110 into the hole 101 in which the specimen container 110 has been previously disposed in the specimen rack 100. When necessary analyses for all the specimen containers 110 held in the specimen rack 100 have ended, the specimen rack 100 is transported to a position P33 at the left end of the transport path 231.

The sensor 234 is a transmission-type photoelectric sensor, and detects the specimen rack 100 positioned at the position P33. The transport mechanism 235 includes a member for pushing the side surface, on the rear side, of the specimen rack 100 and a motor for driving the member, and pushes out the specimen rack 100 positioned at the position P33 in the forward direction, to transport the specimen rack 100 to a position in front of the stopper 242 in the collection region 241.

The collection region 241 is formed of a plate member having an upper surface parallel to the horizontal plane. The stopper 242 includes a pair of members that move upward and downward relative to the upper surface of the collection region 241 and a motor for driving the members, and prevents the specimen rack 100 positioned in front of the stopper 242 from moving rearward. The four sensors 243 are reflection-type photoelectric sensors, and detect the first, the fourth, the seventh, and the tenth specimen racks 100 from the front side, among the ten specimen racks 100 collected in the collection region 241. The transport mechanism 244 includes a member for pushing the left side surfaces of up to ten specimen racks 100 in the collection region 241 and a motor for driving the member, and collectively transports the up to ten specimen racks 100 in the collection region 241 toward the collection region 251.

The collection region 251 is formed of an upper surface of the transport path 252 which moves in the left-right direction. The transport path 252 is formed of a conveyor belt and a motor for driving the conveyor belt. The collection region 251 is disposed rightward of the collection region 241. The transport path 252 transports rightward the up to ten specimen racks 100 pushed out from the collection region 241, and positions the specimen racks 100 in the collection region 251.

The shutter 253 extends from the front end to the rear end of the collection region 251, and is disposed between the collection region 241 and the collection region 251. The shutter 253 includes a member that moves upward and downward relative to the upper surfaces of the collection regions 241, 251 and a motor for driving the member, prevents the specimen rack 100 in the collection region 241 from moving to the collection region 251, and prevents the specimen rack 100 in the collection region 251 from moving to the collection region 241. The sensor 254 is a transmission-type photoelectric sensor, and detects the specimen rack 100 passing on the shutter 253 when the shutter 253 has been moved downward. The sensor 255 is a transmission-type photoelectric sensor, and detects the specimen rack 100 in the collection region 251.

FIG. 5 is a plan view schematically showing an internal configuration of the measurement unit 10. In FIG. 5, the transport path 231 of the transport unit 20 is also illustrated for convenience sake.

The measurement unit 10 includes a stirring mechanism 310, the forward-rearward transfer portion 320, a reading unit 331, the piercer 341, and a piercer driving unit 342.

The stirring mechanism 310 includes a pair of holding portions 311 that hold the specimen container 110 in the front-rear direction. The stirring mechanism 310 takes out the specimen container 110 positioned at the start position P32 from the specimen rack 100 in a state where the specimen container 110 is held by the pair of holding portions 311, and rotates and inclines the specimen container 110 to stir the specimen in the specimen container 110.

The forward-rearward transfer portion 320 includes a holding portion 321 that can vertically hold the specimen container 110, a plate member 322 that extends in the front-rear direction and supports the holding portion 321, and a mechanism for moving the plate member 322 in the front-rear direction. When stirring by the stirring mechanism 310 has ended, the plate member 322 is transferred forward such that the holding portion 321 and the start position P32 overlap each other in a planar view. In this state, the stirring mechanism 310 moves the pair of holding portions 311 downward, and sets the held specimen container 110 in the holding portion 321 from the upper side. Thereafter, the forward-rearward transfer portion 320 transfers the plate member 322 rearward, and positions the specimen container 110 in the holding portion 321 at a reading position P34 of the reading unit 331.

The reading unit 331 includes rollers 331a, 331b and a bar code reader 331c. When the specimen container 110 is positioned at the reading position P34, the specimen container 110 is rotated by the roller 331a in a state where the specimen container 110 is held by the rollers 331a, 331b, and the bar code reader 331c reads a specimen ID from the specimen container 110. Each of the two reading units 233 disposed in the transport path 231 also includes rollers 233a, 233b and a bar code reader 233c, and has the same configuration as the reading unit 331.

The piercer 341 is a suction tube that extends in the up-down direction and has high stiffness. When the specimen container 110 is positioned vertically below the piercer 341, the piercer driving unit 342 moves the piercer 341 downward such that the lower end of the piercer 341 penetrates through the lid 113 of the specimen container 110. The specimen in the specimen container 110 is suctioned through the piercer 341.

When the specimen has been suctioned from the specimen container 110, the forward-rearward transfer portion 320 transfers the plate member 322 forward, and the specimen container 110 in the holding portion 321 is positioned so as to overlap the start position P32 in a planar view. The stirring mechanism 310 holds the specimen container 110 positioned at the start position P32 and lifts the specimen container 110 upward, and returns the held specimen container 110 into the hole 101 in which the specimen container 110 has been previously disposed, after the plate member 322 has been transferred rearward.

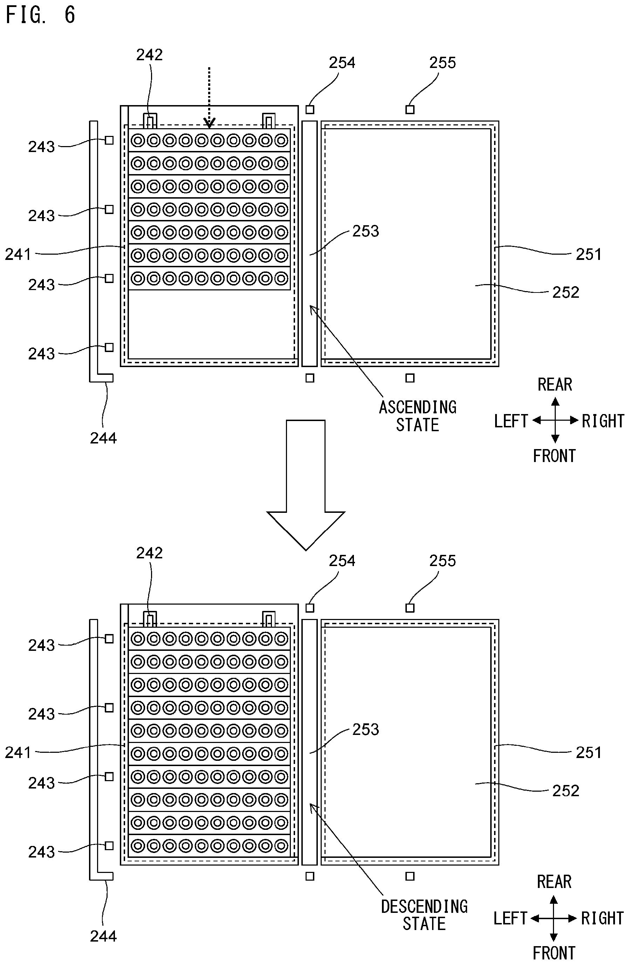

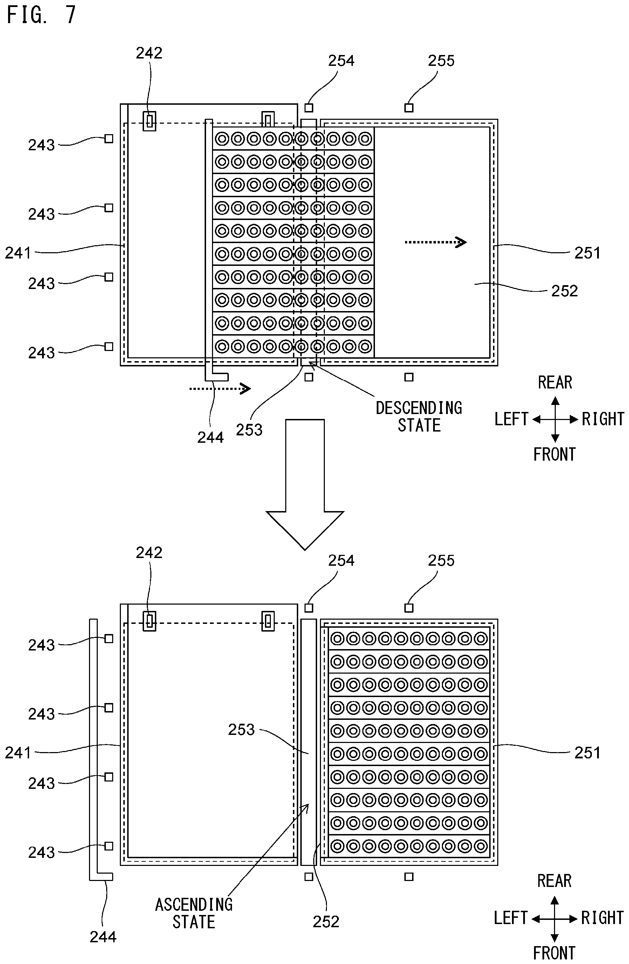

Next, a procedure of transporting the specimen rack 100 in the collection region 241 to the collection region 251 will be described with reference to FIGS. 6 and 7.

As illustrated at the upper side portion of FIG. 6, when the specimen rack 100 has been transported from the position P33 (see FIG. 4) at the left end of the transport path 231 to a position at the rear end of the collection region 241, the specimen racks 100 are pushed out sequentially from the rear side of the collection region 241 and moved forward. Thus, as illustrated at the lower side portion of FIG. 6, the specimen rack 100 is transported to a position at the front end of the collection region 241, and the up to ten specimen racks 100 are stored in the collection region 241.

As illustrated at the upper side portion of FIG. 7, when the ten specimen racks 100 have been stored in the collection region 241, the shutter 253 is moved downward, and the transport mechanism 244 is moved rightward to a position near the center position, in the left-right direction, of the collection region 241. Thus, the ten specimen racks 100 are transported rightward toward the collection region 251, and are positioned near the mid-position between the collection regions 241 and 251. Thereafter, the transport path 252 is driven. Thus, the specimen racks 100 having been transported to the position near the mid-position between the collection regions 241 and 251 are further transported rightward, and, as illustrated at the lower side portion of FIG. 7, the ten specimen racks 100 are collected into the collection region 251. The shutter 253 is moved upward.

Thereafter, as illustrated in FIG. 6, up to ten specimen racks 100 are further transported from the transport path 231 to the collection region 241.

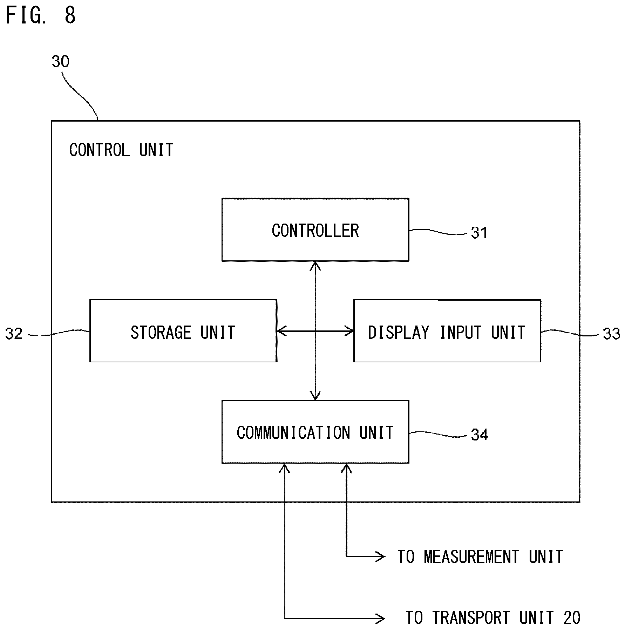

FIG. 8 is a block diagram illustrating a functional configuration of the control unit 30.

The control unit 30 includes a controller 31, a storage unit 32, a display input unit 33, and a communication unit 34.

The controller 31 is, for example, implemented by a CPU. The controller 31 executes a computer program stored in the storage unit 32 to control each of components of the control unit 30, the measurement unit 10, and the transport unit 20. The storage unit 32 is, for example, implemented by an SSD, an HDD, a ROM, a RAM, etc. The display input unit 33 is, for example, implemented by a touch panel type display. The display input unit 33 may be divided into a display unit such as a liquid crystal display or an organic EL display, and an input unit such as a mouse and a keyboard. The communication unit 34 is, for example, implemented by a USB interface, and is connected to the measurement unit 10 and the transport unit 20 so as to be able to communicate therewith.

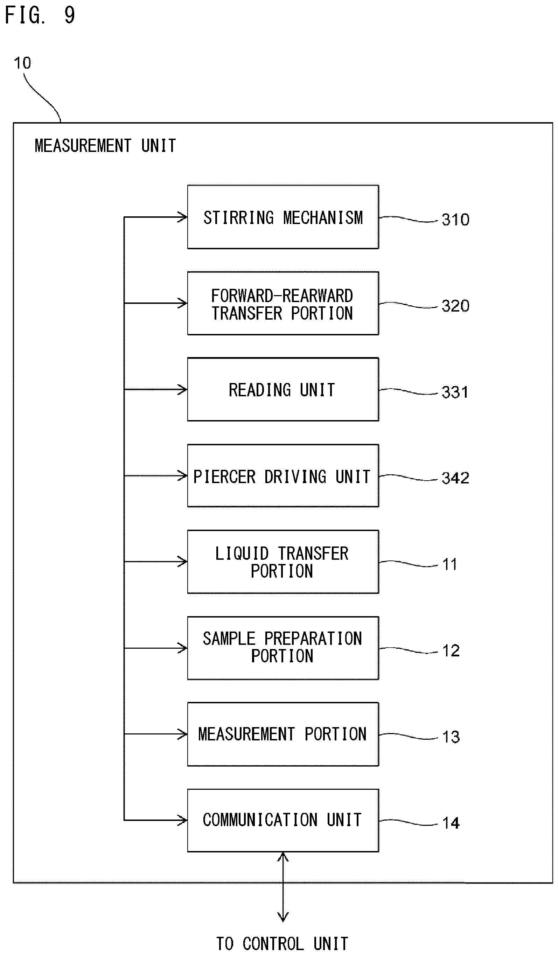

FIG. 9 is a block diagram illustrating a functional configuration of the measurement unit 10.

The measurement unit 10 includes the stirring mechanism 310, the forward-rearward transfer portion 320, the reading unit 331, the piercer driving unit 342, a liquid transfer portion 11, a sample preparation portion 12, a measurement portion 13, and a communication unit 14.

The liquid transfer portion 11 includes a pump, a valve, and the like for applying pressure to a flow path and transferring a liquid in the flow path in the measurement unit 10. The liquid transfer portion 11 suctions a specimen through the piercer 341 (see FIG. 5) inserted in the specimen container 110, and transfers the suctioned specimen to the sample preparation portion 12. The sample preparation portion 12 includes a chamber in which the specimen and a reagent are mixed. The liquid transfer portion 11 transfers, to the measurement portion 13, a measurement sample obtained by mixing the specimen and the reagent in the sample preparation portion 12.

The measurement portion 13 includes an electric-resistance-type detector, a hemoglobin detector, and an optical detector. The electric-resistance-type detector measures blood cells by a sheath flow DC detection method. The hemoglobin detector measures hemoglobin by an SLS-hemoglobin method. The optical detector measures blood cells by flow cytometry. The measurement portion 13 measures the measurement sample and obtains measurement data. The communication unit 14 is, for example, implemented by a USB interface, and is connected to the control unit 30 so as to be able to communicate therewith. The measurement data obtained by the measurement portion 13 is transmitted through the communication unit 14 to the control unit 30. As the measurement unit 10, for example, the device disclosed in US Patent No. 9,448,247 can be used, and the content of US Patent No. 9,448,247 is hereby incorporated by reference.

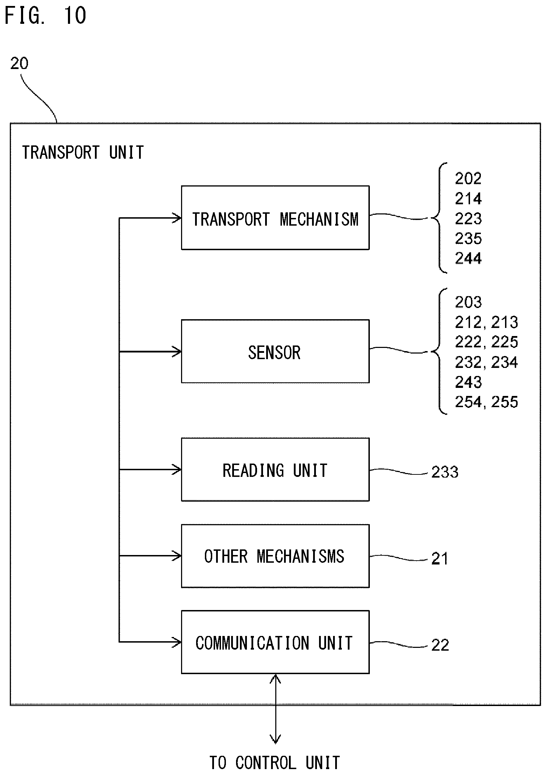

FIG. 10 is a block diagram illustrating a functional configuration of the transport unit 20.

The transport unit 20 includes the transport mechanisms 202, 214, 223, 235, 244, the sensors 203, 212, 213, 222, 225, 232, 234, 243, 254, 255, the reading units 233, other mechanisms 21, and a communication unit 22.

The other mechanisms 21 include the transport paths 211, 231, 252, the stoppers 204, 224, 242, and the shutter 253. The communication unit 22 is, for example, implemented by a USB interface, and is connected to the control unit 30 so as to be able to communicate therewith.

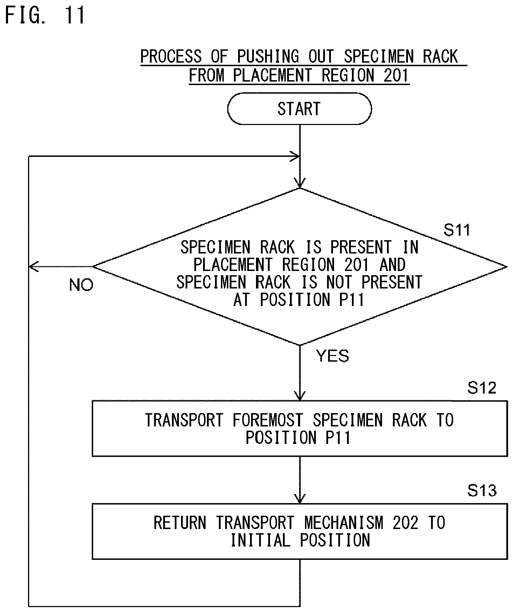

Next, control of the transport unit 20 will be described with reference to flow charts of FIGS. 11 to 17.

The controller 31 of the control unit 30 controls each of components of the transport unit 20, whereby the following process is performed. The controls of the components of the transport unit 20, that is, the processes shown in the flow charts of FIGS. 11 to 17 are performed in parallel. In a case where the transport unit 20 includes a controller, the controller of the transport unit 20 may operate to perform the following process, or the controller 31 of the control unit 30 and the controller of the transport unit 20 may operate so as to share the following process.

FIG. 11 is a flow chart showing a process of pushing out the specimen rack 100 from the placement region 201 to the transport path 211.

In step S11, the controller 31 advances the process to step S12 when the controller 31 determines that the specimen rack 100 is present in the placement region 201 and the specimen rack 100 is not present at the position P11 at the left end of the transport path 211, based on detection signals from the sensors 203, 212. Specifically, in a case where the detection result from the sensor 203 is ON, and the detection result from the sensor 212 is OFF, the determination result in step S11 represents YES.

In step S12, the controller 31 controls the transport mechanism 202 so as to transport the foremost specimen rack 100 in the placement region 201 to the position P11. In a case where a plurality of the specimen racks 100 are stored in the placement region 201, the transport mechanism 202 pushes out the rearmost specimen rack 100 in the forward direction, whereby the foremost specimen rack 100 is transported forward. Thereafter, in step S13, the controller 31 operates to return the transport mechanism 202 to an initial position. In this case, the initial position is the rear end of the placement region 201. After step S13 has been performed, and when the determination result in step S11 represents NO, the controller 31 returns the process to step S11.

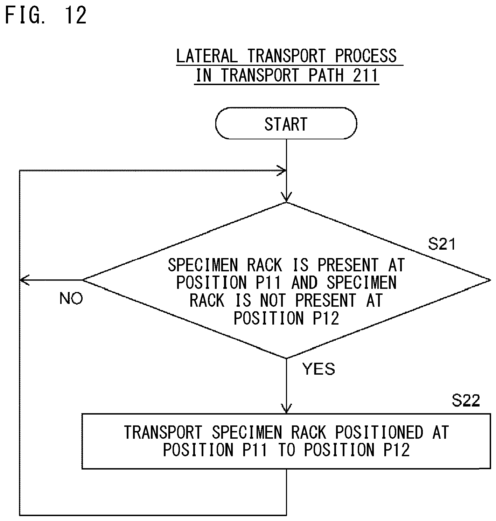

FIG. 12 is a flow chart showing a process of transporting the specimen rack 100 in the lateral direction in the transport path 211.

In step S21, the controller 31 advances the process to step S22 when the controller 31 determines that the specimen rack 100 is present at the position P 11 at the left end of the transport path 211, and the specimen rack 100 is not present at the position P12 at the right end of the transport path 211, based on detection signals from the sensors 212, 213. Specifically, in a case where the detection result from the sensor 212 is ON and the detection result from the sensor 213 is OFF, the determination result in step S21 represents YES. In step S22, the controller 31 controls the transport path 211 so as to transport the specimen rack 100 positioned at the position P11 to the position P12. After step S22 has been performed and when the determination result in step S21 represents NO, the controller 31 returns the process to step S21.

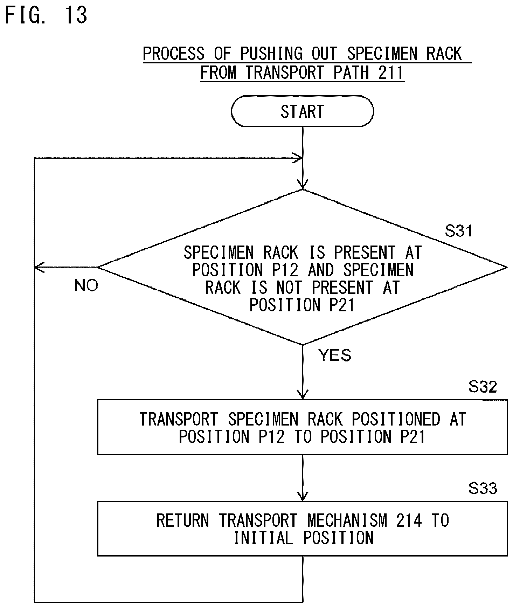

FIG. 13 is a flow chart showing a process of pushing out the specimen rack 100 from the transport path 211 to the placement region 221.

In step S31, the controller 31 advances the process to step S32 when the controller 31 determines that the specimen rack 100 is present at the position P12 at the right end of the transport path 211, and the specimen rack 100 is not present at the position P21 in the placement region 221, based on detection signals from the sensors 213, 222. Specifically, in a case where the detection result from the sensor 213 is ON and the detection result from the sensor 222 is OFF, the determination result in step S31 represents YES.

In step S32, the controller 31 controls the transport mechanism 214 so as to transport the specimen rack 100 positioned at the position P12 to the position P21. Thereafter, in step S33, the controller 31 operates to return the transport mechanism 214 to an initial position. In this case, the initial position is a position in front of the position P12. After step S33 has been performed and when the determination result in step S31 represents NO, the controller 31 returns the process to step S31.

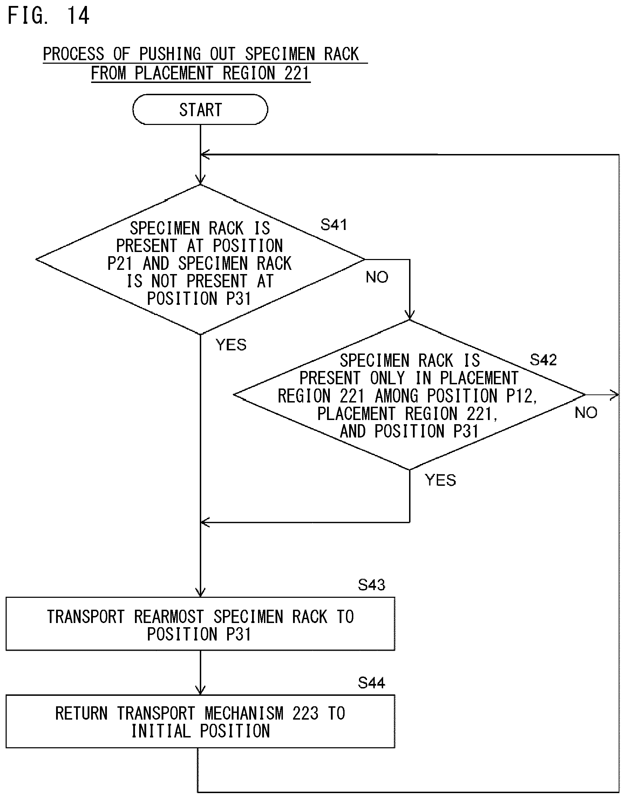

FIG. 14 is a flow chart showing a process of pushing out the specimen rack 100 from the placement region 221 to the transport path 231.

In step S41, the controller 31 advances the process to step S43 when the controller 31 determines that the specimen rack 100 is present at the position P21 in the placement region 221 and the specimen rack 100 is not present at the position P31 at the right end of the transport path 231, based on detection signals from the sensors 222, 232. Specifically, in a case where the detection result from the sensor 222 is ON and the detection result from the sensor 232 is OFF, the determination result in step S41 represents YES. In a case where the determination result in step S41 represents NO, the process is advanced to step S42.

In step S42, the controller 31 advances the process to step S43 when the controller 31 determines that the specimen rack 100 is present only in the placement region 221 among the position P12 at the right end of the transport path 211, the placement region 221, and the position P31 at the right end of the transport path 231, based on detection signals from the sensors 213, 225, 232. Specifically, in a case where the detection result from the sensor 213 is OFF, the detection result from the sensor 225 is ON, and the detection result from the sensor 232 is OFF, the determination result in step S42 represents YES.

When the determination result in either step S41 or step S42 represents YES, the controller 31 controls the transport mechanism 223 so as to transport the rearmost specimen rack 100 in the placement region 221 to the position P31 in step S43. In a case where a plurality of the specimen racks 100 are stored in the placement region 221, the transport mechanism 223 pushes out the foremost specimen rack 100 in the rearward direction, whereby the rearmost specimen rack 100 is transported rearward. Thereafter, in step S44, the controller 31 operates to return the transport mechanism 223 to an initial position. In this case, the initial position is the front end of the placement region 221. After step S44 has been performed and when the determination result in step S42 represents NO, the controller 31 returns the process to step S41.

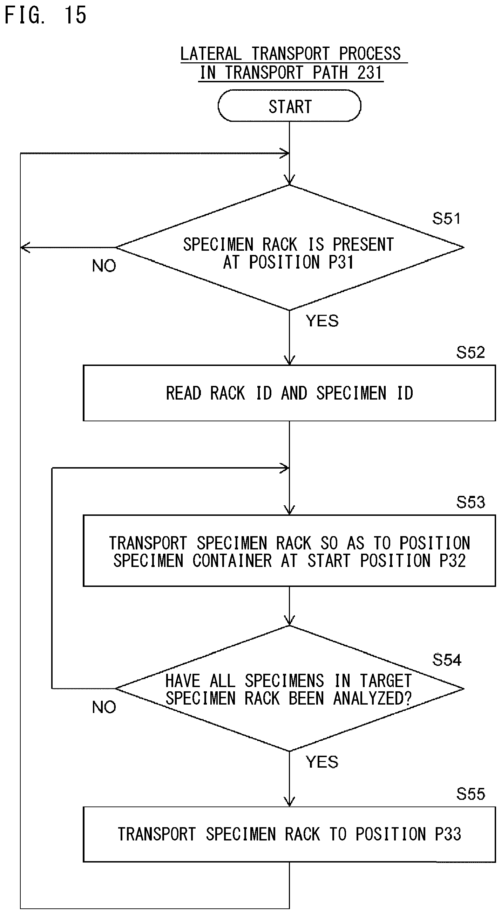

FIG. 15 is a flow chart showing a process of transporting the specimen rack 100 in the lateral direction in the transport path 231.

In step S51, the controller 31 advances the process to step S52 when the controller 31 determines that the specimen rack 100 is present at the position P31 at the right end of the transport path 231, based on a detection signal from the sensor 232. Specifically, in a case where the detection result from the sensor 232 is ON, the determination result in step S51 represents YES. In step S52, the controller 31 controls the transport path 231 so as to transport the specimen rack 100 positioned at the position P31 to a position of the reading unit 233, and causes the reading unit 233 to read the rack ID and the specimen ID from the specimen rack 100 and the specimen container 110.

In step S53, the controller 31 controls the transport path 231 such that the specimen rack 100 is transported so as to position the specimen container 110 at the start position P32. The measurement unit 10 measures the specimen in the specimen container 110 positioned at the start position P32, and the controller 31 of the control unit 30 analyzes the specimen based on the measurement data obtained by the measurement. In step S54, the controller 31 determines whether or not all the specimens in the target specimen rack 100 have been analyzed. In a case where all the specimens have not been analyzed, the process is returned to step S53, and the measurement and analysis are sequentially performed for the specimen containers 110 held by the target specimen rack 100.

When all the specimens in the target specimen rack 100 have been analyzed, the controller 31 controls the transport path 231 so as to position the target specimen rack 100 at the position P33 at the left end of the transport path 231, in step S55. After step S55 has been performed and when the determination result in step S51 represents NO, the controller 31 returns the process to step S51.

The conveyor belts 231a, 231b of the transport path 231 can independently move in the left-right direction, and the process in FIG. 15 is thus performed for each conveyor belt in parallel.

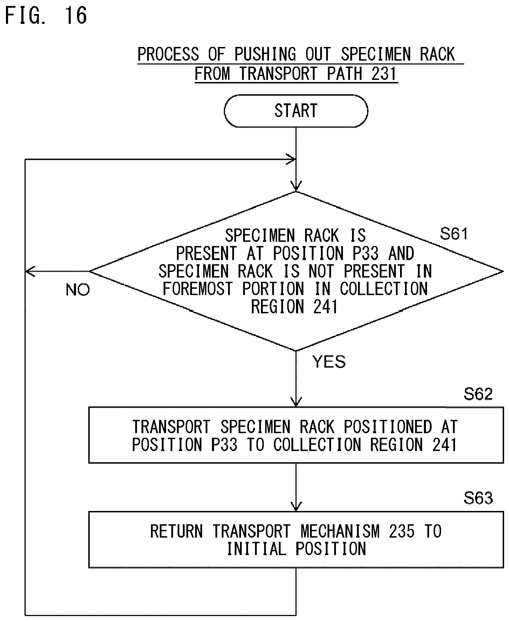

FIG. 16 is a flow chart showing a process of pushing out the specimen rack 100 from the transport path 231 to the collection region 241.

In step S61, the controller 31 advances the process to step S62 when the controller 31 determines that the specimen rack 100 is present at the position P33 at the left end of the transport path 231 and the specimen rack 100 is not present at the foremost position of the collection region 241, based on detection signals from the sensor 234 and the foremost sensor 243. Specifically, in a case where the detection result from the sensor 234 is ON, and the detection result from the foremost sensor 243 is OFF, the determination result in step S61 represents YES.

In step S62, the controller 31 controls the transport mechanism 235 so as to transport the specimen rack 100 positioned at the position P33 to the rear end of the collection region 241. Thereafter, in step S63, the controller 31 operates to return the transport mechanism 235 to an initial position. In this case, the initial position is a position in the rear of the position P33. After step S63 has been performed and when the determination result in step S61 represents NO, the controller 31 returns the process to step S61.

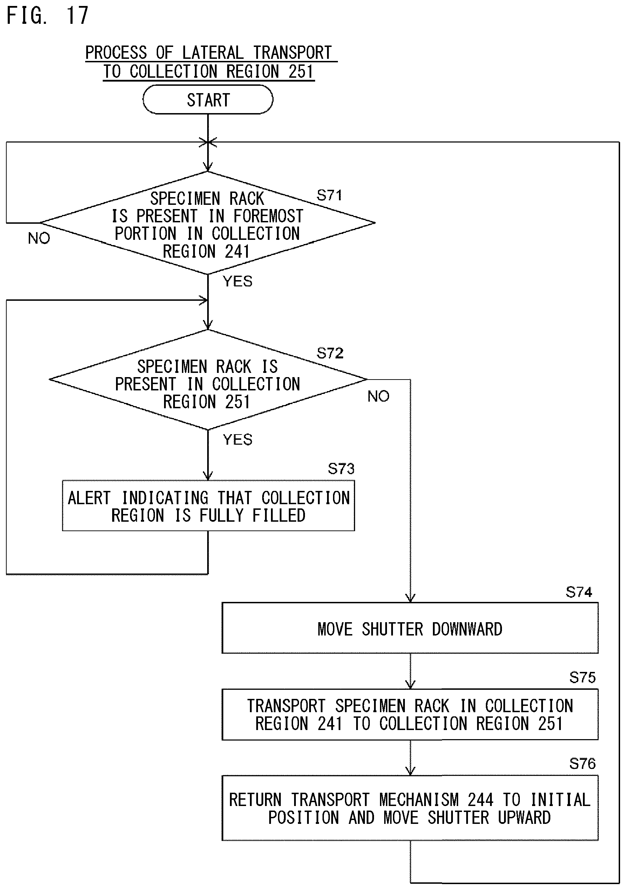

FIG. 17 is a flow chart showing a process of transporting the specimen rack 100 from the collection region 241 to the collection region 251 in the lateral direction.

In step S71, the controller 31 advances the process to step S72 when the controller 31 determines that the specimen rack 100 is present at the foremost position of the collection region 241 based on a detection signal from the foremost sensor 243. Specifically, when the detection result from the foremost sensor 243 is ON, the determination result in step S71 represents YES. In a case where the specimen rack 100 is present at the foremost position of the collection region 241, ten specimen racks 100, that is, the maximum number of the specimen racks 100 that can be stored, are stored in the collection region 241.

In step S72, the controller 31 advances the process to step S73 when the controller 31 determines that the specimen racks 100 are present in the collection region 251 based on a detection signal from the sensor 255. Specifically, in a case where the detection signal from the sensor 255 is ON, the determination result in step S72 represents YES. In a case where the determination result in step S72 represents No, the process is advanced to step S74.

In a case where the specimen racks 100 are present in the collection region 251, the specimen racks 100 in the collection region 241 cannot be transported to the collection region 251. Therefore, in step S73, the controller 31 operates to output an alert indicating that the collection regions 241, 251 are fully filled, to the display input unit 33 (see FIG. 8). Thereafter, the process is returned to step S72.

The controller 31 may cause a speaker disposed in the specimen analyzer 1 to output an alert sound, or may operate to transmit alert information to a device other than the specimen analyzer 1, instead of displaying the alert on the display input unit 33.

When the specimen racks 100 are not present in the collection region 251, the controller 31 causes the shutter 253 to move downward in step S74. In step S75, the controller 31 controls the transport mechanism 244 and the transport path 252 so as to transport rightward the specimen racks 100 in the collection region 241, and position the specimen racks 100 in the collection region 251. In step S76, the controller 31 operates to return the transport mechanism 244 to an initial position, and move the shutter 253 upward. The initial position of the transport mechanism 244 is a position leftward of the collection region 241. After step S76 has been performed and when the determination result in step S71 represents NO, the controller 31 returns the process to step S71.

### <Effect of specimen analyzer according to Embodiment 1>

As shown in FIG. 3, the transport unit 20 includes the placement region 201 (first placement region) which is disposed in front of the measurement unit 10 and in which a plurality of the specimen racks 100 can be placed, and the placement region 221 (second placement region) which is disposed in the left-right direction relative to the placement region 201 and in which a plurality of the specimen racks 100 can be placed. The transport unit 20 transports the specimen racks 100 placed in the placement regions 201, 221 to the start position P32 at which the measurement unit 10 starts the measurement.

In this configuration, since the transport unit 20 includes the placement region 201 and the placement region 221, the operator is allowed to place the specimen racks 100 in both the placement regions 201, 221, and the frequency at which the operator places the specimen racks 100 can be reduced. Furthermore, since the placement region 201 is disposed in front of the measurement unit 10, the operator is allowed to place the specimen racks 100 and perform an operation on the measurement unit 10 at the same place, thereby enhancing workability. Examples of the operation on the measurement unit 10 include a manual measurement operation in which the operator draws the container holding portion 10c of the measurement unit 10, sets the specimen container 110 at the holding portion 321, and performs measurement of the specimen without using the transport unit 20, replacement of the reagent containers 701, 702, and addressing of malfunction occurring in the measurement unit 10.

As shown in FIG. 3, the transport unit 20 has the transport path 231 including the start position P32, and the transport path 231 extends in the left-right direction between the measurement unit 10 and the placement region 201 (first placement region).

In this configuration, since the transport path 231 is disposed in the rear of the placement regions 201, 221, the specimen racks 100 in the placement regions 201, 221 can be easily sent out to the transport path 231. Furthermore, the specimen racks 100 having been sent out to the transport path 231 can be sequentially transported smoothly to the start position P32.

As shown in FIG. 4, the transport mechanism 202, the transport path 211, the transport mechanism 214, and the transport mechanism 223 (transport portion) transport the specimen racks 100 placed in the placement region 201 (first placement region) and the placement region 221 (second placement region) to the position P31 (predetermined position) that is on the transport path 231 and distant from the start position P32.

In this configuration, even when the preceding specimen rack 100 is positioned at the start position P32 for the measurement, the specimen rack 100 that holds the specimen containers 110 containing the specimens which have not been measured and that is placed in the placement region 201, 221 can be sent out to the position P31 on the transport path 231 and can be caused to be in a stand-by state. Thus, the efficiency of transporting the specimen racks 100 can be enhanced, so that the analysis efficiency of the specimen analyzer 1 can be enhanced.

As shown in FIG. 4, the transport mechanism 202, the transport path 211, the transport mechanism 214, and the transport mechanism 223 (transport portion) transport the specimen racks 100 placed in the placement region 201 (first placement region) and the placement region 221 (second placement region) to a single position P31 (predetermined position).

In this configuration, the specimen racks 100 placed in the placement regions 201, 221 can be sent out sequentially from the specimen rack 100 placed in the placement region 221 to the position P31 on the transport path 231.

As shown in FIG. 4, the placement region 221 (second placement region) is connected to the position P31 (predetermined position) which is on the transport path 231 and distant from the start position P32. The placement region 201 (first placement region) and the placement region 221 (second placement region) are connected to each other at the position P11 (transport start position) on the placement region 201 side and the position P12 (transport end position) on the placement region 221 side. The transport mechanism 223 (first transport portion) transports the specimen rack 100 in the placement region 221 to the position P31, and the transport path 211 (second transport portion) transports the specimen rack 100 from the position P11 to the position P12.

In this configuration, the specimen racks 100 placed in the placement regions 201, 221 can be sent out sequentially from the specimen rack 100 placed in the placement region 221 to the position P31 on the transport path 231. When a vacant space for the specimen rack 100 is generated in the placement region 221, the specimen rack 100 placed in the placement region 201 can be transported to the placement region 221.

As shown in FIG. 4, the transport mechanism 202 (third transport portion) transports the specimen rack 100 placed in the placement region 201 (first placement region) to the position P11 (transport start position).

In this configuration, in a case where a vacant space for the specimen rack 100 is generated in the placement region 221, the specimen rack 100 placed in the placement region 201 can be transported to the position P11. Therefore, the specimen rack 100 in the placement region 201 can be smoothly transported to the placement region 221.

As shown in FIG. 4, the transport mechanism 223 (first transport portion) and the transport mechanism 202 (third transport portion) transport the specimen racks 100 in the opposite directions, respectively.

In this configuration, for example, the placement region 201 and the placement region 221 are connected to each other at the foremost side. Thus, the specimen racks 100 in the placement regions 201, 221 can be sequentially transported to the position P31 on the transport path 231.

As shown in FIG. 4, the transport unit 20 includes the transport path 211 (second transport portion) that transports the specimen rack 100 placed in the placement region 201 (first placement region) to the placement region 221 (second placement region), and the specimen rack 100 placed in the placement region 201 is transported to the start position P32 through the transport path 211 and the placement region 221, and the specimen rack 100 placed in the placement region 221 is transported to the start position P32 without passing through the transport path 211 and the placement region 201.

In this configuration, the specimen rack 100 placed in the placement region 201 and the specimen rack 100 placed in the placement region 221 can be transported to the start position P32 through the same route, and control of transporting the specimen racks 100 can be simplified.

The controller 31 controls the transport mechanisms 202, 223 (first and second transport portions) so as to cause the transport mechanism 202 (first transport portion) to transport the specimen rack 100 when the sensor 203 (first detector) detects the specimen rack 100 (step S12 in FIG. 11), and cause the transport mechanism 223 (second transport portion) to transport the specimen rack 100 when the sensor 225 (second detector) detects the specimen rack 100 (step S43 in FIG. 14).

In this configuration, the operator is allowed to start transportation of the specimen rack 100 by placing the specimen rack 100 in the placement region 201, 221.

As shown in FIG. 3, the transport unit 20 includes the collection region 251 (first collection region) which is disposed in front of the measurement unit 10 and in which a plurality of the specimen racks 100 can be collected, and the collection region 241 (second collection region) which is disposed in the left-right direction relative to the collection region 251 and in which a plurality of the specimen racks 100 can be collected.

In this configuration, since the transport unit 20 includes the collection region 251 and the collection region 241, after the specimen racks 100 are collected into both the collection regions 251 and 241, the operator is allowed to take out the specimen racks 100, and the frequency at which the operator takes out the specimen racks 100 can be reduced. Since the collection region 251 is disposed in front of the measurement unit 10, the operator is allowed to take out the specimen racks 100 and perform the operation on the measurement unit 10 at the same place, thereby enhancing workability.

As shown in FIG. 3, the transport path 231 extends in the left-right direction between the measurement unit 10 and the collection region 251 (first collection region).

In this configuration, since the transport path 231 is disposed in the rear of the collection region 251, the specimen rack 100 positioned at the start position P32 can be easily sent out to the collection regions 241, 251. Furthermore, the specimen rack 100 having been sent out can be sequentially collected smoothly into the collection regions 241, 251.

The number (20 in total in the example shown in FIG. 3) of the specimen racks 100 that can be collected in the collection regions 241, 251 is larger than the number (16 in total in the example shown in FIG. 3) of the specimen racks 100 that can be placed in the placement regions 201, 221.

In this configuration, the frequency at which the operator takes out the specimen racks 100 collected in the collection regions 241, 251 can be reduced.

The number of the specimen racks 100 that can be placed in the placement regions 201, 221 and the number of the specimen racks 100 that can be collected in the collection regions 241, 251 may be equal to each other.

In this case, the specimen racks 100 placed in the placement regions 201, 221 can be collected into the collection regions 241, 251 without excess or deficiency. Thus, the size of the specimen analyzer 1 can be reduced.

As shown in FIG. 4, the transport mechanisms 235 and 244 and the transport path 252 (transport portion) transport the specimen rack 100 positioned at the position P33 (predetermined position) which is on the transport path 231 and distant from the start position P32 to the collection region 251 (first collection region) and the collection region 241 (second collection region).

In this configuration, even when the succeeding specimen rack 100 is positioned at the start position P32 for the measurement, the specimen rack 100 holding the specimen containers 110 for which the analyses have ended can be collected into the collection regions 241, 251 through the position P33 on the transport path 231. Thus, the efficiency of transporting the specimen racks 100 can be enhanced, so that the analysis efficiency of the specimen analyzer 1 can be enhanced.

As shown in FIG. 4, the collection region 241 (second collection region) is connected to the position P33 (predetermined position) which is on the transport path 231 and distant from the start position P32. The transport mechanism 235 (first transport portion) transports the specimen rack 100 positioned at the position P33 to the collection region 241. The transport mechanism 244 (second transport portion) transports the specimen rack 100 positioned in the collection region 241 toward the collection region 251 (first collection region).

In this configuration, the specimen rack 100 on the transport path 231 can be smoothly transported to the collection region 251.

As shown in FIG. 7, the transport path 252 (third transport portion) transports, into the collection region 251, the specimen racks 100 transported toward the collection region 251 (first collection region) by the transport mechanism 244 (second transport portion).

In this configuration, the specimen racks 100 transported toward the collection region 251 can be finally positioned in the collection region 251.

As shown in FIG. 7, the transport mechanism 244 (second transport portion) collectively transports a plurality of the specimen racks 100 in the collection region 241 (second collection region) toward the collection region 251 (first collection region). The transport path 252 (third transport portion) collectively transports, into the collection region 251, the plurality of the specimen racks 100 collectively transported by the transport mechanism 244.

In this configuration, the specimen racks 100 are collected into the collection region 251 in units of a plurality of the specimen racks 100, and, therefore, the operator is allowed to collectively take out the plurality of the specimen racks 100 with ease and efficiency.

As shown in FIG. 7, the shutter 253 sets whether or not the specimen rack 100 is to be transported between the collection region 251 (first collection region) and the collection region 241 (second collection region).

In this configuration, the specimen racks 100 collected into the collection regions 241, 251 can be prevented from being unintentionally moved in the left-right direction.

The specimen analyzer 1 is a blood cell counter for counting blood cells in a blood specimen.

The number of times the blood cell counting test is performed is very large among specimen tests. Therefore, the frequency at which the operator places the specimen racks 100 is particularly high. However, in the above-described configuration, the frequency at which the operator places the specimen racks 100 can be reduced. Therefore, the above-described configuration is particularly useful in the blood cell counting test.

### <Embodiment 2>

In Embodiment 1, the number of the measurement units 10 in the specimen analyzer 1 is one. However, in Embodiment 2, the number of the measurement units 10 in the specimen analyzer 1 is two.

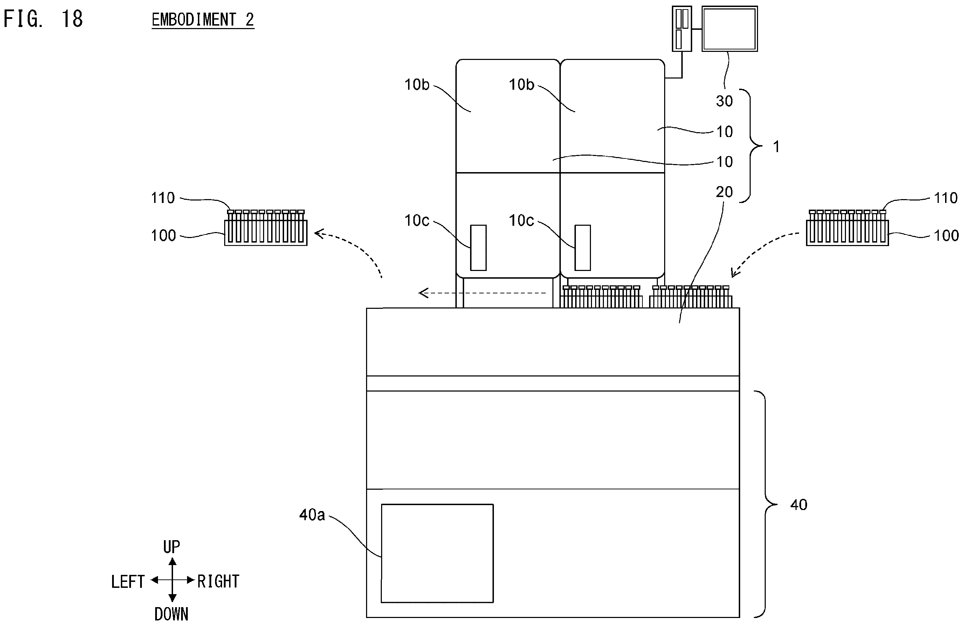

FIG. 18 is a side view schematically showing a configuration of a specimen analyzer 1 according to Embodiment 2.

The specimen analyzer 1 of Embodiment 2 is different from that of Embodiment 1 in that, in Embodiment 2, one more measurement unit 10 is additionally disposed. The added measurement unit 10 has the same configuration as the measurement unit 10 of Embodiment 1. The two measurement units 10 are disposed on the rack 40 in the left-right direction. The control unit 30 is connected to the two measurement units 10 and individually controls the two measurement units 10.

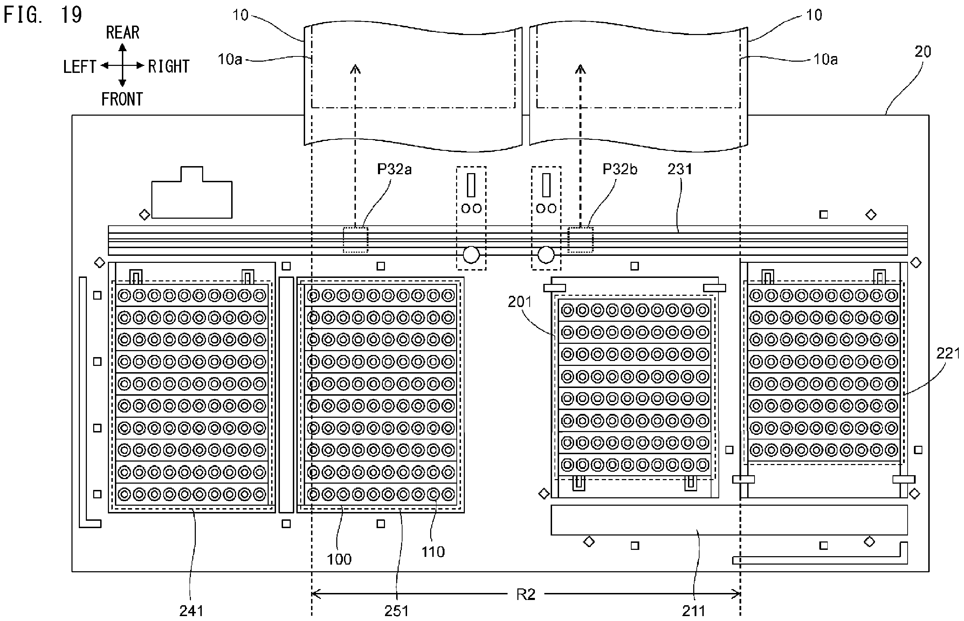

FIG. 19 is a plan view schematically showing the number of the specimen racks 100 that can be stored in the transport unit 20, and positions at which the measurement units 10, the placement regions 201, 221, and the collection regions 241, 251 are disposed.

The transport unit 20 of Embodiment 2 is the same as that of Embodiment 1. Therefore, up to eight specimen racks 100 can be stored in each of the placement regions 201, 221, and up to ten specimen racks 100 can be stored in each of the collection regions 241, 251.

The bottom surfaces 10a of the two measurement units 10 are disposed at the rack 40 (see FIG. 18) in the rear of the transport path 231 as indicated by alternate long and short dash lines. The entirety of the placement region 201 and a part of the collection region 251 are disposed in front of the measurement units 10 (in a range R2 of the left-right width of the bottom surfaces 10a of the two measurement units 10). Thus, as in Embodiment 1, the width, in the left-right direction, of the specimen analyzer 1 can be reduced, so that the size of the specimen analyzer 1 can be reduced.

A part of the placement region 221 or the entirety of the placement region 221 in addition to the placement region 201 may be disposed in front of the measurement units 10. Furthermore, a part of the placement region 201 may be disposed in front of the measurement units 10. Similarly, the entirety of the collection region 251 may be disposed in front of the measurement units 10. In this case, a part of the collection region 241 or the entirety of the collection region 241 may be disposed in front of the measurement units 10.

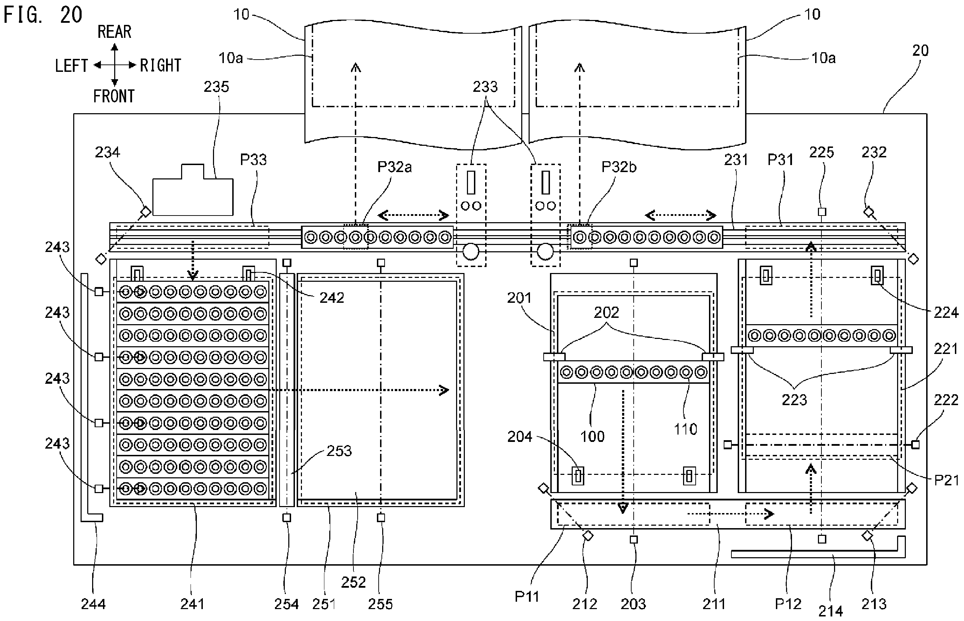

FIG. 20 is a plan view schematically showing a configuration of the transport unit 20.

The transport unit 20 of Embodiment 2 is different from that of Embodiment 1 shown in FIG. 4 in that the transport unit 20 of Embodiment 2 has two start positions P32a, P32b instead of the one start position P32 in the transport path 231. The start positions P32a, P32b are positions at which the measurement units 10 on the left side and the right side, respectively, start the measurement. In Embodiment 2, the specimen containers 110 can be simultaneously positioned at the two start positions P32a, P32b on the transport path 231, and the two measurement units 10 can simultaneously perform the measurement operation.

### <Effect of specimen analyzer according to Embodiment 2>

As shown in FIG. 18, the number of the measurement units 10 disposed is two.

In this configuration, the number of specimens processed per unit time by the specimen analyzer 1 can be increased. The number of the measurement units 10 disposed may be three or more. Thus, the number of specimens processed per unit time by the specimen analyzer 1 can be further increased.

### <Embodiment 3>

In Embodiment 3, a smear preparation device 2 is disposed near the specimen analyzer 1 of Embodiment 2. A specimen processing system 3 is configured by the specimen analyzer 1 and the smear preparation device 2.

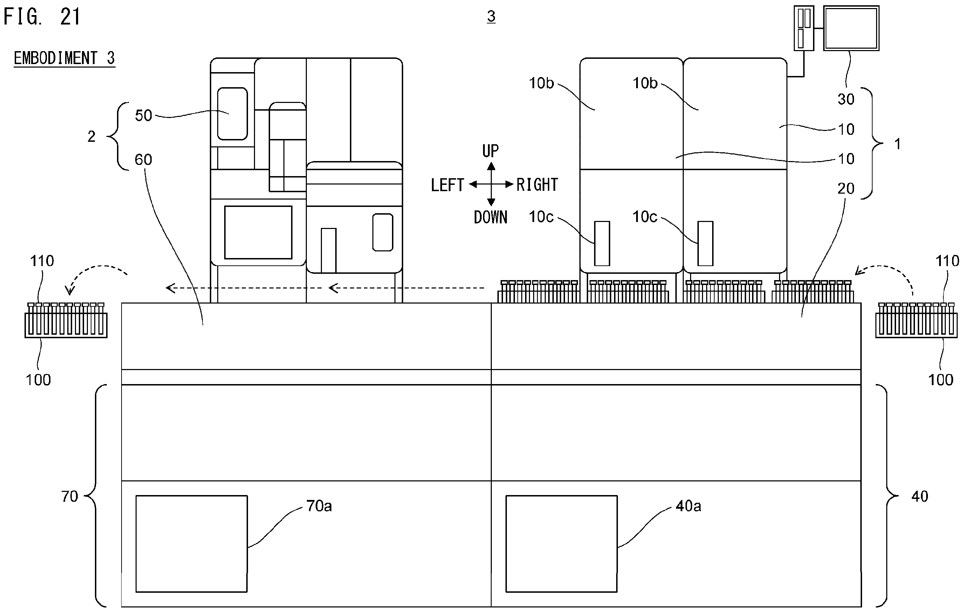

FIG. 21 is a side view schematically showing a configuration of the specimen processing system 3 according to Embodiment 3.

The specimen processing system 3 includes the specimen analyzer 1 and the smear preparation device 2 aligned in the left-right direction so as to be adjacent to each other. The specimen analyzer 1 of Embodiment 3 has the same configuration as that of Embodiment 2 shown in FIG. 18. However, the transport unit 20 of the specimen analyzer 1 of Embodiment 3 includes four placement regions, and is connected to a transport unit 60 such that the specimen rack 100 can be delivered to the transport unit 60 of the smear preparation device 2 as described below.

The smear preparation device 2 includes a smear preparation unit 50, the transport unit 60, and a rack 70. The smear preparation device 2 is a device that automatically prepares a smear from a specimen. The smear preparation unit 50 suctions the specimen from the specimen container 110, and prepares a smear from the suctioned specimen. The transport unit 60 transports the specimen rack 100 holding the specimen containers 110. The rack 70 supports the lower portions of the smear preparation unit 50 and the transport unit 60.

The rack 70 includes a box member 70a. The box member 70a can be drawn forward, and has an open upper face. The operator draws the box member 70a forward, disposes a reagent container which contains a reagent used for preparing the smear, into the box member 70a, from the front side, and inserts a tube of the smear preparation unit 50 into the reagent container.

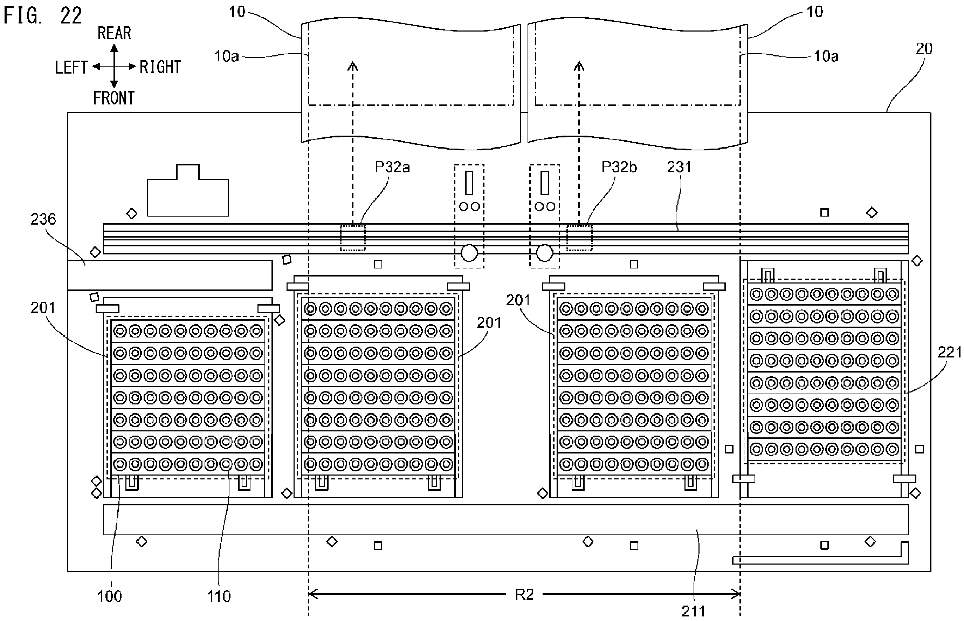

The operator places the specimen racks 100 in the placement regions 201, 221 (see FIG. 22) of the transport unit 20. Thus, the specimen racks 100 are transported by the transport unit 20, and the specimen containers 110 are taken out from the specimen racks 100 at the start positions P32a, P32b (see FIG. 22) in front of the measurement unit 10. When necessary analyses for all the specimen containers 110 in one specimen rack 100 have ended, the specimen rack 100 is transported from the transport unit 20 to the transport unit 60.

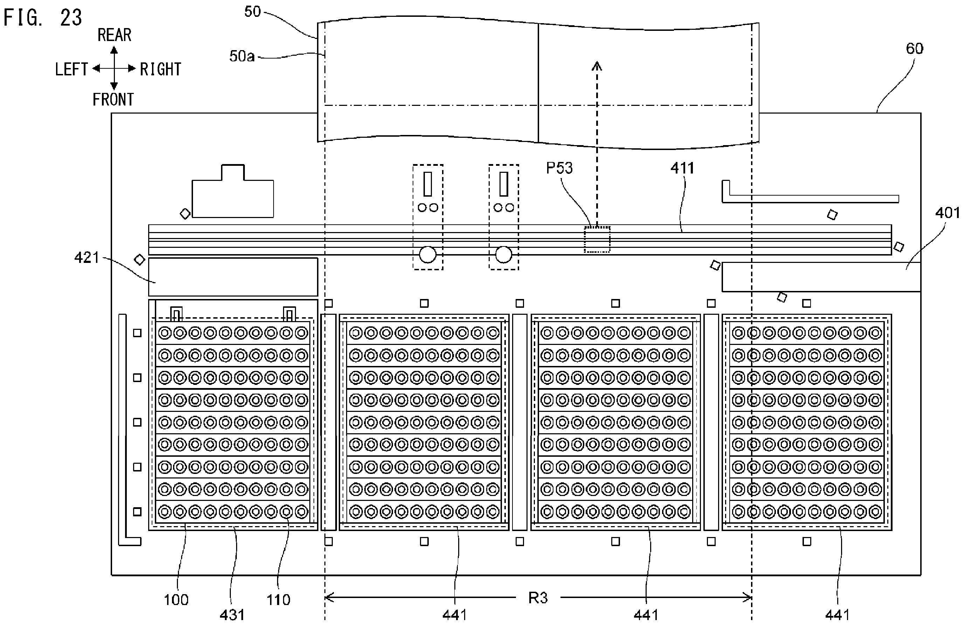

The specimen rack 100 transported to the transport unit 60 is transported by the transport unit 60, and the specimen container 110 is taken out from the specimen rack 100 at a start position P53 (see FIG. 23) in front of the smear preparation unit 50. The specimen container 110 taken out from the specimen rack 100 is returned to the specimen rack 100 at the start position P53 when the specimen in the specimen container 110 has been suctioned. When necessary smear preparation for all the specimen containers 110 in one specimen rack 100 has ended, the specimen rack 100 is transported to collection regions 431, 441 (see FIG. 23) of the transport unit 60. The operator takes out the specimen racks 100 transported to the collection regions 431, 441.

FIG. 22 is a plan view schematically showing the number of the specimen racks 100 that can be stored in the transport unit 20, and positions at which the measurement units 10 and the placement regions 201, 221 are disposed.

The transport unit 20 of Embodiment 3 includes three placement regions 201 and one placement region 221 in which the operator places the specimen racks 100. The three placement regions 201 and the one placement region 221 are disposed in the left-right direction.

FIG. 22 shows a state where the maximum number of the specimen racks 100 are stored in the placement regions 201, 221. In this example, up to seven specimen racks 100 can be stored in the placement region 201 disposed at the left end, up to eight specimen racks 100 can be stored in each of the two placement regions 201 disposed at the center, and up to eight specimen racks 100 can be stored in the placement region 221 disposed at the right end. Therefore, the operator is allowed to place up to 31 specimen racks 100 (310 specimen containers 110) in total in the placement regions 201, 221 at one time.

The entirety of the third placement region 201 from the left side, and a part of the second placement region 201 from the left side are disposed in front of the measurement units 10 (in the range R2 of the left-right width of the bottom surfaces 10a of the two measurement units 10). Thus, the width, in the left-right direction, of the specimen analyzer 1 can be reduced, so that the size of the specimen analyzer 1 can be reduced.

FIG. 23 is a plan view schematically showing the number of the specimen racks 100 that can be stored in the transport unit 60, and positions at which the smear preparation unit 50 and the collection regions 431, 441 are disposed.

The transport unit 60 includes one collection region 431 and three collection regions 441 in which the specimen racks 100 for which necessary processes have ended are stored. The one collection region 431 and the three collection regions 441 are disposed in the left-right direction.

FIG. 23 illustrates a state where the maximum number of the specimen racks 100 are stored in the collection regions 431, 441. In this example, up to nine specimen racks 100 can be stored in each of the one collection region 431 and the three collection regions 441. Therefore, the operator is allowed to take out up to 36 specimen racks 100 (360 specimen containers 110) in total from the collection regions 431, 441 at one time.

Similarly to the measurement unit 10, the upper portion of the smear preparation unit 50 protrudes forward of a transport path 411 of the transport unit 60 whereas the bottom surface 50a of the smear preparation unit 50 is disposed at the rack 70 (see FIG. 21) in the rear of the transport path 411 as indicated by an alternate long and short dash line.

Apart of the collection region 441 disposed at the right end, the entirety of the second collection region 441 from the right side, and a part of the third collection region 441 from the right side are disposed in front of the smear preparation unit 50. The "disposed in front of the smear preparation unit 50" means "disposed in a range R3 of a left-right width of the bottom surface 50a of the smear preparation unit 50 in front of the smear preparation unit 50". That is, the collection regions 441 are disposed so as to overlap the range R3 in the left-right direction. Thus, the width, in the left-right direction, of the smear preparation device 2 can be reduced, so that the size of the smear preparation device 2 can be reduced.

The entirety of the three collection regions 441 may be disposed in front of the smear preparation unit 50, and a part or the entirety of the collection region 431 may be disposed in front of the smear preparation unit 50.

Referring to FIGS. 22 and 23, when the operator places the specimen rack 100 in the placement region 201, 221 in a state where the collection regions 431, 441 are empty, the transport unit 20 starts transporting the specimen rack 100, the measurement unit 10 measures the specimen, and the control unit 30 analyzes the specimen. Subsequently, the specimen rack 100 is transported by the transport unit 60, and the smear preparation unit 50 prepares a smear. In a case where 31 specimen racks 100, that is, the maximum number of the specimen racks 100, are placed in the placement regions 201, 221 at one time, when necessary processes for all the specimen racks 10 have ended, the 31 specimen racks 100 in total are collected into the collection regions 431, 441.

The total number (36) of the specimen racks 100 that can be stored in all of the collection regions 431, 441 is larger, by five, than the total number (31) of the specimen racks 100 that can be stored in all of the placement regions 201, 221. Therefore, the operator is allowed to further place five specimen racks 100 in the placement region 201, 221 after the start of the process. In this case, when necessary processes for all the specimen racks 100 have ended, 36 specimen racks 100 in total are collected in the collection regions 431, 441.

Thus, since a lot of the specimen racks 100 can be stored in the placement regions 201, 221 of the transport unit 20 and the collection regions 431, 441 of the transport unit 60, the frequency at which the operator places the specimen racks 100 in the placement regions 201, 221 and the frequency at which the operator takes out the specimen racks 100 from the collection regions 431, 441 can be reduced.

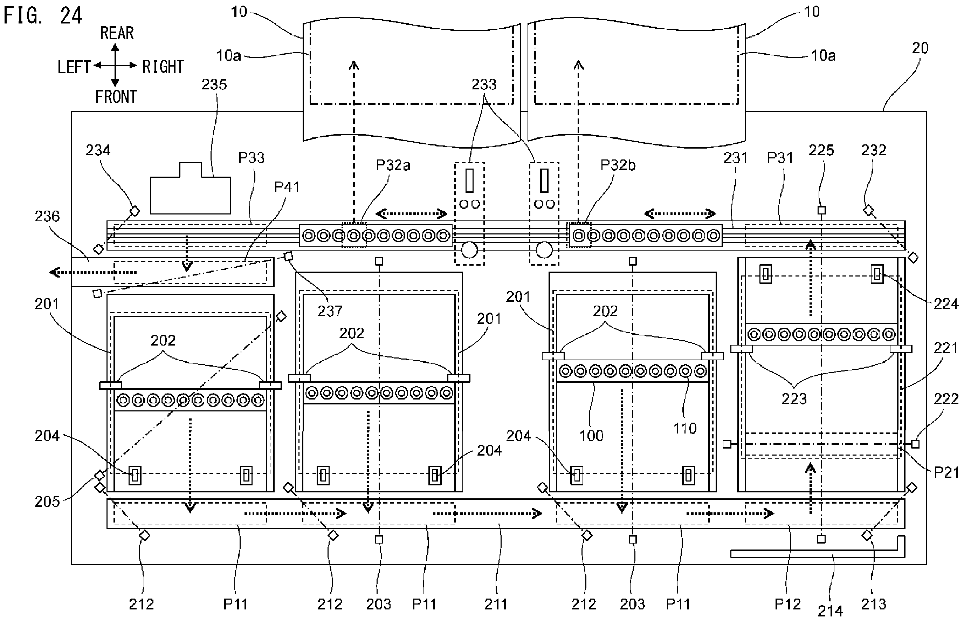

FIG. 24 is a plan view schematically showing a configuration of the transport unit 20 according to Embodiment 3.

The transport unit 20 of Embodiment 3 is different from that of Embodiment 2 shown in FIG. 20 in that the collection region 241, the stopper 242, the sensors 243, the transport mechanism 244, the collection region 251, the transport path 252, the shutter 253, and the sensors 254, 255 are omitted in Embodiment 3. The transport path 211 extends in the left-right direction from a portion in front of the placement region 201 disposed at the left end to a portion in front of the placement region 221 disposed at the right end. As in the placement region 201 of Embodiment 1, the transport mechanism 202, the sensor 203, and the stopper 204 are disposed in each of the three placement regions 201. However, a sensor 205 instead of the sensor 203 is disposed in the placement region 201 disposed at the left end. The sensor 205 is a transmission-type photoelectric sensor, and detects the specimen rack 100 positioned in the placement region 201 disposed at the left end.

Each of the specimen racks 100 placed in the three placement regions 201 is pushed forward by the corresponding transport mechanism 202, transported to the position P11 on the transport path 211, and transported to the placement region 221 in the same manner as in Embodiments 1 and 2.

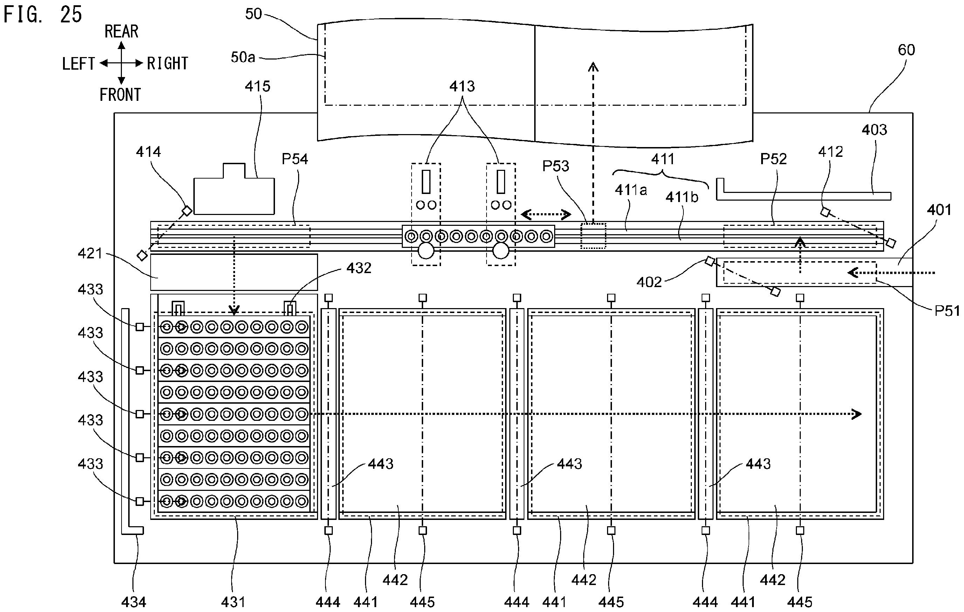

A transport path 236 is disposed between the left end of the transport path 231 and the rear end of the placement region 201 disposed at the left end. The transport path 236 includes a conveyor belt that moves in the left-right direction and a motor for driving the conveyor belt. The transport mechanism 235 pushes out the specimen rack 100 positioned at the position P33 at the left end of the transport path 231, in the forward direction, and positions the specimen rack 100 at a position P41 on the transport path 236. A sensor 237 is disposed near the transport path 236. The sensor 237 is a transmission-type photoelectric sensor, and detects the specimen rack 100 positioned at the position P41. The transport path 236 transports leftward the specimen rack 100 positioned at the position P41 toward a transport path 401 (see FIG. 25) of the transport unit 60.

FIG. 25 is a plan view schematically showing a configuration of the transport unit 60.

The transport unit 60 includes the transport path 401, a sensor 402, a transport mechanism 403, the transport path 411, a sensor 412, two reading units 413, a sensor 414, a transport mechanism 415, a transport path 421, the collection region 431, a stopper 432, five sensors 433, a transport mechanism 434, the collection regions 441, transport paths 442, shutters 443, and sensors 444, 445. Three combinations each formed of the collection region 441, the transport path 442, the shutter 443, and the sensors 444, 445 are disposed rightward of the collection region 431 in the left-right direction.

The transport path 401 is disposed between the right end of the transport path 411, and the rear end of the collection region 441 disposed at the right end. The transport path 401 includes a conveyor belt that moves in the left-right direction and a motor for driving the conveyor belt, transports leftward the specimen rack 100 transported from the transport unit 20, and positions the specimen rack 100 at a position P51 on the transport path 401. The sensor 402 is disposed near the transport path 401. The sensor 402 is a transmission-type photoelectric sensor, and detects the specimen rack 100 positioned at the position P51. The transport mechanism 403 includes a member for pushing the side surface, on the front side, of the specimen rack 100, pushes out the specimen rack 100 positioned at the position P51 in the rearward direction, and transports the specimen rack 100 to a position P52 at the right end of the transport path 411.

The transport path 411, the sensor 412, the two reading units 413, the sensor 414, and the transport mechanism 415 have the same configurations as the transport path 231, the sensor 232, the two reading units 233, the sensor 234, and the transport mechanism 235, respectively, which are shown in FIG. 4.

The transport path 411 is disposed in front of the smear preparation unit 50 and in the rear of the collection regions 431, 441. The start position P53 at which the smear preparation unit 50 starts preparing a smear is on the transport path 411. When the specimen container 110 is positioned at the start position P53, the smear preparation unit 50 takes out the specimen container 110 from the specimen rack 100, moves the taken-out specimen container 110 into the smear preparation unit 50, suctions the specimen in the specimen container 110, and prepares a smear of the specimen in the specimen container 110. When the specimen in the specimen container 110 taken by the smear preparation unit 50 has been suctioned, the smear preparation unit 50 returns the specimen container 110 in the hole 101 in which the specimen container 110 has been previously disposed in the specimen rack 100. When necessary smear preparation for all the specimen containers 110 held in the specimen rack 100 has ended, the specimen rack 100 is transported to a position P54 at the left end of the transport path 411.

The transport mechanism 415 pushes out the specimen rack 100 positioned at the position P54 in the forward direction, and transports the specimen rack 100 through the transport path 421 to a position in front of the stopper 432 in the collection region 431.

The collection region 431, the stopper 432, the sensors 433, and the transport mechanism 434 have the same configurations as the collection region 241, the stopper 242, the sensors 243, and the transport mechanism 244, respectively, which are shown in FIG. 4. The collection region 441, the transport path 442, the shutter 443, and the sensors 444, 445 have the same configurations as the collection region 251, the transport path 252, the shutter 253, and the sensors 254, 255, respectively, which are shown in FIG. 4.

When nine specimen racks 100, that is, the maximum number of the specimen racks 100 that can be stored, are collected in the collection region 431, the nine specimen racks 100 are transported from the collection region 431, through the two collection regions 441 disposed at the center, to the collection region 441 disposed at the right end in the same procedure as shown in FIGS. 6 and 7. At this time, in a state where each shutter 443 has been moved downward, the specimen racks 100 are transported rightward to a position near the center of the collection region 431 by the transport mechanism 434, and are thereafter transported rightward by the transport paths 442 of the three collection regions 441. Thereafter, such transport is repeated.

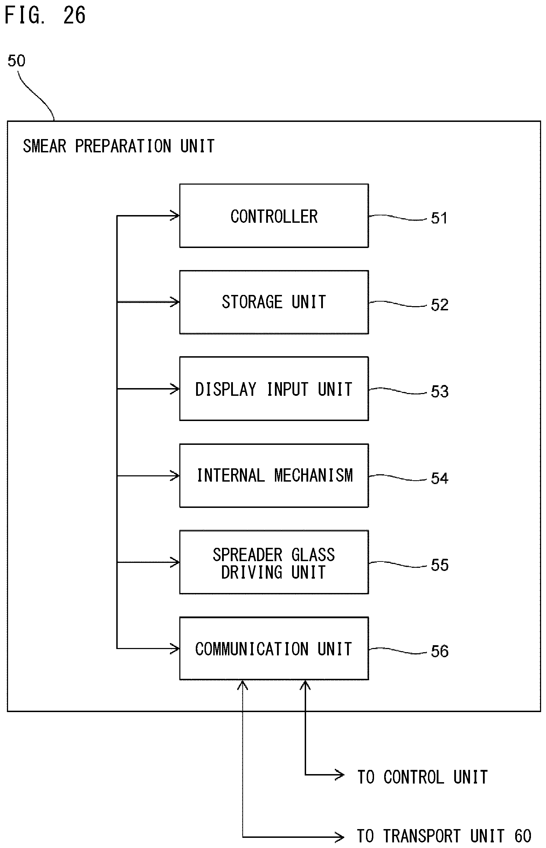

FIG. 26 is a block diagram illustrating a functional configuration of the smear preparation unit 50.

The smear preparation unit 50 includes a controller 51, a storage unit 52, a display input unit 53, an internal mechanism 54, a spreader glass driving unit 55, and a communication unit 56.

The controller 51 is, for example, implemented by a CPU. The controller 51 executes a computer program stored in the storage unit 52 to control the smear preparation unit 50 and the transport unit 60. The storage unit 52 is, for example, implemented by an SSD, an HDD, a ROM, a RAM, etc. The display input unit 53 is, for example, implemented by a touch panel type display. The display input unit 53 may be divided into a display unit such as a liquid crystal display or an organic EL display, and an input unit such as a mouse and a keyboard.

The internal mechanism 54 takes out the specimen container 110 from the specimen rack 100 and suctions the specimen in the specimen container 110 by a piercer. The suctioned specimen is discharged onto a glass slide. The spreader glass driving unit 55 drives spreader glass for preparing a smear. The communication unit 56 is, for example, implemented by a USB interface, and is connected to the control unit 30 and the transport unit 60 so as to be able to communicate therewith. As the smear preparation unit 50, for example, the device disclosed in US Patent No. 10,801,929 can be used, and the content of U.S. Patent No. 10,801,929 is hereby incorporated by reference.

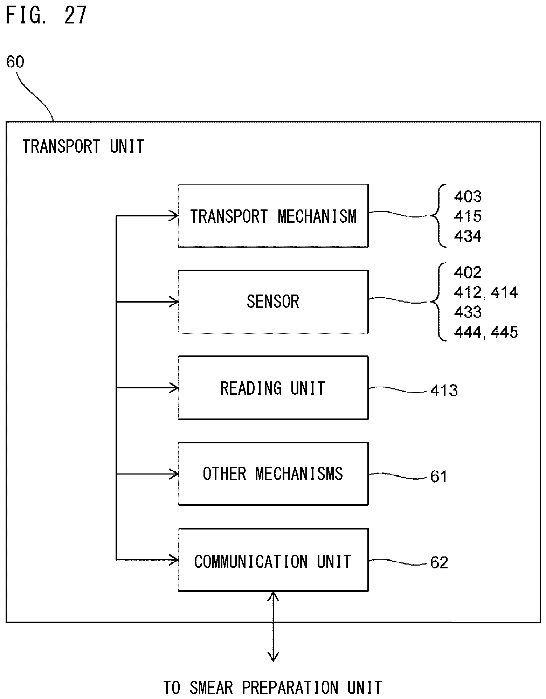

FIG. 27 is a block diagram illustrating a functional configuration of the transport unit 60.

The transport unit 60 includes the transport mechanisms 403, 415, 434, the sensors 402, 412, 414, 433, 444, 445, the reading units 413, other mechanisms 61, and a communication unit 62.

The other mechanisms 61 include the transport paths 401, 411, 442, the stopper 432, and the shutters 443. The communication unit 62 is, for example, implemented by a USB interface, and is connected to the smear preparation unit 50 so as to be able to communicate therewith.

Also in Embodiment 3, control of the transport unit 20 is performed in the same manner as the control of the transport unit 20 as shown in FIGS. 11 to 17. Control of the transport unit 60 is also performed in the same manner as the control of the transport unit 20 as shown in FIGS. 11 to 17. In this case, the controller 51 of the smear preparation unit 50 controls each of the components of the transport unit 60 in parallel, whereby the transport unit 60 is controlled. In a case where the transport unit 60 incudes a controller, the controller of the transport unit 60 may control the transport unit 60, or the controller 51 of the smear preparation unit 50 and the controller of the transport unit 60 may operate so as to share the control of the transport unit 60.

### <Effects of specimen analyzer and specimen processing system according to Embodiment 3>

As shown in FIG. 21, the specimen processing system 3 includes the specimen analyzer 1 and the smear preparation device 2.

In this configuration, both analysis of a specimen and preparation of a smear can be performed.

As shown in FIG. 23, the transport unit 60 includes the collection regions 441 (third collection region) which are disposed in front of the smear preparation unit 50 and in each of which a plurality of the specimen racks 100 can be collected, and the collection region 431 (fourth collection region) which is disposed in the left-right direction relative to the collection regions 441 and in which a plurality of the specimen racks 100 can be collected.

In this configuration, the transport unit 60 includes the collection regions 441 and the collection region 431. Therefore, the operator is allowed to take out the specimen racks 100 after the specimen racks 100 are collected in all the collection regions 441, 431, and the frequency at which the operator takes out the specimen racks 100 can be reduced. Since the collection region 431 is disposed in front of the smear preparation unit 50, the operator is allowed to take out the specimen racks 100 and perform an operation on the smear preparation unit 50 at the same place, thereby enhancing workability. Examples of the operation on the smear preparation unit 50 include a manual smear preparation operation in which the operator sets the specimen container 110 in the smear preparation unit 50 and performs preparation of a smear without using the transport unit 60, replacement of a reagent container, a glass slide, spreader glass, etc., which are set in the smear preparation unit 50, and addressing of malfunction occurring in the smear preparation unit 50.

### <Embodiment 4>

In Embodiment 1, as shown in FIG. 3, the two placement regions are disposed in the left-right direction, and the two collection regions are disposed in the left-right direction. Meanwhile, in Embodiment 4, four placement regions are disposed in the up-down direction, and four collection regions are disposed in the up-down direction.

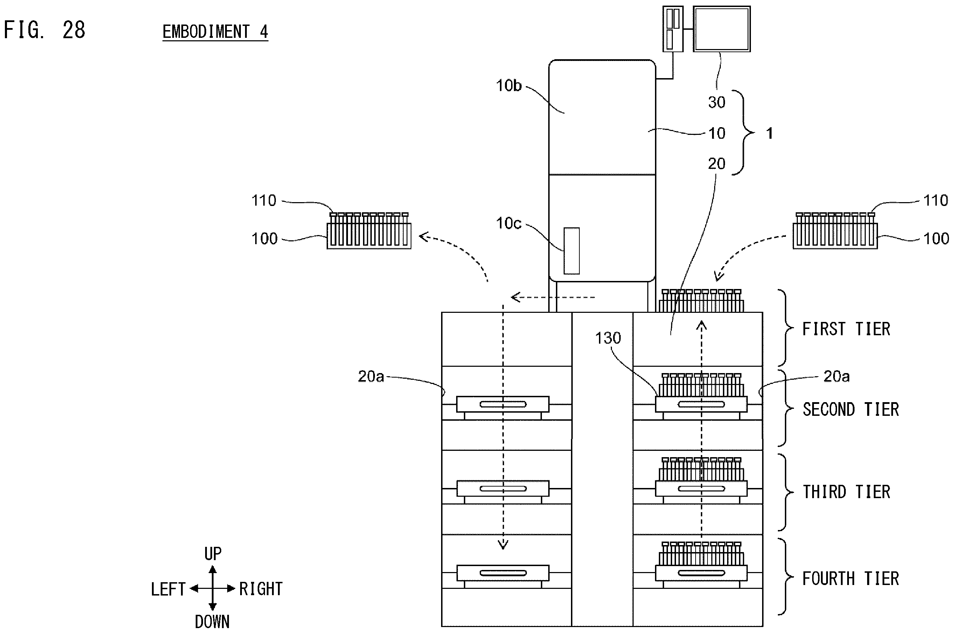

FIG. 28 is a side view schematically showing a configuration of a specimen analyzer 1 according to Embodiment 4.

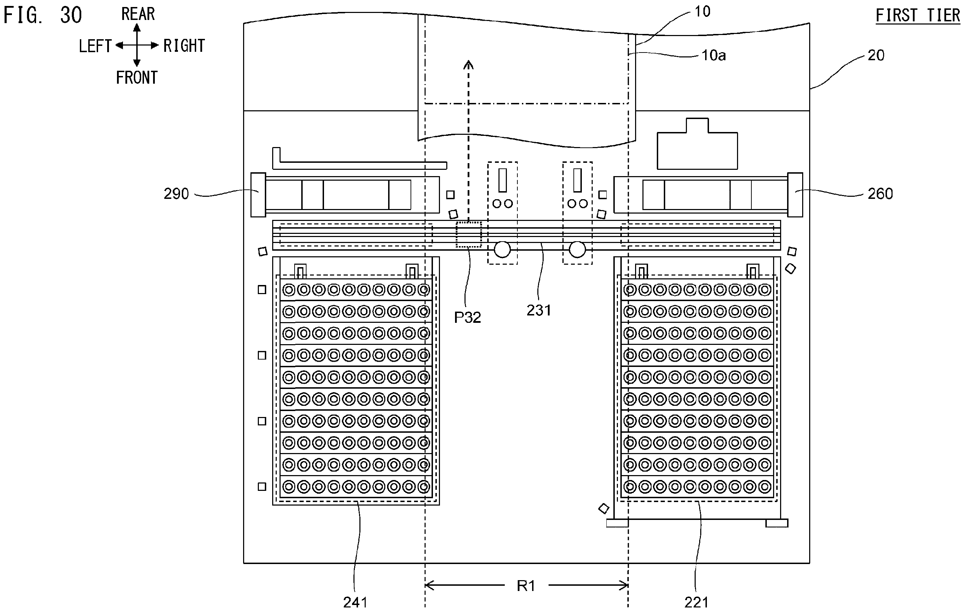

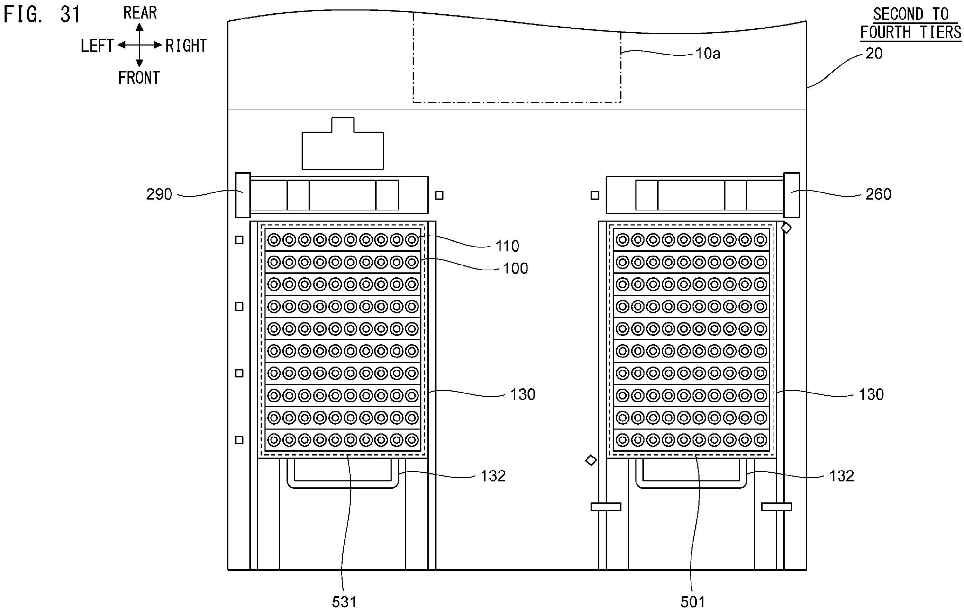

The specimen analyzer 1 of Embodiment 4 is different from that of Embodiment 1 shown in FIG. 1 in that the rack 40 is omitted, and the transport unit 20 is elongated in the up-down direction and supports the lower portion of the measurement unit 10 in Embodiment 4. The transport unit 20 includes first to fourth tiers. The placement region 221 and the collection region 241 (see FIG. 30) are disposed in the first tier, and a placement region 501 and a collection region 531 (see FIG. 31) are disposed in each of the second to the fourth tiers. The placement regions 501 and the collection regions 531 in the second to the fourth tiers are opened forward through an opening 20a formed at the front side of the transport unit 20.

The operator sets the specimen containers 110 each containing the specimen, in the specimen racks 100, and sets the specimen racks 100 in the placement regions 221, 501 in the first to the fourth tiers. When the operator sets the specimen racks 100 in the second to the fourth tiers, the operator stores the specimen racks 100 in a rack holder 130, and sets the rack holder 130 holding the specimen racks 100 through the opening 20a in the placement region 501. Furthermore, the operator sets empty rack holders 130 in the collection regions 531 in the second to the fourth tiers. Thus, the specimen rack 100 is transported by the transport unit 20, and measurement of the specimen in the specimen container 110 is started at the start position P32 (see FIG. 30) in front of the measurement unit 10.

When necessary analyses for all the specimen containers 110 in one specimen rack 100 have ended, the specimen rack 100 is transported to the collection region 241, 531 in the first to the fourth tiers. In a case where the specimen rack 100 is transported to the collection region 531 in the second to the fourth tiers, the specimen rack 100 is transported into the rack holder 130 that has been previously set in the collection region 531. The operator takes out the specimen racks 100 transported into the collection regions 241, 531. The operator takes out the specimen racks 100 collected in the collection regions 531 together with the rack holders 130 when the operator takes out the specimen racks 100 from the collection regions 531 in the second to the fourth tiers.

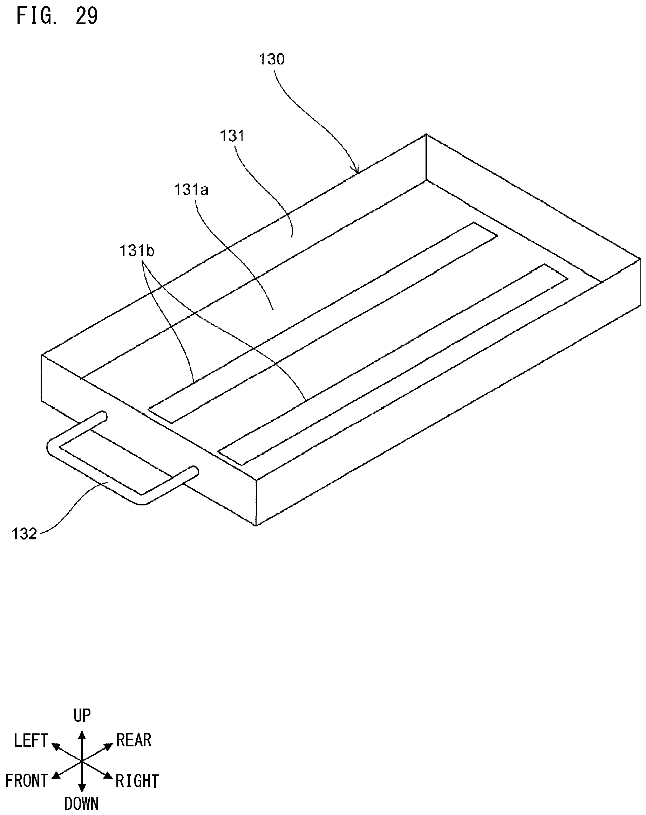

FIG. 29 is a perspective view schematically showing a configuration of the rack holder 130.

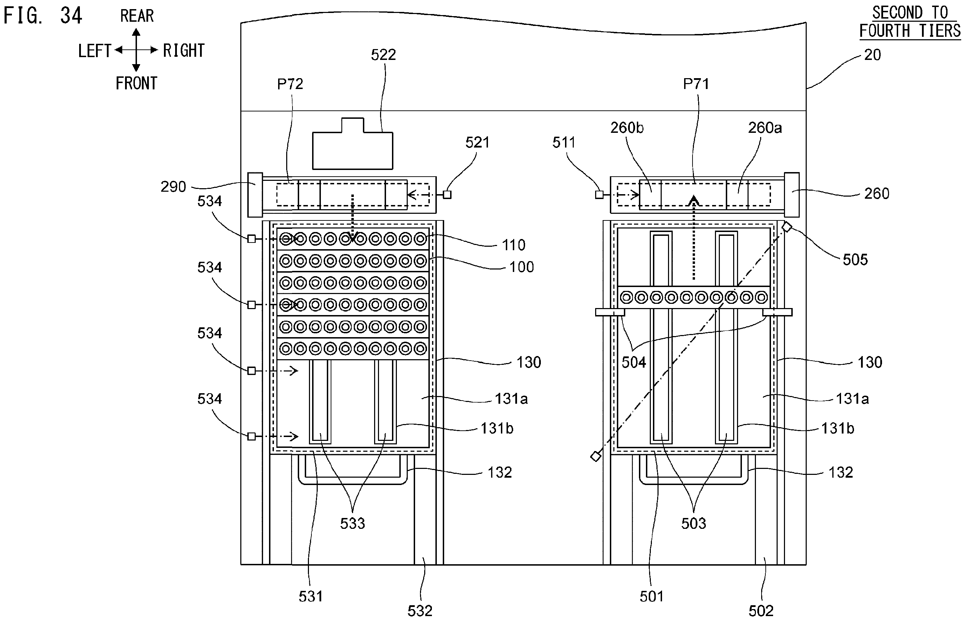

The rack holder 130 has a rectangular shape and includes a recess 131 having an open upper portion. The recess 131 has a bottom surface 131a parallel to the horizontal plane. The bottom surface 131a has a pair of openings 131b penetrating through the bottom surface 131a in the up-down direction and extending in the front-rear direction. In a case where the specimen racks 100 are transported by using the rack holder 130, an ascending/descending portion 503 (see FIG. 34) for causing the bottom surface of the specimen rack 100 to slide in the front-rear direction protrudes upward from the bottom surface 131a through the openings 131b. A handle 132 is disposed at the front surface of the rack holder 130, and the handle 132 is held by the operator when the operator sets the rack holder 130 in the placement region 501 and takes out the rack holder 130 from the collection region 531.

FIG. 30 is a plan view schematically showing the number of the specimen racks 100 that can be stored in the first tier of the transport unit 20, and positions at which the measurement unit 10, the placement region 221, and the collection region 241 are disposed.

The transport unit 20 of Embodiment 4 includes one placement region 221 and one collection region 241 in the first tier. FIG. 30 shows a state where the maximum number of the specimen racks 100 are stored in each of the placement region 221 and the collection region 241. In this example, up to ten specimen racks 100 can be stored in each of the placement region 221 and the collection region 241.

The bottom surface 10a of the measurement unit 10 is disposed at the transport unit 20 in the rear of the transport path 231 as indicated by an alternate long and short dash line. A part of the placement region 221 and a part of the collection region 241 are disposed in front of the measurement unit 10 (in the range R1 of the left-right width of the bottom surface 10a of the measurement unit 10). Thus, as in Embodiment 1, the width, in the left-right direction, of the specimen analyzer 1 can be reduced, so that the size of the specimen analyzer 1 can be reduced.

FIG. 31 is a plan view schematically showing the number of the specimen racks 100 that can be stored in the second to the fourth tiers of the transport unit 20, and positions at which the placement regions 501 and the collection regions 531 are disposed.

The transport unit 20 of Embodiment 4 includes one placement region 501 and one collection region 531 in each of the second to the fourth tiers. FIG. 31 shows a state where the maximum number of the specimen racks 100 are stored in each of the placement region 501 and the collection region 531. In this example, up to ten specimen racks 100 can be stored in each of the placement region 501 and the collection region 531.

In FIG. 31, for convenience sake, the position of the bottom surface 10a of the measurement unit 10 is indicated by an alternate long and short dash line. In a planar view, the placement regions 501 in the second to the fourth tiers are disposed at almost the same position as the placement region 221 in the first tier, and the collection regions 531 in the second to the fourth tiers are disposed at almost the same position as the collection region 241 in the first tier.

Referring to FIGS. 30 and 31, when the operator places the specimen rack 100 in the placement region 221, 501 in a state where the collection region 241 is empty and empty rack holders 130 are set in the collection regions 531 in the second to the fourth tiers, the transport unit 20 starts transporting the specimen rack 100, and the measurement unit 10 measures the specimen. In a case where 40 specimen racks 100, that is, the maximum number of the specimen racks 100, are placed in the placement regions 221, 501 at one time, when necessary analyses for all the specimen racks 100 have ended, the 40 specimen racks 100 are collected into the collection regions 241, 531 in the first to the fourth tiers.

Thus, a lot of the specimen racks 100 can be stored in the placement regions 221, 501 and the collection regions 241, 531 in the first to the fourth tiers of the transport unit 20. Therefore, the frequency at which the operator places the specimen racks 100 in the placement region 221, 501, and the frequency at which the operator takes out the specimen racks 100 from the collection region 241, 531 can be reduced.

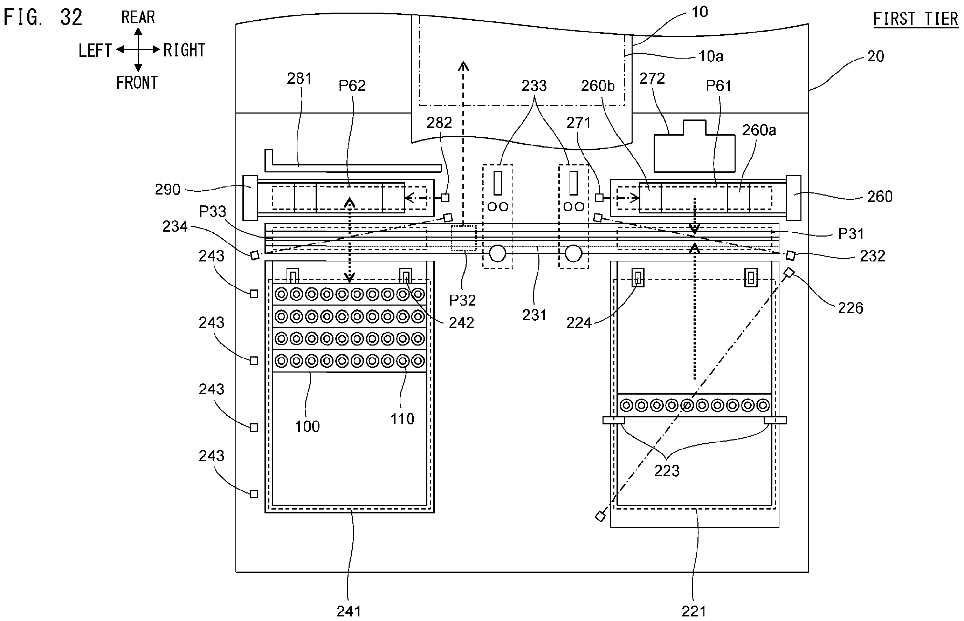

FIG. 32 is a plan view schematically showing a configuration of the first tier of the transport unit 20.

In the first tier of the transport unit 20, the placement region 201, the transport mechanism 202, the sensor 203, the stopper 204, the transport path 211, the sensors 212, 213, the transport mechanism 214, the sensors 222, 225, the transport mechanism 235, the collection region 251, the transport path 252, the shutter 253, and the sensors 254, 255 are omitted from the configuration of Embodiment 1 shown in FIG. 4. Unlike in Embodiment 1, a sensor 226, an ascending/descending mechanism 260, a sensor 271, a transport mechanism 272, a transport mechanism 281, a sensor 282, and an ascending/descending mechanism 290 are included in the first tier of the transport unit 20. The ascending/descending mechanisms 260, 290 are mechanisms disposed across the first to the fourth tiers.

The sensor 226 is a transmission-type photoelectric sensor, and detects the specimen rack 100 placed in the placement region 221.

The ascending/descending mechanism 260 is disposed in the rear of the position P31 at the right end of the transport path 231. The ascending/descending mechanism 260 includes support portions 260a, 260b for supporting the bottom surface of the specimen rack 100 and a motor for driving the support portions 260a, 260b. The ascending/descending mechanism 260 moves the support portions 260a, 260b upward and downward in a state where the specimen rack 100 is placed on the support portions 260a, 260b, whereby the specimen rack 100 is moved upward and downward between an ascending/descending position P61 in the first tier and an ascending/descending position P71 (see FIG. 34) in each of the second to the fourth tiers. The sensor 271 is a reflection-type photoelectric sensor, and detects the specimen rack 100 positioned at the ascending/descending position P61. The transport mechanism 272 includes a member for pushing the side surface, on the rear side, of the specimen rack 100 and a motor for driving the member, pushes out the specimen rack 100 positioned at the ascending/descending position P61 in the forward direction, and transports the specimen rack 100 to the position P31 at the right end of the transport path 231.

The specimen rack 100 placed in the placement region 221 in the first tier is transported to the transport path 231 and thereafter positioned at the start position P32, as in Embodiment 1. Meanwhile, the specimen rack 100 placed in the placement region 501 in each of the second to the fourth tiers is moved upward by the ascending/descending mechanism 260, and positioned at the ascending/descending position P61. The specimen rack 100 is pushed out in the forward direction by the transport mechanism 272 and positioned at the position P31 of the transport path 231, and thereafter positioned at the start position P32 by the transport path 231.

The transport mechanism 281 includes a member for pushing the side surfaces, on the rear side and the front side, of the specimen rack 100 and a motor for driving the member. The transport mechanism 281 pushes out the specimen rack 100 positioned at the position P33 at the left end of the transport path 231, in the forward direction or the rearward direction, and transports the specimen rack 100 pushed forward to the collection region 241 and transports the specimen rack 100 pushed rearward to an ascending/descending position P62. The sensor 282 is a reflection-type photoelectric sensor, and detects the specimen rack 100 positioned at the ascending/descending position P62. The ascending/descending mechanism 290 is disposed in the rear of the position P33 at the left end of the transport path 231. The ascending/descending mechanism 290 has the same configuration as the ascending/descending mechanism 260. The ascending/descending mechanism 290 moves the specimen rack 100 upward and downward between the ascending/descending position P62 in the first tier and an ascending/descending position P72 (see FIG. 34) in each of the second to the fourth tiers.

In a case where the specimen rack 100 positioned at the position P33 at the left end of the transport path 231 is collected into the collection region 241 in the first tier, the specimen rack 100 positioned at the position P33 is pushed out in the forward direction by the transport mechanism 281, and collected into the collection region 241. Meanwhile, in a case where the specimen rack 100 positioned at the position P33 at the left end of the transport path 231 is collected into the collection region 531 in any of the second to the fourth tiers, the specimen rack 100 positioned at the position P33 is pushed out in the rearward direction by the transport mechanism 281, and positioned at the ascending/descending position P62. The specimen rack 100 is moved downward by the ascending/descending mechanism 290 to the ascending/descending position P72 in any of the second to the fourth tiers, and thereafter collected into the collection region 531.

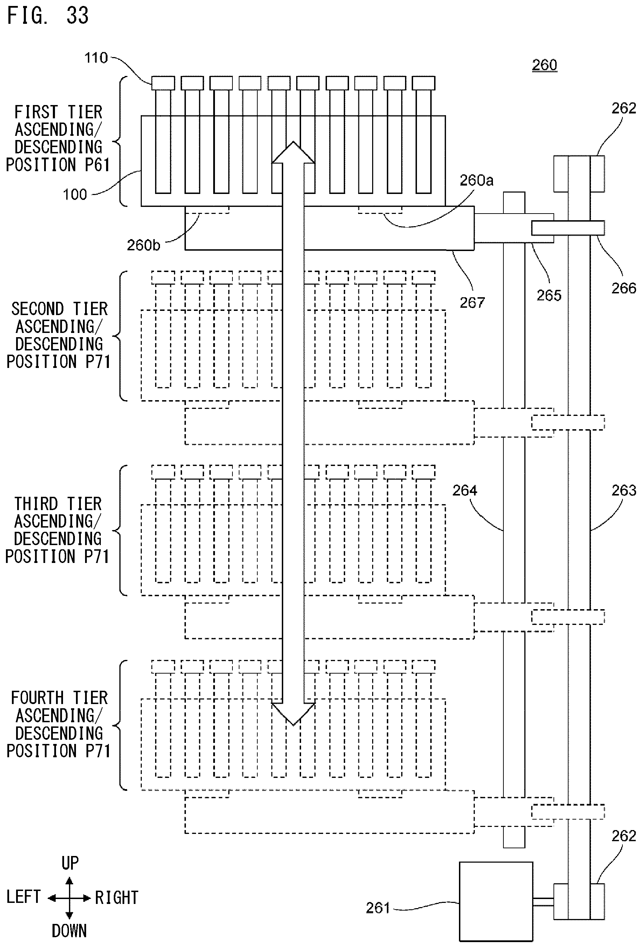

FIG. 33 is a side view schematically showing a configuration of the ascending/descending mechanism 260.

The ascending/descending mechanism 260 includes a motor 261, a pair of pulleys 262, a belt 263, a rail 264, a connecting member 265, a fixing member 266, and a support member 267.

The motor 261 is implemented by a stepping motor. The pair of pulleys 262 are disposed on the upper and the lower sides. One of the pulleys 262 is set to the shaft of the motor 261. The belt 263 is connected to the pair of pulleys 262. The rail 264 extends in the up-down direction. The right end of the connecting member 265 is fixed to the belt 263 by the fixing member 266. The connecting member 265 is supported by the rail 264 so as to be movable in the up-down direction. The left end of the connecting member 265 is fixed to the support member 267. The support member 267 has, at the upper end, the support portions 260a, 260b formed as members parallel to the horizontal plane.

By driving the motor 261, the belt 263 is moved upward and downward, and the support portions 260a, 260b are moved upward and downward according to the movement of the belt 263. Thus, as indicated by white arrows in FIG. 33, the specimen rack 100 can be moved upward and downward between the ascending/descending position P61 in the first tier and the ascending/descending position P71 in each of the second to the fourth tiers.

FIG. 34 is a plan view schematically showing a configuration of each of the second to the fourth tiers of the transport unit 20.

The transport unit 20 includes, in each of the second to the fourth tiers, the placement region 501, a pair of support members 502, the ascending/descending portion 503, a transport mechanism 504, a sensor 505, a sensor 511, a sensor 521, a transport mechanism 522, the collection region 531, a pair of support members 532, an ascending/descending portion 533, and four sensors 534.

Portions near the ends, in the left-right direction, of the rack holder 130 set in the placement region 501 are supported by the upper surfaces of the pair of support members 502. The ascending/descending portion 503 includes a pair of members that extend in the front-rear direction and are movable in the up-down direction and a motor for driving the members. The upper surfaces of the pair of members of the ascending/descending portion 503 are moved upward and downward between a position higher than the upper end of the rack holder 130 set in the placement region 501 and a position lower than the lower surface of the rack holder 130.

The transport mechanism 504 includes a pair of members for pushing the side surface, on the front side, of the specimen rack 100 and a motor for driving the pair of members, pushes out the specimen rack 100 in the state of being lifted at the placement region 501 by the ascending/descending portion 503, in the rearward direction, and transports the specimen rack 100 to the ascending/descending position P71 of the ascending/descending mechanism 260. The sensor 505 is a transmission-type photoelectric sensor, and detects the specimen rack 100 placed in the placement region 501. The sensor 511 is a reflection-type photoelectric sensor, and detects the specimen rack 100 positioned at the ascending/descending position P71 of the ascending/descending mechanism 260.

The sensor 521 is a reflection-type photoelectric sensor, and detects the specimen rack 100 positioned at the ascending/descending position P72 of the ascending/descending mechanism 290. The transport mechanism 522 includes a member for pushing the side surface, on the rear side, of the specimen rack 100 and a motor for driving the member, pushes out the specimen rack 100 positioned at the ascending/descending position P72 in the forward direction, and transports the specimen rack 100 to the rear end of the collection region 531.

The collection region 531, the pair of support members 532, and the ascending/descending portion 533 have the same configurations as the placement region 501, the pair of support members 502, and the ascending/descending portion 503, respectively. In a state where the upper surfaces of the pair of members of the ascending/descending portion 533 are positioned so as to be higher than the upper end of the rack holder 130 set in the collection region, the specimen rack 100 positioned at the ascending/descending position P72 is transported to the collection region 531. When the ten specimen racks 100 have been collected into the collection region 531, the ascending/descending portion 533 is moved downward. The four sensors 534 are reflection-type photoelectric sensors, and detect the first, the fourth, the seventh, and the tenth specimen racks 100, respectively, from the front side, among the ten specimen racks 100 collected in the collection region 531.

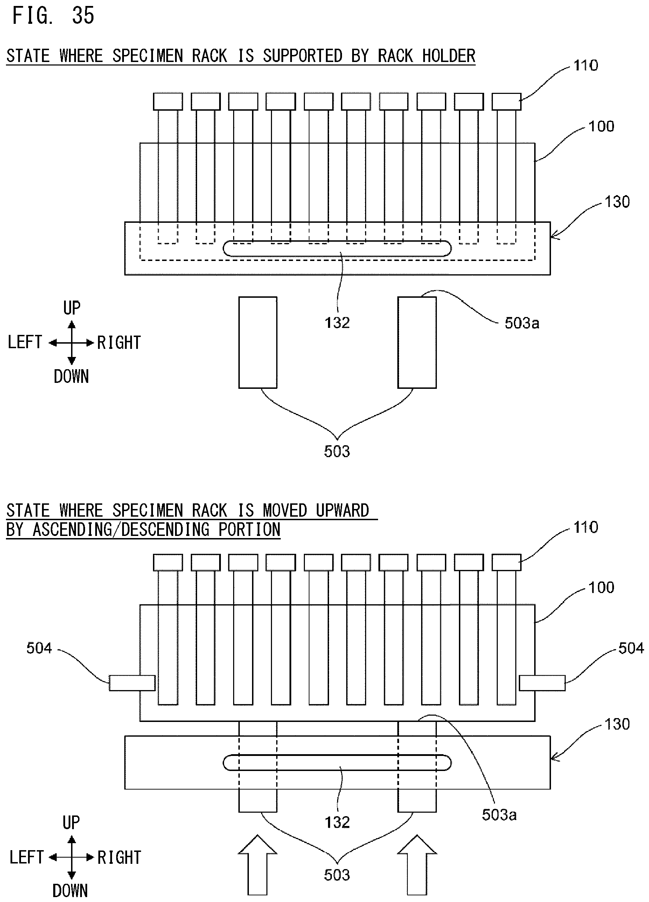

FIG. 35 is a side view schematically showing a procedure of transporting the specimen rack 100 in the placement region 501 in each of the second to the fourth tiers.

As shown in the upper side portion of FIG. 35, upper surfaces 503a of the pair of members of the ascending/descending portion 503 are positioned below the lower surface of the rack holder 130 in general. In this state, the operator places the rack holder 130 in the placement region 501 and takes out the rack holder 130 from the placement region 501.

In a case where the specimen rack 100 in the placement region 501 is transported, the upper surfaces 503a of the pair of members of the ascending/descending portion 503 are moved upward to a position higher than the upper end of the rack holder 130. Thus, as shown in the lower side portion of FIG. 35, the lower surface of the specimen rack 100 is positioned so as to be higher than the upper end of the rack holder 130. Therefore, when the transport mechanism 504 pushes out the side surface, on the front side, of the specimen rack 100 in the rearward direction in this state, the specimen rack 100 is transported to the ascending/descending position P71. At this time, the upper surfaces of the support portions 260a, 260b of the ascending/descending mechanism 260 are positioned in advance so as to be level with the upper surfaces 503a of the ascending/descending portion 503. Thus, the specimen rack 100 pushed out from the placement region 501 in the rearward direction is smoothly transported onto the support portions 260a, 260b positioned at the ascending/descending position P71.

### <Effect of specimen analyzer according to Embodiment 4>

As shown in FIGS. 30 and 31, the transport unit 20 includes the placement region 221 (first placement region) which is disposed in front of the measurement unit 10 and in which a plurality of the specimen racks 100 can be placed, and the placement regions 501 (second placement region) which are disposed in the up-down direction relative to the placement region 221 and in which a plurality of the specimen racks 100 can be placed. The transport unit 20 transports the specimen rack 100 placed in the placement region 221, 501 to the start position P32 at which the measurement unit 10 starts the measurement.

In this configuration, since the transport unit 20 includes the placement region 221 and the placement regions 501, the operator is allowed to place the specimen racks 100 in both of the placement regions 221, 501, and the frequency at which the operator places the specimen racks 100 can be reduced. Since the placement region 221 is disposed in front of the measurement unit 10, the operator is allowed to place the specimen racks 100 and perform the operation on the measurement unit 10 at the same place, thereby enhancing the workability.

As shown in FIGS. 30 and 31, the transport unit 20 has the transport path 231 including the start position P32, and the transport path 231 extends in the left-right direction between the measurement unit 10 and the placement region 221 (first placement region).

In this configuration, since the transport path 231 is disposed in the rear of the placement region 221, the specimen rack 100 in the placement region 221 can be easily sent out to the transport path 231. Furthermore, the specimen racks 100 having been sent out to the transport path 231 can be sequentially transported smoothly to the start position P32.

As shown in FIGS. 32 and 34, the transport mechanisms 223, 272, the ascending/descending mechanism 260, and the transport mechanism 504 (transport portion) transport the specimen racks 100 placed in the placement region 221 (first placement region) and the placement region 501 (second placement region) to the position P31 (predetermined position) which is on the transport path 231 and distant from the start position P32.

In this configuration, even when the preceding specimen rack 100 is positioned at the start position P32 for the measurement, the specimen rack 100 that holds the specimen containers 110 for which the specimens have not been measured and that is placed in the placement region 221, 501 can be sent out to the position P31 on the transport path 231 and can be caused to be in a stand-by state. Thus, the efficiency of transporting the specimen racks 100 can be enhanced, so that the analysis efficiency of the specimen analyzer 1 can be enhanced.

As shown in FIGS. 32 and 34, the transport mechanisms 223, 272, the ascending/descending mechanism 260, and the transport mechanism 504 (transport portion) transport the specimen racks 100 placed in the placement region 221 (first placement region) and the placement region 501 (second placement region) to a single position P31 (predetermined position).

In this configuration, the specimen racks 100 placed in the placement regions 221, 501 can be sent out to the position P31 on the transport path 231 in a predetermined order.

As shown in FIGS. 32 and 34, the ascending/descending mechanism 260 (first transport portion) transports the specimen rack 100 placed in the placement region 501 (second placement region) to the ascending/descending position P61 (position) which is level with the transport path 231. The transport mechanism 272 (second transport portion) transports the specimen rack 100 transported by the ascending/descending mechanism 260, to the position P31 which is on the transport path 231 and distant from the start position P32.

In this configuration, the specimen rack 100 can be smoothly transported to the position P31 on the transport path 231.

As shown in FIG. 34, the transport mechanism 504 (third transport portion) transports the specimen rack 100 placed in the placement region 501 (second placement region) to the ascending/descending position P71 (transport start position) at which the ascending/descending mechanism 260 (first transport portion) performs the ascending/descending operation.

In this configuration, the specimen racks 100 placed in the placement region 501 can be sequentially positioned at the ascending/descending position P71, and transported to the position P31 on the transport path 231.

As shown in FIG. 32 and 34, the transport mechanism 272 (second transport portion) and the transport mechanism 504 (third transport portion) transport the specimen racks 100 in the opposite directions, respectively.

In this configuration, in a planar view, the placement region 501 and the position P31 at the right end of the transport path 231 can be disposed so as to overlap each other. Thus, a space in the front-rear direction can be efficiently used, and a lot of the specimen racks 100 can be placed in the placement region 501.

As shown in FIGS. 30 and 31, the transport unit 20 includes the collection region 241 (first collection region) which is disposed in front of the measurement unit 10 and in which a plurality of the specimen racks 100 can be collected, and the collection regions 531 (second collection region) which are disposed in the up-down direction relative to the collection region 241 and in which a plurality of the specimen racks 100 can be collected.

In this configuration, since the transport unit 20 includes the collection region 241 and the collection regions 531, after the specimen racks 100 are collected into both the collection regions 241 and 531, the operator is allowed to take out the specimen racks 100, so that the frequency at which the operator takes out the specimen racks 100 can be reduced. Since the collection region 241 is disposed in front of the measurement unit 10, the operator is allowed to take out the specimen racks 100 and perform the operation on the measurement unit 10 at the same place, thereby enhancing workability.

As shown in FIG. 30, the transport path 231 extends in the left-right direction between the measurement unit 10 and the collection region 241 (first collection region).

In this configuration, since the transport path 231 is disposed in the rear of the collection region 241, the specimen rack 100 positioned at the start position P32 can be easily sent out to the collection region 241. Furthermore, the specimen racks 100 having been sent out can be sequentially collected smoothly into the collection region 241.

The number of the specimen racks 100 (40 in total in the example shown in FIGS. 30 and 31) that can be placed in the one placement region 221 and the three placement regions 501, and the number of the specimen racks 100 (40 in total in the example shown in FIGS. 30 and 31) that can be collected in the one collection region 241 and the three collection regions 531 are equal to each other.

In this configuration, the specimen racks 100 placed in the placement regions 221, 501 can be collected into the collection regions 241, 531 without excess or deficiency. Thus, the size of the specimen analyzer 1 can be reduced.

The number of the specimen racks 100 that can be collected in the one collection region 241 and the three collection regions 531 may be larger than the number of the specimen racks 100 that can be placed in the one placement region 221 and the three placement regions 501.

In this case, the frequency at which the operator takes out the specimen racks 100 collected in the collection regions 241, 531 can be reduced.

As shown in FIGS. 32 and 34, the transport mechanism 281, the ascending/descending mechanism 290, and the transport mechanism 522 (transport portion) transport the specimen rack 100 positioned at the position P33 (predetermined position) which is on the transport path 231 and distant from the start position P32 to the collection region 241 (first collection region) and the collection region 531 (second collection region).

In this configuration, even when the succeeding specimen rack 100 is positioned at the start position P32 for the measurement, the specimen rack 100 holding the specimen containers 110 for which analyses have ended can be collected into the collection regions 241, 531 through the position P33 on the transport path 231. Thus, the efficiency of transporting the specimen racks 100 can be enhanced, so that the analysis efficiency of the specimen analyzer 1 can be enhanced.

As shown in FIG. 32, the transport mechanism 281 (first transport portion) transports the specimen rack 100 positioned at the position P33 (predetermined position) which is on the transport path 231 and distant from the start position P32 to the ascending/descending position P62 (position) which is level with the transport path 231. As shown in FIG. 34, the ascending/descending mechanism 290 (second transport portion) transports the specimen rack 100 transported by the transport mechanism 281, to the ascending/descending position P72 (position) which is level with the collection region 531 (second collection region).

In this configuration, the specimen rack 100 on the transport path 231 can be smoothly transported to the collection region 531.

As shown in FIG. 34, the transport mechanism 522 (third transport portion) transports the specimen rack 100 transported by the ascending/descending mechanism 290 (second transport portion) to the collection region 531 (second collection region).

In this configuration, the specimen rack 100 transported to a target tier by the ascending/descending mechanism 290 can be finally positioned in the collection region 531.

As shown in FIGS. 32 and 34, the transport mechanism 281 (first transport portion) and the transport mechanism 522 (third transport portion) transport the specimen racks 100 in the opposite directions, respectively.

In this configuration, in a planar view, the collection region 531 and the position P33 at the left end of the transport path 231 can be disposed so as to overlap each other. Thus, a space in the front-rear direction can be efficiently used, and a lot of the specimen racks 100 can be placed in the collection region 531.

### <Embodiment 5>

In Embodiment 4, the number of the measurement units 10 in the specimen analyzer 1 is one. However, in Embodiment 5, the number of the measurement units 10 in the specimen analyzer 1 is two. In Embodiment 5, two placement regions and two collection regions are disposed in the left-right direction in one tier.

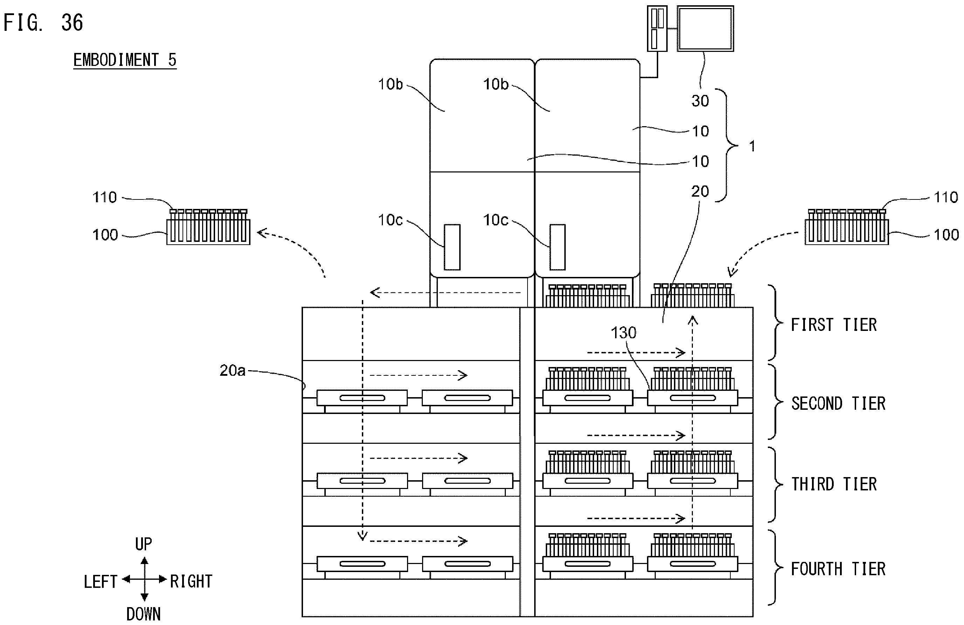

FIG. 36 is a side view schematically showing a configuration of a specimen analyzer 1 according to Embodiment 5.

The specimen analyzer 1 of Embodiment 5 is different from that of Embodiment 4 shown in FIG. 28 in that, in Embodiment 5, one more measurement unit 10 is additionally disposed. The added measurement unit 10 has the same configuration as the measurement unit 10 of Embodiment 4. The two measurement units 10 are disposed in the left-right direction on the transport unit 20.

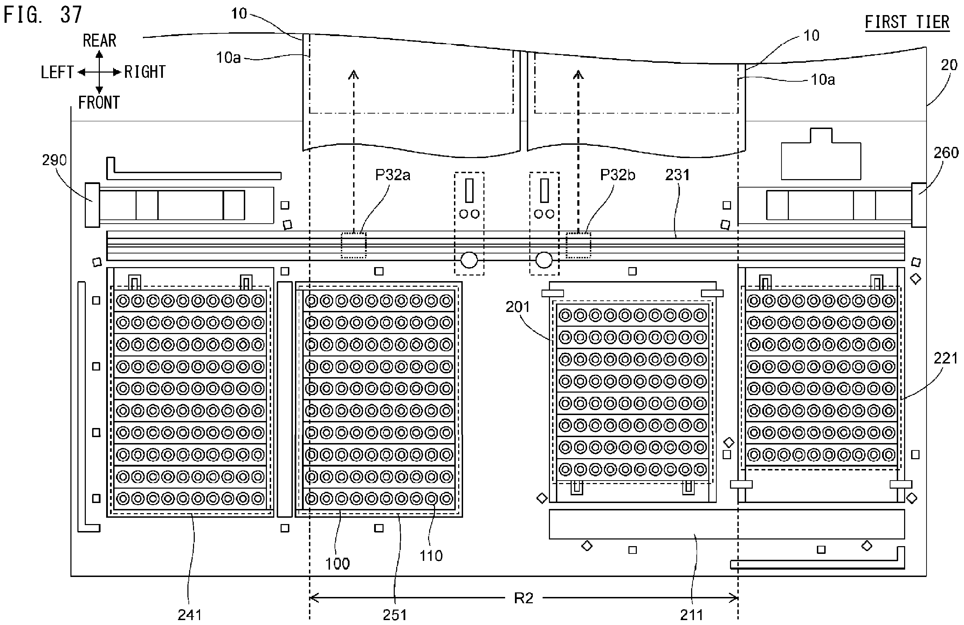

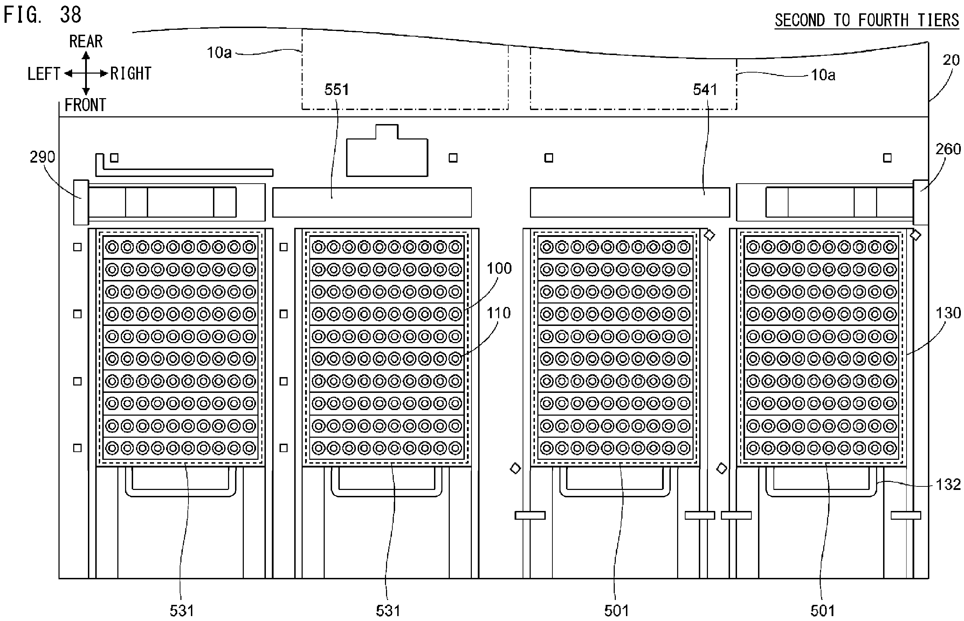

The transport unit 20 has first to fourth tiers. In the first tier, the placement regions 201, 221 and the collection regions 241, 251 (see FIG. 37) are disposed. In each of the second to the fourth tiers, the two placement regions 501 and the two collection regions 531 (see FIG. 38) are disposed. The placement regions 501 and the collection regions 531 in the second to the fourth tiers are opened forward through the opening 20a formed at the front side of the transport unit 20.

In a case where the specimen racks 100 are placed in the placement regions 501 in the second to the fourth tiers, the operator uses the rack holders 130 as in Embodiment 4. The operator sets empty rack holders 130 in the collection regions 531 in the second to the fourth tiers. Thus, the specimen rack 100 is transported by the transport unit 20, and measurement of the specimen in the specimen container 110 is started at the start position P32a, P32b (see FIG. 37) in front of the measurement units 10.

When necessary analyses for all the specimen containers 110 in one specimen rack 100 have ended, the specimen rack 100 is transported to the collection region 241, 251, 531 in the first to the fourth tiers. The operator takes out the specimen racks 100 transported to the collection regions 241, 251, 531.

FIG. 37 is a plan view schematically showing the number of the specimen racks 100 that can be stored in the first tier of the transport unit 20, and positions at which the measurement units 10, the placement regions 201, 221, and the collection regions 241, 251 are disposed.

The transport unit 20 of Embodiment 5 has the placement regions 201, 221 and the collection regions 241, 251 in the first tier. FIG. 37 shows a state where the maximum number of the specimen racks 100 are stored in each of the placement regions 201, 221 and the collection regions 241, 251. The configuration in front of the transport path 231 is the same as that of Embodiment 2 shown in FIG. 19. Therefore, up to eight specimen racks 100 can be stored in each of the placement regions 201, 221, and up to ten specimen racks 100 can be stored in each of the collection regions 241, 251.

The bottom surfaces 10a of the two measurement units 10 are disposed at the transport unit 20 in the rear of the transport path 231 as indicated by alternate long and short dash lines. The entirety of the placement region 201 and a part of the collection region 251 are disposed in front of the measurement units 10 (in the range R2 of the left-right width of the bottom surfaces 10a of the two measurement units 10). Thus, as in Embodiment 2, the width, in the left-right direction, of the specimen analyzer 1 can be reduced, so that the size of the specimen analyzer 1 can be reduced.

FIG. 38 is a plan view schematically showing the number of the specimen racks 100 that can be stored in the second to the fourth tiers of the transport unit 20, and positions at which the placement regions 501 and the collection regions 531 are disposed.

The transport unit 20 of Embodiment 5 includes the two placement regions 501 and the two collection regions 531 in each of the second to the fourth tiers. FIG. 38 shows a state where the maximum number of the specimen racks 100 are stored in each of the placement regions 501 and the collection regions 531. Up to ten specimen racks 100 can be stored in each of the placement regions 501 and the collection regions 531.

In FIG. 38, for convenience sake, the positions of the bottom surfaces 10a of the measurement units 10 are indicated by alternate long and short dash lines. In a planar view, the two placement regions 501 in each of the second to the fourth tiers are disposed at almost the same positions as the placement regions 201, 221 in the first tier, and the two collection regions 531 in each of the second to the fourth tiers are disposed at almost the same positions as the collection regions 241, 251 in the first tier.

Referring to FIGS. 37 and 38, when the operator places the specimen rack 100 in the placement region 201, 221, 501 in a state where the collection regions 241, 251, 531 are empty and empty rack holders 130 are set in the collection regions 531 in the second to the fourth tiers, the transport unit 20 starts transporting the specimen rack 100, and each measurement unit 10 measures the specimen. In a case where 76 specimen racks 100, that is, the maximum number of the specimen racks 100, are placed in the placement regions 201, 221, 501 at one time, when necessary analyses for all the specimen racks 100 have ended, the 76 specimen racks 100 are collected into the collection regions 241, 251, 531 in the first to the fourth tiers.

The total number of the specimen racks 100 that can be stored in all the collection regions 241, 251, 531 is larger, by four, than the total number of the specimen racks 100 that can be stored in all the placement regions 201, 221, 501. Therefore, the operator is allowed to further place four specimen racks 100 in the placement region 201, 221, 501 after the start of the process. In this case, when necessary processes for all the specimen racks 100 have ended, the 80 specimen racks 100 in total are collected into the collection regions 241, 251, 531.

Thus, since a lot of the specimen racks 100 can be stored in the placement regions 201, 221, 501 and the collection regions 241, 251, 531 in the first to the fourth tiers of the transport unit 20, the frequency at which the operator places the specimen racks 100 in the placement region 201, 221, 501 and the frequency at which the operator takes out the specimen racks 100 from the collection region 241, 251, 531, can be reduced.

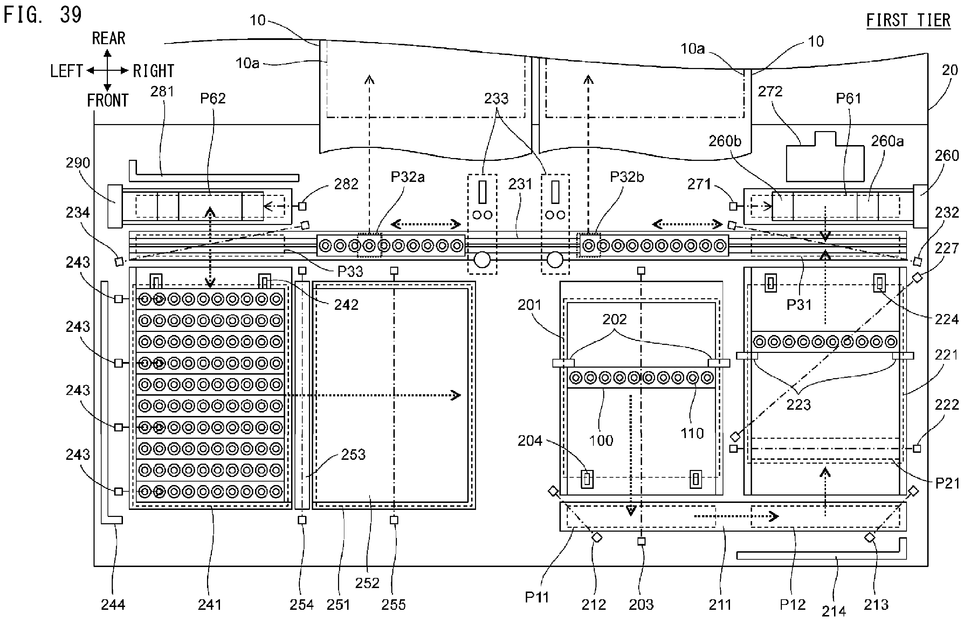

FIG. 39 is a plan view schematically showing a configuration of the first tier of the transport unit 20 according to Embodiment 5.

In the transport unit 20 of Embodiment 5, the configuration of the transport path 231 and the configuration in front of the transport path 231 are the same as the configuration of the transport path 231 and the configuration in front of the transport path 231 in Embodiment 2 shown in FIG. 20. However, a sensor 227 instead of the sensor 225 shown in FIG. 20 is disposed near the placement region 221. The sensor 227 is a transmission-type photoelectric sensor, and detects the specimen rack 100 positioned in the placement region 221. Furthermore, in the transport unit 20 of Embodiment 5, the configuration in the rear of the transport path 231 is the same as the configuration in the rear of the transport path 231 in Embodiment 4 shown in FIG. 32.

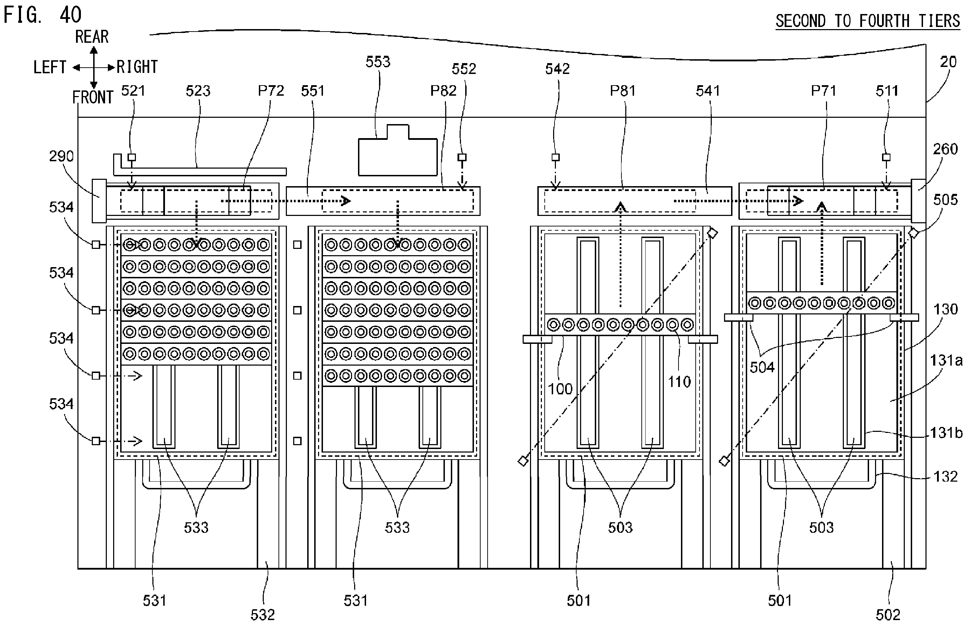

FIG. 40 is a plan view schematically showing a configuration of each of the second to the fourth tiers of the transport unit 20.

The transport unit 20 of Embodiment 5 is different from that of Embodiment 4 shown in FIG. 34 in that two combinations each formed of the placement region 501, the pair of support members 502, the ascending/descending portion 503, the transport mechanism 504, and the sensor 505 are disposed in the left-right direction, and two combinations each formed of the collection region 531, the pair of support members 532, the ascending/descending portion 533, and the four sensors 534 are disposed in the left-right direction, in Embodiment 5.

The transport unit 20 of Embodiment 5 is different from that of Embodiment 4 shown in FIG. 34 in that the transport unit 20 of Embodiment 5 includes a transport path 541, a sensor 542, a transport path 551, a sensor 552, and a transport mechanism 553, and includes a transport mechanism 523 instead of the transport mechanism 522.

The transport path 541 includes a conveyor belt that moves rightward and a motor for driving the conveyor belt, and is disposed in the rear of the left-side placement region 501 and leftward of the ascending/descending mechanism 260. The specimen rack 100 placed in the left-side placement region 501 is pushed out in the rearward direction, and transported to a position P81 at the left end of the transport path 541. The sensor 542 is a reflection-type photoelectric sensor, and detects the specimen rack 100 positioned at the position P81. The transport path 541 transports rightward the specimen rack 100 positioned at the position P81, and positions the specimen rack 100 at the ascending/descending position P71.

The transport mechanism 523 includes a member for pushing the side surface of the specimen rack 100 and a motor for driving the member. The transport mechanism 523 pushes out the specimen rack 100 positioned at the ascending/descending position P72 in the forward direction and transports the specimen rack 100 to the rear end of the collection region 531, and also pushes out the specimen rack 100 positioned at the ascending/descending position P72 in the rightward direction and transports the specimen rack 100 toward the transport path 551.

The transport path 551 includes a conveyor belt that moves rightward and a motor for driving the conveyor belt, and is disposed in the rear of the right-side collection region 531 and rightward of the ascending/descending mechanism 290. The transport path 551 transports rightward the specimen rack 100 transported from the ascending/descending position P72, and positions the specimen rack 100 at a position P82 at the right end of the transport path 551. The sensor 552 is a reflection-type photoelectric sensor, and detects the specimen rack 100 positioned at the position P82. The transport mechanism 553 includes a member for pushing the side surface, on the rear side, of the specimen rack 100 and a motor for driving the member, pushes out the specimen rack 100 positioned at the position P82 in the forward direction, and transports the specimen rack 100 to the rear end of the right-side collection region 531.

### <Effect of specimen analyzer according to Embodiment 5>

As shown in FIGS. 37 and 38, the transport unit 20 includes the placement region 201 (first placement region) which is disposed in front of the measurement units 10 and in which a plurality of the specimen racks 100 can be placed, the placement region 501 (second placement region) which is disposed in the up-down direction relative to the placement region 201 and in which a plurality of the specimen racks 100 can be placed, the placement region 221 which is disposed in the left-right direction relative to the placement region 201 and in which a plurality of the specimen racks 100 can be placed, and the placement region 501 which is disposed in the up-down direction relative to the placement region 221 and in which a plurality of the specimen racks 100 can be placed.

In this configuration, the two placement regions 201, 221 are disposed in the left-right direction in the first tier, and the two placement regions 501 are disposed in the left-right direction in each of the second to the fourth tiers. Thus, the number of the specimen racks 100 that can be placed can be further increased as compared with Embodiments 1 and 4.

### <Embodiment 6>

In Embodiment 6, the smear preparation device 2 is disposed near the specimen analyzer 1 of Embodiment 5. The specimen processing system 3 is configured by the specimen analyzer 1 and the smear preparation device 2. In Embodiment 6, four collection regions of the transport unit 60 are disposed in the up-down direction.

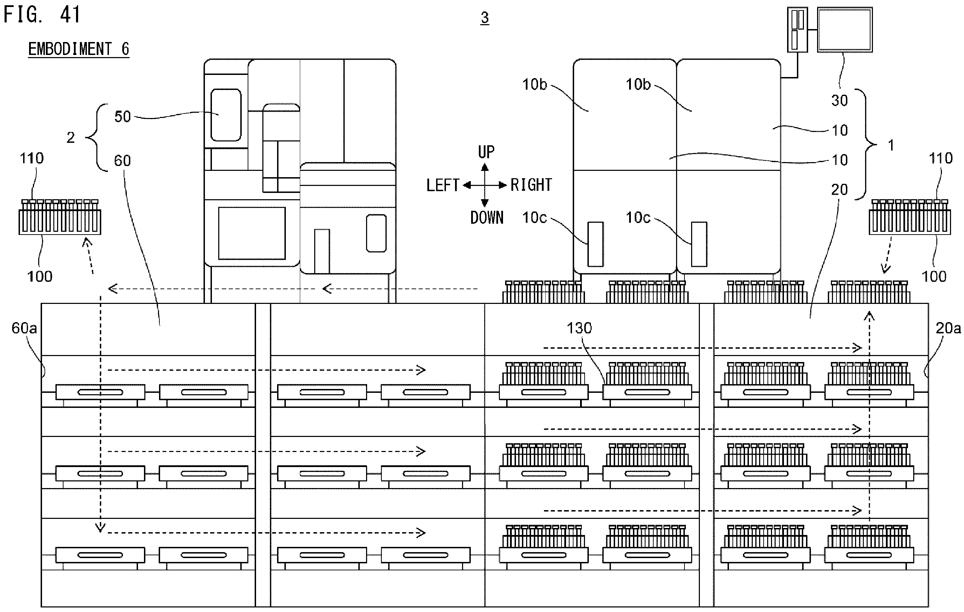

FIG. 41 is a side view schematically showing a configuration of a specimen processing system 3 according to Embodiment 6.

The specimen processing system 3 of Embodiment 6 includes the specimen analyzer 1 and the smear preparation device 2 aligned in the left-right direction so as to be adjacent to each other. The specimen analyzer 1 is different from that of Embodiment 5 shown in FIG. 36 in that four placement regions are disposed in each of the first to the fourth tiers of the transport unit 20 in Embodiment 6. The smear preparation device 2 is different from that of Embodiment 3 shown in FIG. 21 in that the rack 70 is omitted, and the transport unit 60 is elongated in the up-down direction and supports the lower portion of the smear preparation unit 50, in Embodiment 6. The transport unit 60 has first to fourth tiers, and the four collection regions are disposed in each of the first to the fourth tiers. The collection regions in the second to the fourth tiers of the transport unit 60 are opened forward through the opening 60a formed at the front side of the transport unit 60.

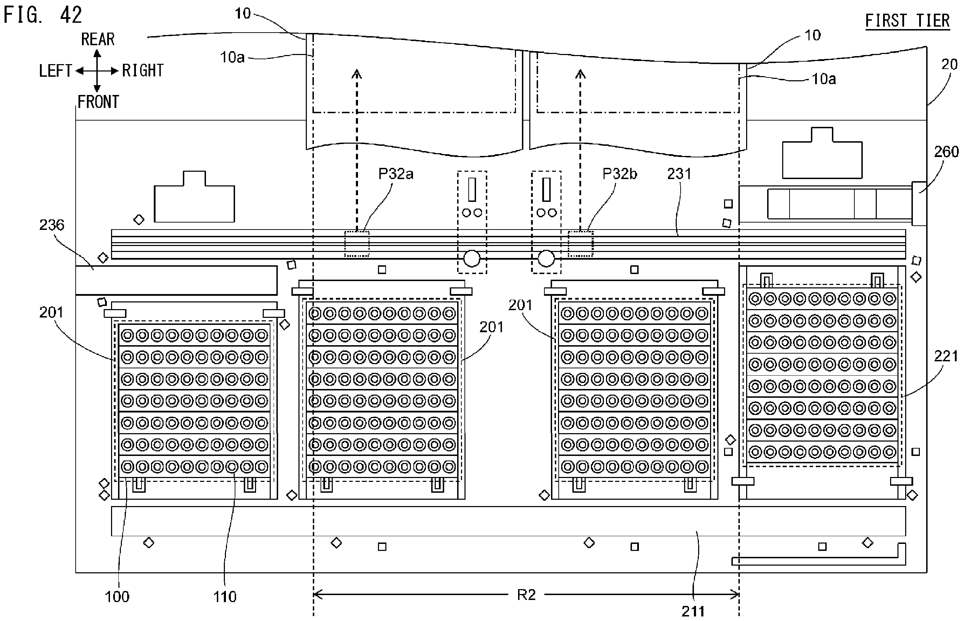

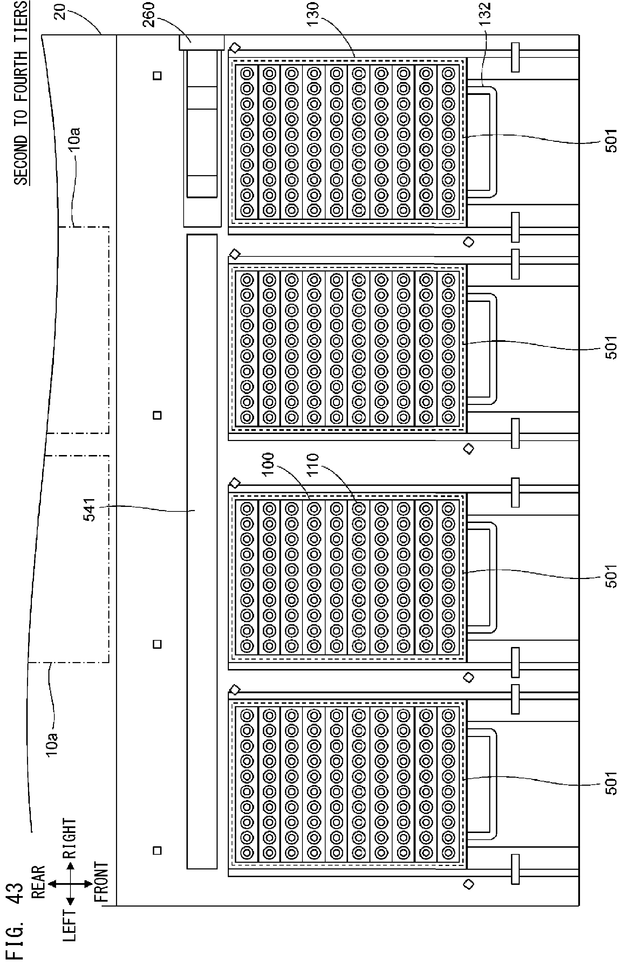

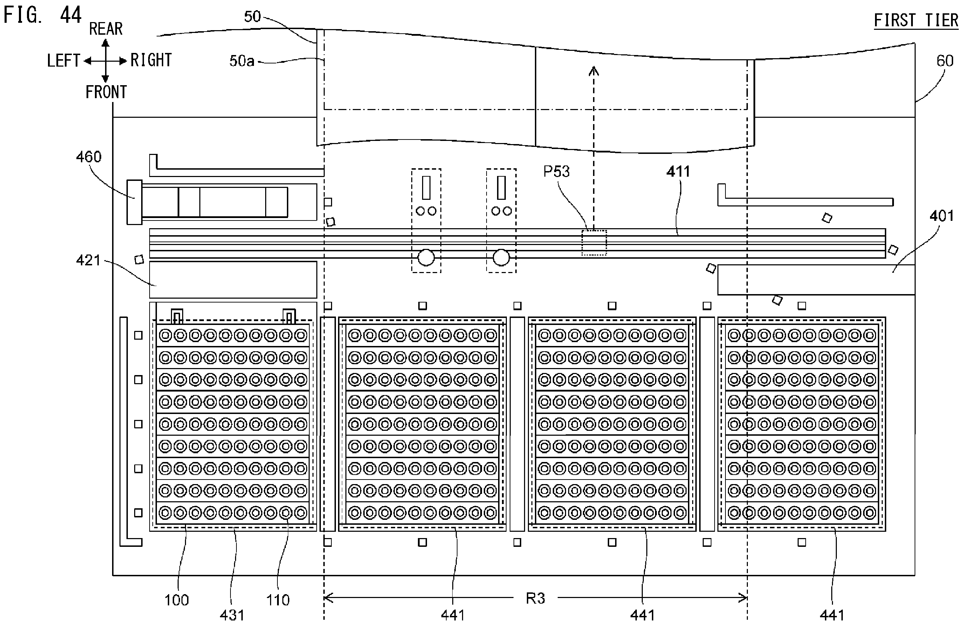

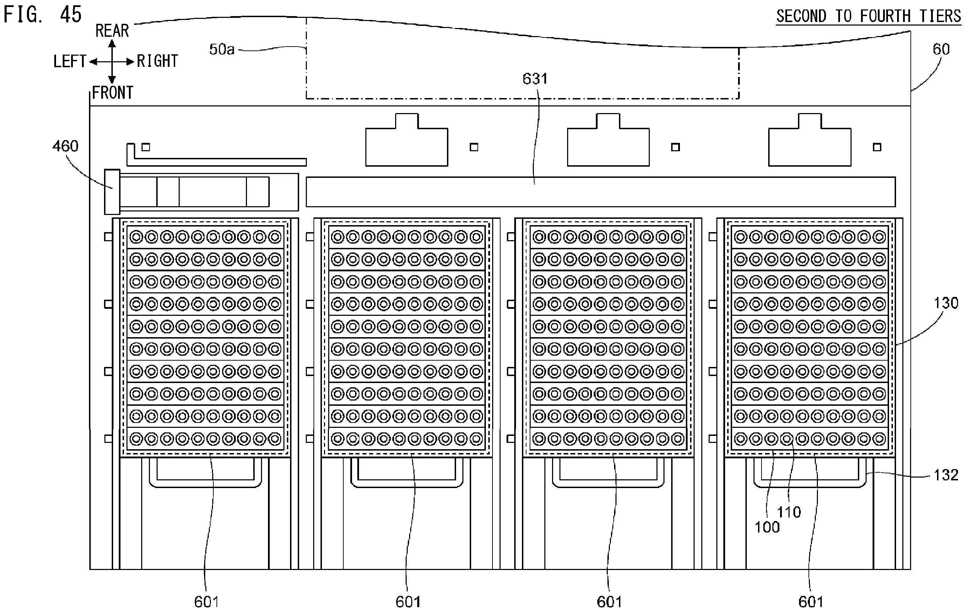

The operator places the specimen racks 100 in the placement regions 201, 221, 501 (see FIGS. 42 and 43) in the first to the fourth tiers of the transport unit 20, and sets empty rack holders 130 in collection regions 601 (see FIG. 45) in the second to the fourth tiers of the transport unit 60. Thus, the specimen rack 100 is transported by the transport units 20, 60, measurement of the specimen in the specimen container 110 is started at the start position P32a, P32b (see FIG. 42) in front of the measurement units 10, and preparation of a smear of the specimen in the specimen container 110 is started at the start position P53 (see FIG. 44) in front of the smear preparation unit 50.

When necessary processes for all the specimen containers 110 in one specimen rack 100 have ended, the specimen rack 100 is transported to the collection region 431, 441, 601 (see FIGS. 44 and 45) in the first to the fourth tiers of the transport unit 60. The operator takes out the specimen racks 100 transported into the collection regions 431, 441, 601 of the transport unit 60.

FIG. 42 is a plan view schematically showing the number of the specimen racks 100 that can be stored in the first tier of the transport unit 20, and positions at which the measurement units 10 and the placement regions 201, 221 are disposed.

The transport unit 20 of Embodiment 6 includes the three placement regions 201 and the one placement region 221 in the first tier, as in Embodiment 3 shown in FIG. 22. FIG. 42 shows a state where the maximum number of the specimen racks 100 are stored in each of the placement regions 201, 221. Up to seven specimen racks 100 can be stored in the placement region 201 disposed at the left end, up to eight specimen racks 100 can be stored in each of the two placement regions 201 disposed at the center, and up to eight specimen racks 100 can be stored in the placement region 221 disposed at the right end.

The bottom surfaces 10a of the two measurement units 10 are disposed at the transport unit 20 in the rear of the transport path 231 as indicated by alternate long and short dash lines. The two placement regions 201 disposed at the center are disposed in front of the measurement units 10 (in the range R2 of the left-right width of the bottom surfaces 10a of the two measurement units 10). Thus, the width, in the left-right direction, of the specimen analyzer 1 can be reduced, so that the size of the specimen analyzer 1 can be reduced.

FIG. 43 is a plan view schematically showing the number of the specimen racks 100 that can be stored in the second to the fourth tiers of the transport unit 20, and positions at which the placement regions 501 are disposed.

The transport unit 20 of Embodiment 6 includes the four placement regions 501 disposed in the left-right direction in each of the second to the fourth tiers. FIG. 43 shows a state where the maximum number of the specimen racks 100 are stored in the four placement regions 501. Up to ten specimen racks 100 can be stored in each of the four placement regions 501.

FIG. 44 is a plan view schematically showing the number of the specimen racks 100 that can be stored in the first tier of the transport unit 60, and positions at which the smear preparation unit 50 and the collection regions 431, 441 are disposed.

The transport unit 60 of Embodiment 6 includes the one collection region 431 and the three collection regions 441 in the first tier, as in Embodiment 3 shown in FIG. 23. FIG. 44 shows a state where the maximum number of the specimen racks 100 are stored in the collection regions 431, 441. Up to nine specimen racks 100 can be stored in each of the collection regions 431, 441.

The bottom surface 50a of the smear preparation unit 50 is disposed at the transport unit 60 in the rear of the transport path 411 as indicated by an alternate long and short dash line. The three collection regions 441 on the right side are disposed in front of the smear preparation unit 50 (in the range R3 of the left-right width of the bottom surface 50a of the smear preparation unit 50). Thus, the width, in the left-right direction, of the smear preparation device 2 can be reduced, so that the size of the smear preparation device 2 can be reduced

FIG. 45 is a plan view schematically showing the number of the specimen racks 100 that can be stored in the second to the fourth tiers of the transport unit 60, and positions at which the collection regions 601 are disposed.

The transport unit 60 of Embodiment 6 includes the four collection regions 601 disposed in the left-right direction in each of the second to the fourth tiers. FIG. 45 shows a state where the maximum number of the specimen racks 100 are stored in the collection regions 601. Up to ten specimen racks 100 can be stored in each of the four collection regions 601.

Referring to FIGS. 42 to 45, when the operator places the specimen rack 100 in the placement region 201, 221, 501 in the first to the fourth tiers of the transport unit 20, the transport unit 20 starts transporting the specimen rack 100, the measurement unit 10 measures the specimen, and the control unit 30 analyzes the specimen. Subsequently, the transport unit 60 transports the specimen rack 100, and the smear preparation unit 50 prepares a smear. In a case where 151 specimen racks 100, that is, the maximum number of the specimen racks 100, are placed in the placement regions 201, 221, 501 at one time, when necessary processes for all the specimen racks 100 have ended, the 151 specimen racks 100 in total are collected into the collection regions 431, 441, 601.

The total number (156) of the specimen racks 100 that can be stored in all the collection regions is larger, by five, than the total number (151) of the specimen racks 100 that can be stored in all the placement regions. Therefore, the operator is allowed to further place the five specimen racks 100 in the placement region 201, 221, 501 after the start of the process. In this case, when necessary processes for all the specimen racks 100 have ended, the 156 specimen racks 100 in total are collected into the collection regions 431, 441, 601.

Thus, since a lot of the specimen racks 100 can be stored in the placement regions 201, 221, 501 and the collection regions 431, 441, 601 of the transport units 20, 60, the frequency at which the operator places the specimen racks 100 in the placement region 201, 221, 501 and the frequency at which the operator takes out the specimen racks 100 from the collection region 431, 441, 601 can be reduced.

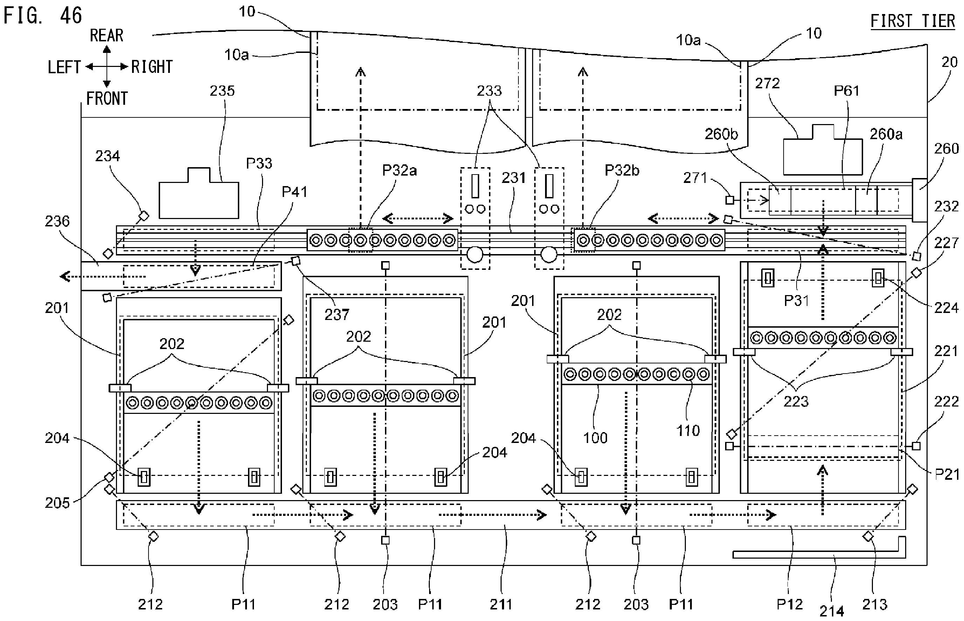

FIG. 46 is a plan view schematically showing a configuration of the first tier of the transport unit 20 according to Embodiment 6.

In the first tier of the transport unit 20 of Embodiment 6, the ascending/descending mechanism 260, the sensor 271, and the transport mechanism 272 of Embodiment 5 shown in FIG. 39 are additionally disposed in the configuration of Embodiment 3 shown in FIG. 24. The specimen rack 100 placed in the placement region 201, 221 in the first tier is positioned at the start position P32a, P32b through the position P31 as in Embodiment 3. The specimen racks 100 transported from the second to the fourth tiers by the ascending/descending mechanism 260 are positioned at the start positions P32a, P32b through the ascending/descending position P61 and the position P31, as in Embodiment 5.

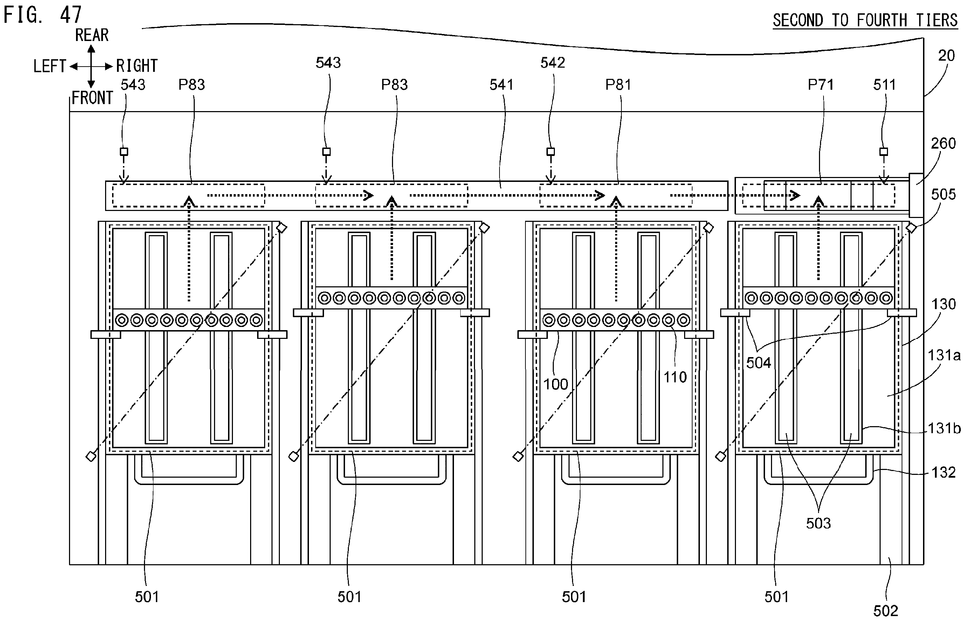

FIG. 47 is a plan view schematically showing a configuration of each of the second to the fourth tiers of the transport unit 20.

The second to the fourth tiers of the transport unit 20 of Embodiment 6 are different from those of Embodiment 5 shown in FIG. 40 in that the placement regions 501, the support members 502, the ascending/descending portions 503, the transport mechanisms 504, and the sensors 505 are disposed instead of the collection regions 531, the support members 532, the ascending/descending portions 533, and the sensors 534. The left end of the transport path 541 extends to a portion near the right end of the transport unit 60. The positions, on the transport path 541, in the rear of the two placement regions 501 on the left side are positions P83. Sensors 543 for detecting the specimen racks 100 positioned at the positions P83 are disposed near the two positions P83.

The specimen rack 100 disposed in the placement region 501 at the right end is positioned at the ascending/descending position P71 by the transport mechanism 504. The specimen racks 100 placed in the three placement regions 501 on the left side are transported to the positions P81, P83 on the transport path 541 by the transport mechanisms 504, and positioned at the ascending/descending position P71 by the transport path 541. The specimen rack 100 positioned at the ascending/descending position P71 is transported to the first tier by the ascending/descending mechanism 260.

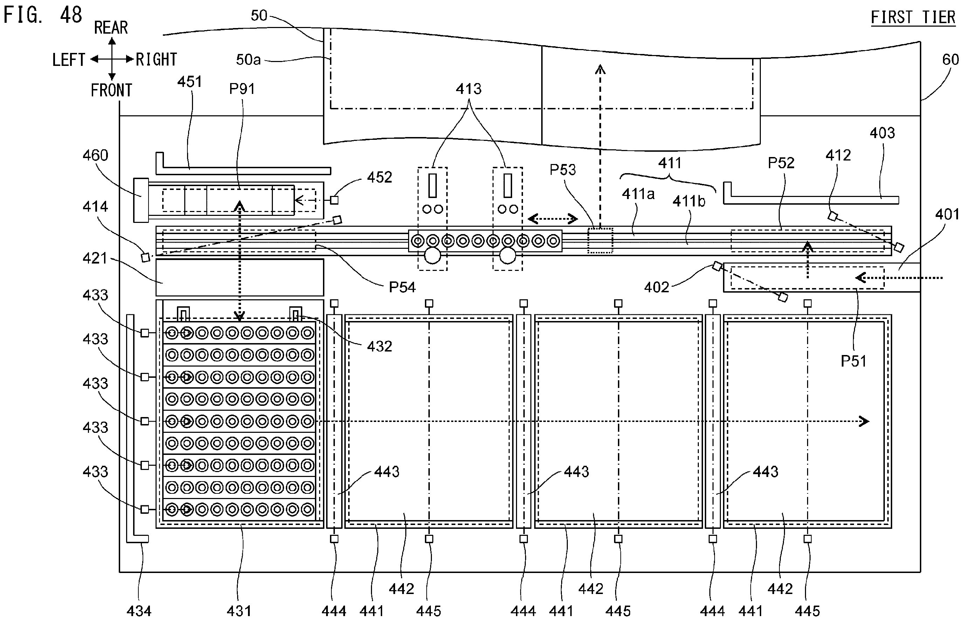

FIG. 48 is a plan view schematically showing a configuration of the first tier of the transport unit 60 according to Embodiment 6.

In the first tier of the transport unit 60 of Embodiment 6, the transport mechanism 415 is omitted, and a transport mechanism 451, a sensor 452, and an ascending/descending mechanism 460 are additionally disposed in the configuration of Embodiment 3 shown in FIG. 25. The transport mechanism 451, the sensor 452, and the ascending/descending mechanism 460 have the same configurations as the transport mechanism 281, the sensor 282, and the ascending/descending mechanism 290, respectively, of Embodiment 5 shown in FIG. 39. Thus, the specimen rack 100 transported to the position P54 at the left end of the transport path 411 is pushed forward by the transport mechanism 451, and transported to the collection region 431 at the left end. Thereafter, the specimen racks 100 in the collection region 431 are transported to the three collection regions 441 on the right side. The specimen rack 100 transported to the position P54 is pushed rearward by the transport mechanism 451, positioned at an ascending/descending position P91 of the ascending/descending mechanism 460, and transported to the second to the fourth tiers by the ascending/descending mechanism 460.

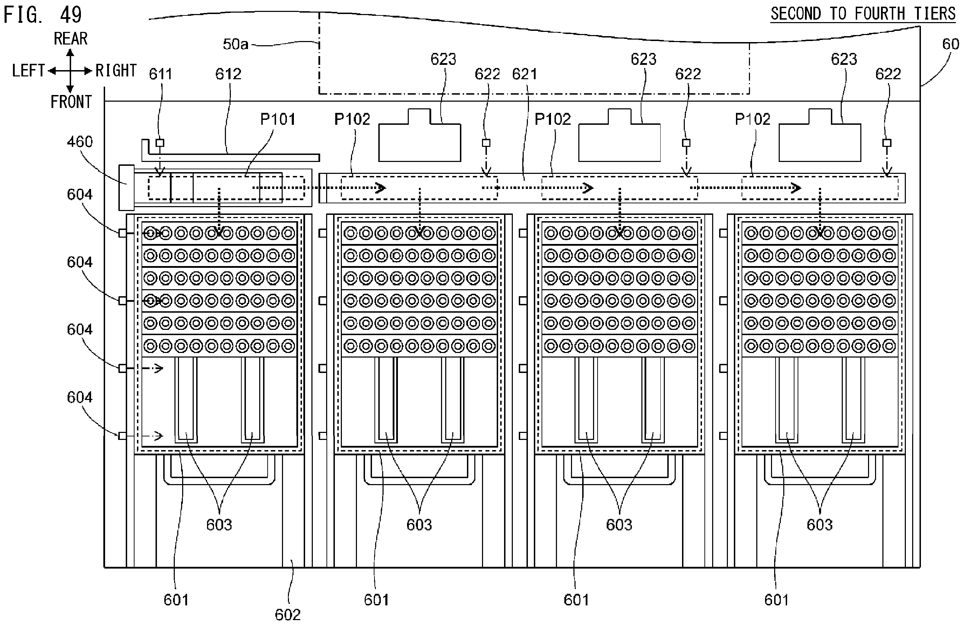

FIG. 49 is a plan view schematically showing a configuration of each of the second to the fourth tiers of the transport unit 60.

The second to the fourth tiers of the transport unit 60 of Embodiment 6 each include four combinations each formed of the collection region 601, a pair of support members 602, an ascending/descending portion 603, and four sensors 604, and these combinations are disposed in the left-right direction. The collection region 601, the support members 602, the ascending/descending portion 603, and the sensors 604 have the same configurations as the collection region 531, the support members 532, the ascending/descending portion 533, and the sensors 534, respectively, of Embodiment 5 shown in FIG. 40.

The ascending/descending mechanism 460, the sensor 611, and the transport mechanism 612 are disposed in the rear of the collection region 601 disposed at the left end, and a transport path 621 extending in the left-right direction is disposed rightward of the ascending/descending mechanism 460. The sensor 622 and the transport mechanism 623 are disposed in the rear of each of the three collection regions 601 on the right side. The sensor 611 and the transport mechanism 612 have the same configurations as the sensor 521 and the transport mechanism 523, respectively, of Embodiment 5 shown in FIG. 40. The sensor 622 and the transport mechanism 623 have the same configurations as the sensor 552 and the transport mechanism 553, respectively, shown in FIG. 40.

The specimen rack 100 transported from the first tier and positioned at an ascending/descending position P101 is pushed forward by the transport mechanism 612 and transported to the collection region 601 disposed at the left end. The specimen rack 100 positioned at the ascending/descending position P101 is transported rightward by the transport mechanism 612 and the transport path 621, and positioned at any of three positions P102. The specimen rack 100 positioned at the position P102 is pushed forward by the transport mechanism 623 and transported to the collection region 601.

### <Effects of specimen analyzer and specimen processing system according to Embodiment 6>

The specimen processing system 3 includes the specimen analyzer 1 and the smear preparation device 2.

In this configuration, both analysis of a specimen and preparation of a smear can be performed.

The transport unit 60 includes the collection regions 441 (third collection region) which are disposed in front of the smear preparation device 2 and in each of which a plurality of the specimen racks 100 can be collected, the collection regions 601 (fourth collection region) which are disposed in the up-down direction relative to the collection regions 441 and in each of which a plurality of the specimen racks 100 can be collected, the collection region 431 which is disposed in the left-right direction relative to the collection regions 441 and in which a plurality of the specimen racks 100 can be collected, and the collection region 601 which is disposed in the up-down direction relative to the collection region 431 and in which a plurality of the specimen racks 100 can be placed.

In this configuration, since the transport unit 60 includes the collection regions 441 and the collection regions 601, after the specimen racks 100 have been collected into all the collection regions 441, 601, the operator is allowed to take out the specimen racks 100, so that the frequency at which the operator takes out the specimen racks 100 can be reduced. Since the collection region 441 is disposed in front of the smear preparation unit 50, the operator is allowed to take out the specimen racks 100 and perform an operation on the smear preparation unit 50 at the same place, thereby enhancing workability.

### <Examination of the number of specimens that can be placed and specimen processing rate>

As described in Embodiments 1 to 6, the specimen analyzer 1 described above is configured such that a lot of the specimen racks 100 and a lot of the specimen containers 110 can be placed in the specimen analyzer 1. Thus, the frequency at which the operator places the specimen racks 100 in the placement region can be reduced. Meanwhile, in the specimen analyzer 1, it is important to analyze specimens at a high rate. However, in a case where specimens are analyzed at a high rate, the specimen racks 100 flow fast from the placement region to the collection region. Therefore, the frequency at which the operator places the specimen racks 100 in the placement region is increased.

Under such circumstances, the present inventors have calculated a placement frequency index representing the frequency at which the operator places the specimen containers 110 in the specimen analyzer 1, and examined a relationship between the number of the specimen containers 110 that can be placed in the specimen analyzer 1 and a rate (the number of specimens that can be analyzed per one hour) at which the specimen analyzer 1 performs the process. Such examination will be described below.

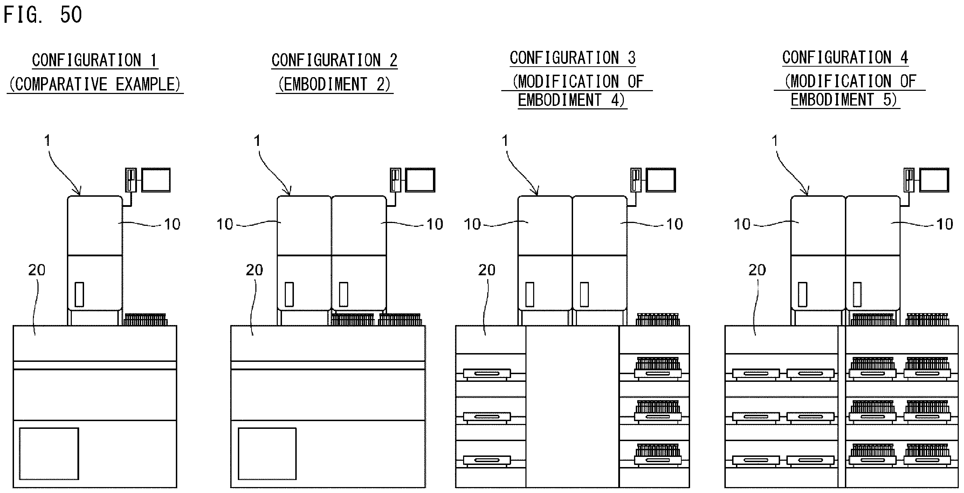

FIG. 50 schematically illustrates Configurations 1 to 4 of the specimen analyzer 1 having been mainly examined by the present inventors in the examination of the number of the specimen containers 110 that can be placed in the specimen analyzer 1 and the processing rate.

The configurations 1 to 4 are as follows.

### (Configuration 1: Comparative example)

- One measurement unit 10
- One array of placement region in one tier
- Ten specimen racks 100 were able to be placed (100 specimens were able to be placed)
- 100 specimens were able to be analyzed per one hour

### (Configuration 2: Embodiment 2)

- Two measurement units 10
- Two arrays of placement regions in one tier
- 16 specimen racks 100 were able to be placed (160 specimens were able to be placed)
- 200 specimens were able to be analyzed per one hour

### (Configuration 3: Modification of Embodiment 4)

- Two measurement units 10
- One array of placement region in each of the first to the fourth tiers
- 40 specimen racks 100 were able to be placed (400 specimens were able to be placed)
- 200 specimens were able to be analyzed per one hour

Configuration 3 was different from the configuration of Embodiment 4 shown in FIG. 28 in that the number of the measurement units 10 was two in Configuration 3.

### (Configuration 4: Modification of Embodiment 5)

- Two measurement units 10
- Two arrays of placement regions in each of the first to the fourth tiers
- 80 specimen racks 100 were able to be placed (800 specimens were able to be placed)
- 200 specimens were able to be analyzed per one hour

Configuration 4 was different from the configuration of Embodiment 5 shown in FIG. 36 in that the ten specimen racks 100 were able to be placed in each of the two placement regions in the first tier in Configuration 4.

The present inventors calculated the placement frequency index by dividing the number of the specimens processed per one hour by the number of the specimens that were able to be placed, for the specimen analyzer 1 of each of Configurations 1 to 4 described above. The placement frequency indexes of Configurations 1 to 4 were 1.00, 1.25, 0.50, and 0.25, respectively. The less the placement frequency index was, the less the frequency at which the operator placed the specimen containers 110 was, and the better the result was.

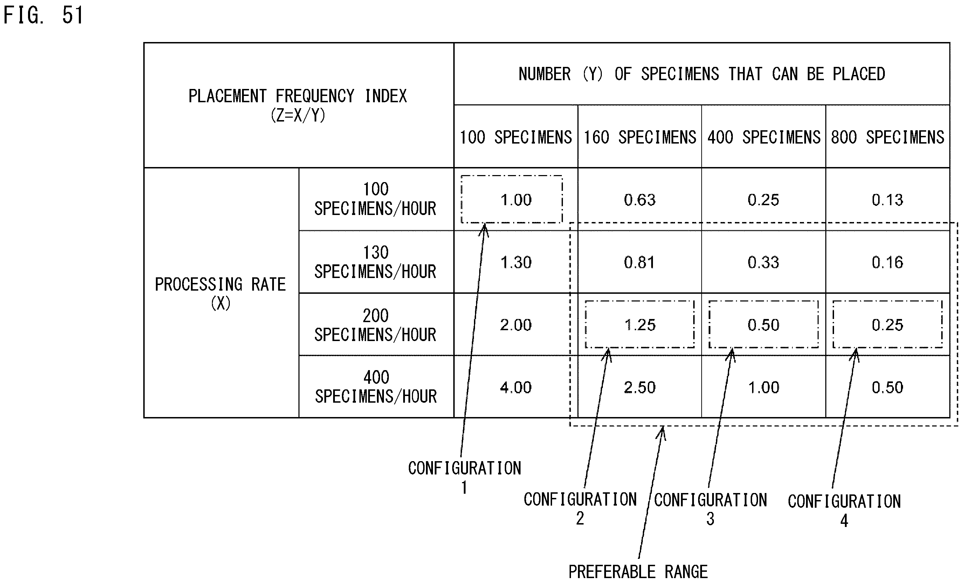

FIG. 51 shows a table that collectively indicates values of the placement frequency indexes obtained from Configurations 1 to 4 described above in this examination.

The values of the placement frequency indexes calculated in Configurations 1 to 4 are surrounded by alternate long and short dash lines. The other placement frequency indexes represent, for example, values obtained by increasing or reducing the rate at which the specimen analyzer 1 performed the process in Configurations 1 to 4 described above.

According to this table, by reducing the processing rate and increasing the number of specimens that can be placed, the placement frequency index can be reduced. However, in the specimen analyzer 1, in addition to the placement frequency index being small, the specimen processing rate is required to be increased, and the number of specimens that can be placed is required to be increased while an installation area is reduced. Therefore, the present inventors have determined a range surrounded by dashed lines in FIG. 51 as preferable ranges of the number of the specimen containers 110 that can be placed at one time, and the number of the specimens that can be analyzed per one hour.

If the number of the specimen containers 110 that can be placed at one time is less than 160, the placement frequency index may become high. For example, in a case where the number of the specimen containers 110 that can be placed at one time is 100 and the number of the specimens that can be analyzed per one hour is 400, the placement frequency index is 4.00. This means that the operator needs to place the specimen racks 100 four times per one hour, and a smooth performance of tasks for the testing may be hindered. Meanwhile, in a case where the number of the specimen containers 110 that can be placed at one time is greater than 800, an area in which the specimen analyzer 1 is installed is increased, and it may be difficult to secure an installation place in a laboratory. In a case where the number of the specimens that can be analyzed per one hour is less than 130, the analysis may not be performed in time in a test facility having a relatively large scale. Meanwhile, in a case where the number of the specimens that can be analyzed per one hour is greater than 400, the number of the specimen containers 110 that can be placed at one time needs to be increased in order to reduce the placement frequency index, and an area in which the specimen analyzer 1 is installed may be increased.

### <Effects according to this examination>

As shown in FIG. 51, the number of the specimen containers 110 that can be placed at one time in all the placement regions (first placement region and second placement region) disposed in the transport unit 20 of the specimen analyzer 1 is preferably 160 or more and 800 or less. Furthermore, the number of the specimens that can be analyzed per one hour by the specimen analyzer 1 is preferably 130 or more and 400 or less. Thus, the frequency at which the operator places the specimen containers 110 can be reduced and the specimen processing rate can be increased while an area in which the specimen analyzer 1 is installed is reduced.

### <Other modifications>

The specimen analyzer 1 is not limited to a blood cell counter for counting blood cells in a specimen. The specimen analyzer 1 may be, for example, an analyzer such as a urine analyzer, a biochemical analyzer, an immunoassay apparatus, and a blood coagulation measurement apparatus. Also in these cases, in front of the transport unit disposed so as to correspond to each analyzer, the placement regions and the collection regions may be disposed in the left-right direction or the up-down direction as in Embodiments 1, 2, 4, and 5, and the placement regions may be disposed in the left-right direction or the up-down direction as in Embodiments 3 and 6.

The specimen processing system 3 may include at least one analyzer among the analyzers described above as examples, instead of or in addition to the smear preparation device 2. Thus, various analyses can be performed for the specimens. In this case, the collection regions may be disposed in the left-right direction or the up-down direction in the transport unit disposed so as to correspond to the analyzer disposed at the most downstream side, as in Embodiments 3 and 6.

In Embodiments 1, 2, and 5, the specimen rack 100 placed in the placement region 201 on the left side may be pushed out in the rearward direction, and transported to the transport path 231. In this case, the specimen rack 100 placed in the placement region 221 on the right side may be transported through the transport path 211 to the placement region 201 on the left side. The specimen rack 100 positioned in the transport path 231 in the rear of the collection region 251 on the right side may be pushed out in the forward direction, and transported into the collection region 251. In this case, the specimen racks 100 collected into the collection region 251 may be transported to the collection region 241 on the left side.

In Embodiments 3 and 6, the specimen racks 100 placed in the three placement regions 201 on the left side may be pushed out in the rearward direction, and transported to the transport paths 231, 236. The specimen racks 100 positioned in the transport paths 401, 411 in the rear of the three collection regions 441 on the right side may be pushed out in the forward direction, and transported into the collection regions 441.

In Embodiments 4 to 6, the second to the fourth tiers of the transport unit 20 may be disposed above the first tier at which the transport path 231 is disposed. In Embodiment 6, the second to the fourth tiers of the transport unit 60 may be disposed above the first tier at which the transport path 411 is disposed.

The ascending/descending mechanism 260, 290, 460 moves the specimen rack 100 upward and downward by moving the support portions for supporting the lower surface of the specimen rack 100 in the up-down direction. However, the configuration is not limited thereto, and the ascending/descending mechanism 260, 290, 460 may move the specimen rack 100 upward and downward by moving a holding portion for holding the side surfaces, in the left-right direction or the front-rear direction, of the specimen rack 100 in the up-down direction.

The placement regions 201, 221 and the collection regions 241, 431 are each formed of the plate member having the upper surface parallel to the horizontal plane. However, the placement regions 201, 221 and the collection regions 241, 431 may be each formed of a conveyor belt that moves in the front-rear direction. The collection regions 251, 441 are each formed of the conveyor belt that moves in the left-right direction. However, the collection regions 251, 441 may be each formed of a plate member having the upper surface parallel to the horizontal plane. In this case, for example, the specimen racks 100 are transported to the collection region 251, 441 by a transport mechanism that pushes out the specimen racks 100 in the rightward direction.

In Embodiments 1 and 2, as shown in FIG. 4, the placement regions 201, 221 are connected to each other at the position P11 (transport start position) on the placement region 201 side and the position P12 (transport end position) of the placement region 221. However, the configuration is not limited thereto, and the placement regions 201, 221 may be connected to each other at a predetermined position (transport start position) in the placement region 201 and a predetermined position (transport end position) in the placement region 221. In this case, for example, a transport path having an upper surface parallel to the horizontal plane is disposed between the two predetermined positions, and the specimen rack 100 is transported from the predetermined position in the placement region 201 to the predetermined position in the placement region 221 by a transport mechanism which has a member for pushing the side surface, on the left side, of the specimen rack 100.

In Embodiments 1, 2, and 5, the two placement regions are disposed in the left-right direction in one tier. However, three or more placement regions may be disposed in the left-right direction. In Embodiments 1, 2, and 5, the two collection regions are disposed on the left and the right sides in one tier. However, three or more collection regions may be disposed in the left-right direction.

In Embodiments 3 and 6, the four placement regions are disposed in the left-right direction in one tier of the transport unit 20. However, five or more placement regions may be disposed in the left-right direction. In Embodiments 3 and 6, the four collection regions are disposed in the left-right direction in one tier of the transport unit 60. However, five or more collection regions may be disposed in the left-right direction.

In Embodiments 3 to 6, the placement regions and the collection regions are disposed in each of the four tiers. However, the placement regions and the collection regions may be disposed in each of five or more tiers.

Various modifications of each of the embodiments of the present invention may be made as appropriate without departing from the scope of the technical idea defined by the claims.

### [Remarks]

The present disclosure includes following items 1-40.

Item 1: A specimen analyzer that uses a specimen rack in which a plurality of specimen containers can be held to analyze a specimen in each of the specimen containers, the specimen analyzer comprising:
a measurement unit configured to measure the specimen; and
a transport unit comprising a first placement region which is disposed in front of the measurement unit and in which a plurality of the specimen racks can be placed, and a second placement region which is disposed in a left-right direction relative to the first placement region and in which a plurality of the specimen racks can be placed, the transport unit configured to transport the specimen racks placed in the first placement region and the second placement region to a start position at which the measurement unit starts measurement.

Item 2: A specimen analyzer that uses a specimen rack in which a plurality of specimen containers can be held to analyze a specimen in each of the specimen containers, the specimen analyzer comprising:
a measurement unit configured to measure the specimen; and
a transport unit comprising a first placement region which is disposed in front of the measurement unit and in which a plurality of the specimen racks can be placed, and a second placement region which is disposed in an up-down direction relative to the first placement region and in which a plurality of the specimen racks can be placed, the transport unit configured to transport the specimen racks placed in the first placement region and the second placement region to a start position at which the measurement unit starts measurement.

Item 3: The specimen analyzer of item 1 or 2, wherein
the transport unit comprises a transport path including the start position, and
the transport path extends in the left-right direction between the measurement unit and the first placement region.

Item 4: The specimen analyzer of item 3, wherein the transport unit comprises a transport portion configured to transport the specimen racks placed in the first placement region and the second placement region to a predetermined position which is on the transport path and distant from the start position.

Item 5: The specimen analyzer of item 4, wherein the transport portion transports the specimen racks placed in the first placement region and the second placement region to the predetermined position that is a single position.

Item 6: The specimen analyzer of item 1, wherein
the transport unit comprises a transport path including the start position,
the transport path extends in the left-right direction between the measurement unit, and the first placement region and the second placement region,
the second placement region is connected to a predetermined position which is on the transport path and distant from the start position,
the first placement region and the second placement region are connected to each other at a transport start position on the first placement region side and a transport end position on the second placement region side, and
the transport unit comprises
   a first transport portion configured to transport the specimen rack in the second placement region to the predetermined position, and
   a second transport portion configured to transport the specimen rack from the transport start position to the transport end position.

Item 7: The specimen analyzer of item 6, wherein the transport unit comprises a third transport portion configured to transport the specimen rack placed in the first placement region, to the transport start position.

Item 8: The specimen analyzer of item 7, wherein the first transport portion and the third transport portion transport the specimen racks in opposite directions, respectively.

Item 9: The specimen analyzer of item 1, wherein
the transport unit comprises a second transport path configured to transport the specimen rack placed in the first placement region, to the second placement region, and
the transport unit transports the specimen rack placed in the first placement region to the start position through the second transport path and the second placement region, and transports the specimen rack placed in the second placement region to the start position without causing the specimen rack to pass through the second transport path and the first placement region.

Item 10: The specimen analyzer of item 1, wherein
the transport unit comprises
a transport path extending in the left-right direction between the measurement unit, and the first placement region and the second placement region, the transport path including the start position,
a first transport portion configured to transport forward or rearward the specimen rack in the first placement region,
a second transport portion which is disposed at front ends of the first placement region and the second placement region, the second transport portion configured to transport the specimen rack between the first placement region and the second placement region, and
a third transport portion configured to transport the specimen rack in the second placement region in a direction opposite to a direction in which the first transport portion transports the specimen rack.

Item 11: The specimen analyzer of item 1, comprising:
a first transport portion configured to transport the specimen rack placed in the first placement region;
a second transport portion configured to transport the specimen rack placed in the second placement region;
a first detector configured to detect the specimen rack placed in the first placement region;
a second detector configured to detect the specimen rack placed in the second placement region; and
a controller configured to control the first and the second transport portions so as to cause the first transport portion to transport the specimen rack when the first detector detects the specimen rack, and cause the second transport portion to transport the specimen rack when the second detector detects the specimen rack.

Item 12: The specimen analyzer of item 2, wherein
the transport unit comprises a transport path including the start position,
the transport path extends in a left-right direction between the measurement unit and the first placement region, and
the transport unit comprises
   a first transport portion configured to transport the specimen rack placed in the second placement region to a position which is the same height level with the transport path, and
   a second transport portion configured to transport the specimen rack transported by the first transport portion to a predetermined position which is on the transport path and distant from the start position.

Item 13: The specimen analyzer of item 12, wherein the transport unit comprises a third transport portion configured to transport the specimen rack placed in the second placement region to a transport start position at which the first transport portion starts transporting.

Item 14: The specimen analyzer of item 13, wherein the second transport portion and the third transport portion transport the specimen racks in opposite directions, respectively.

Item 15: The specimen analyzer of item 1, wherein the transport unit further comprises a first collection region which is disposed in front of the measurement unit and in which a plurality of the specimen racks can be collected, and a second collection region which is disposed in the left-right direction relative to the first collection region and in which a plurality of the specimen racks can be collected.

Item 16: The specimen analyzer of item 2, wherein the transport unit further comprises a first collection region which is disposed in front of the measurement unit and in which a plurality of the specimen racks can be collected, and a second collection region which is disposed in the up-down direction relative to the first collection region and in which a plurality of the specimen racks can be collected.

Item 17: The specimen analyzer of item 15 or 16, wherein
the transport unit comprises a transport path including the start position, and
the transport path extends in the left-right direction between the measurement unit and the first collection region.

Item 18: The specimen analyzer of item 15 or 16, wherein a number of the specimen racks which can be placed in a placement region of the transport unit and a number of the specimen racks which can be collected in a collection region of the transport unit are equal to each other.

Item 19: The specimen analyzer of item 15 or 16, wherein a number of the specimen racks which can be collected in a collection region of the transport unit is larger than a number of the specimen racks which can be placed in a placement region of the transport unit.

Item 20: The specimen analyzer of item 17, wherein the transport unit comprises a transport portion configured to transport the specimen rack positioned at a predetermined position which is on the transport path and distant from the start position to the first collection region and the second collection region.

Item 21: The specimen analyzer of item 15, wherein
the transport unit comprises a transport path including the start position;
the transport path extends in the left-right direction between the measurement unit, and the first collection region and the second collection region,
the second collection region is connected to a predetermined position which is on the transport path and distant from the start position, and
the transport unit comprises
   a first transport portion configured to transport the specimen rack positioned at the predetermined position to the second collection region, and
   a second transport portion configured to transport the specimen rack in the second collection region toward the first collection region.

Item 22: The specimen analyzer of item 21, wherein the transport unit comprises a third transport portion configured to transport the specimen rack transported toward the first collection region by the second transport portion into the first collection region.

Item 23: The specimen analyzer of item 22, wherein
the second transport portion collectively transports a plurality of the specimen racks in the second collection region toward the first collection region, and
the third transport portion collectively transports, into the first collection region, the plurality of the specimen racks which are collectively transported by the second transport portion.

Item 24: The specimen analyzer of item 23, wherein the transport unit comprises a shutter configured to set whether or not the specimen rack is to be transported between the first collection region and the second collection region.

Item 25: The specimen analyzer of item 16, wherein
the transport unit comprises a transport path including the start position,
the transport path extends in a left-right direction between the measurement unit and the first collection region, and
the transport unit comprises
   a first transport portion configured to transport the specimen rack positioned at a predetermined position which is on the transport path and distant from the start position, to a position which is the same height level with the transport path, and
   a second transport portion configured to transport the specimen rack transported by the first transport position to a position which is the same height level with the second collection region.

Item 26: The specimen analyzer of item 25, wherein the transport unit comprises a third transport portion configured to transport the specimen rack transported by the second transport portion to the second collection region.

Item 27: The specimen analyzer of item 26, wherein the first transport portion and the third transport portion transport the specimen racks in opposite directions, respectively.

Item 28: The specimen analyzer of item 1 or 2, wherein at least a part of the first placement region is disposed in front of the measurement unit in a range of a left-right width of a bottom surface of the measurement unit.

Item 29: The specimen analyzer of item 15 or 16, wherein at least a part of the first collection region is disposed in front of the measurement unit in a range of a left-right width of a bottom surface of the measurement unit.

Item 30: The specimen analyzer of item 1 or 2, wherein the specimen analyzer is a blood cell counter which counts blood cells in a blood specimen.

Item 31: The specimen analyzer of item 1 or 2, wherein a number of the measurement units disposed is two or more.

Item 32: The specimen analyzer of item 1 or 2, wherein
a number of the specimen containers that can be placed in the first placement region and the second placement region at one time is 160 or more and 800 or less, and
a number of the specimens that can be analyzed per one hour by the specimen analyzer is 130 or more and 400 or less.

Item 33: A specimen processing system comprising:
the specimen analyzer of item 1 or 2; and
a smear preparation device.

Item 34: The specimen processing system of item 33, wherein
the smear preparation device comprises
   a smear preparation unit configured to prepare a smear of a specimen in the specimen container; and
   a transport unit configured to transport the specimen rack transported from the specimen analyzer to a start position at which the smear preparation unit starts preparing the smear, and
the transport unit of the smear preparation device comprises a third collection region which is disposed in front of the smear preparation unit and in which a plurality of the specimen racks can be collected, and a fourth collection region which is disposed in the left-right direction relative to the third collection region and in which a plurality of the specimen racks can be collected.

Item 35: The specimen processing system of item 33, wherein
the smear preparation device comprises
   a smear preparation unit configured to prepare a smear of a specimen in the specimen container, and
   a transport unit configured to transport the specimen rack transported from the specimen analyzer to a start position at which the smear preparation unit starts preparing the smear, and
the transport unit of the smear preparation device comprises a third collection region which is disposed in front of the smear preparation unit and in which a plurality of the specimen racks can be collected, and a fourth collection region which is disposed in the up-down direction relative to the third collection region and in which a plurality of the specimen racks can be collected.

Item 36: A specimen analyzer that uses a specimen rack in which a plurality of specimen containers can be held to analyze a specimen in each of the specimen containers, the specimen analyzer comprising:
a measurement unit configured to measure the specimen; and
a transport unit comprising a placement region in which a plurality of the specimen racks can be placed, the transport unit configured to transport the specimen racks placed in the placement region to a start position at which the measurement unit starts measurement, wherein
a number of the specimen containers which can be placed in the placement region at one time is 160 or more and 800 or less, and
a number of specimens that can be analyzed per one hour by the specimen analyzer is 130 or more and 400 or less.

Item 37: The specimen analyzer of item 36, wherein the placement region includes a first placement region which is disposed in front of the measurement unit and in which a plurality of the specimen racks can be placed, and a second placement region which is disposed in a left-right direction relative to the first placement region and in which a plurality of the specimen racks can be placed.

Item 38: The specimen analyzer of item 36, wherein the placement region includes a first placement region which is disposed in front of the measurement unit and in which a plurality of the specimen racks can be placed, and a second placement region which is disposed in an up-down direction relative to the first placement region and in which a plurality of the specimen racks can be placed.

Item 39: The specimen analyzer of item 37, wherein the transport unit further comprises a first collection region which is disposed in front of the measurement unit and in which a plurality of the specimen racks can be collected, and a second collection region which is disposed in the left-right direction relative to the first collection region and in which a plurality of the specimen racks can be collected.

Item 40: The specimen analyzer of item 38, wherein the transport unit further comprises a first collection region which is disposed in front of the measurement unit and in which a plurality of the specimen racks can be collected, and a second collection region which is disposed in the up-down direction relative to the first collection region and in which a plurality of the specimen racks can be collected.

## Claims

1. A specimen analyzer that uses a specimen rack in which a plurality of specimen containers can be held to analyze a specimen in each of the specimen containers, the specimen analyzer comprising:
a measurement unit configured to measure the specimen; and
a transport unit comprising a first placement region which is disposed in front of the measurement unit and in which a plurality of the specimen racks can be placed, and a second placement region which is disposed in a left-right direction relative to the first placement region and in which a plurality of the specimen racks can be placed, the transport unit configured to transport the specimen racks placed in the first placement region and the second placement region to a start position at which the measurement unit starts measurement.

2. A specimen analyzer that uses a specimen rack in which a plurality of specimen containers can be held to analyze a specimen in each of the specimen containers, the specimen analyzer comprising:
a measurement unit configured to measure the specimen; and
a transport unit comprising a first placement region which is disposed in front of the measurement unit and in which a plurality of the specimen racks can be placed, and a second placement region which is disposed in an up-down direction relative to the first placement region and in which a plurality of the specimen racks can be placed, the transport unit configured to transport the specimen racks placed in the first placement region and the second placement region to a start position at which the measurement unit starts measurement.

3. The specimen analyzer of claim 1 or 2, wherein
the transport unit comprises a transport path including the start position, and
the transport path extends in the left-right direction between the measurement unit and the first placement region.

4. The specimen analyzer of claim 3, wherein the transport unit comprises a transport portion configured to transport the specimen racks placed in the first placement region and the second placement region to a predetermined position which is on the transport path and distant from the start position.

5. The specimen analyzer of claim 4, wherein the transport portion transports the specimen racks placed in the first placement region and the second placement region to the predetermined position that is a single position.

6. The specimen analyzer of claim 1, wherein
the transport unit comprises a transport path including the start position,
the transport path extends in the left-right direction between the measurement unit, and the first placement region and the second placement region,
the second placement region is connected to a predetermined position which is on the transport path and distant from the start position,
the first placement region and the second placement region are connected to each other at a transport start position on the first placement region side and a transport end position on the second placement region side, and
the transport unit comprises
a first transport portion configured to transport the specimen rack in the second placement region to the predetermined position, and
a second transport portion configured to transport the specimen rack from the transport start position to the transport end position.

7. The specimen analyzer of claim 6, wherein the transport unit comprises a third transport portion configured to transport the specimen rack placed in the first placement region, to the transport start position.

8. The specimen analyzer of claim 7, wherein the first transport portion and the third transport portion transport the specimen racks in opposite directions, respectively.

9. The specimen analyzer of claim 1, wherein
the transport unit comprises a second transport path configured to transport the specimen rack placed in the first placement region, to the second placement region, and
the transport unit transports the specimen rack placed in the first placement region to the start position through the second transport path and the second placement region, and transports the specimen rack placed in the second placement region to the start position without causing the specimen rack to pass through the second transport path and the first placement region.

10. The specimen analyzer of claim 1, wherein
the transport unit comprises
a transport path extending in the left-right direction between the measurement unit, and the first placement region and the second placement region, the transport path including the start position,
a first transport portion configured to transport forward or rearward the specimen rack in the first placement region,
a second transport portion which is disposed at front ends of the first placement region and the second placement region, the second transport portion configured to transport the specimen rack between the first placement region and the second placement region, and
a third transport portion configured to transport the specimen rack in the second placement region in a direction opposite to a direction in which the first transport portion transports the specimen rack.

11. The specimen analyzer of claim 1, comprising:
a first transport portion configured to transport the specimen rack placed in the first placement region;
a second transport portion configured to transport the specimen rack placed in the second placement region;
a first detector configured to detect the specimen rack placed in the first placement region;
a second detector configured to detect the specimen rack placed in the second placement region; and
a controller configured to control the first and the second transport portions so as to cause the first transport portion to transport the specimen rack when the first detector detects the specimen rack, and cause the second transport portion to transport the specimen rack when the second detector detects the specimen rack.

12. The specimen analyzer of claim 1, wherein the transport unit further comprises a first collection region which is disposed in front of the measurement unit and in which a plurality of the specimen racks can be collected, and a second collection region which is disposed in the left-right direction relative to the first collection region and in which a plurality of the specimen racks can be collected.

13. The specimen analyzer of claim 12, wherein
the transport unit comprises a transport path including the start position, and
the transport path extends in the left-right direction between the measurement unit and the first collection region.

14. The specimen analyzer of claim 12, wherein a number of the specimen racks which can be placed in a placement region of the transport unit and a number of the specimen racks which can be collected in a collection region of the transport unit are equal to each other.

15. The specimen analyzer of claim 12, wherein a number of the specimen racks which can be collected in a collection region of the transport unit is larger than a number of the specimen racks which can be placed in a placement region of the transport unit.

16. The specimen analyzer of claim 13, wherein the transport unit comprises a transport portion configured to transport the specimen rack positioned at a predetermined position which is on the transport path and distant from the start position to the first collection region and the second collection region.

17. The specimen analyzer of claim 12, wherein
the transport unit comprises a transport path including the start position;
the transport path extends in the left-right direction between the measurement unit, and the first collection region and the second collection region,
the second collection region is connected to a predetermined position which is on the transport path and distant from the start position, and
the transport unit comprises
a first transport portion configured to transport the specimen rack positioned at the predetermined position to the second collection region, and
a second transport portion configured to transport the specimen rack in the second collection region toward the first collection region.

18. The specimen analyzer of claim 17, wherein the transport unit comprises a third transport portion configured to transport the specimen rack transported toward the first collection region by the second transport portion into the first collection region.

19. The specimen analyzer of claim 18, wherein
the second transport portion collectively transports a plurality of the specimen racks in the second collection region toward the first collection region, and
the third transport portion collectively transports, into the first collection region, the plurality of the specimen racks which are collectively transported by the second transport portion.

20. The specimen analyzer of claim 19, wherein the transport unit comprises a shutter configured to set whether or not the specimen rack is to be transported between the first collection region and the second collection region.

21. The specimen analyzer of claim 1 or 2, wherein at least a part of the first placement region is disposed in front of the measurement unit in a range of a left-right width of a bottom surface of the measurement unit.

22. The specimen analyzer of claim 12, wherein at least a part of the first collection region is disposed in front of the measurement unit in a range of a left-right width of a bottom surface of the measurement unit.

23. The specimen analyzer of claim 1 or 2, wherein the specimen analyzer is a blood cell counter which counts blood cells in a blood specimen.

24. The specimen analyzer of claim 1 or 2, wherein a number of the measurement units disposed is two or more.

25. The specimen analyzer of claim 1 or 2, wherein
a number of the specimen containers that can be placed in the first placement region and the second placement region at one time is 160 or more and 800 or less, and
a number of the specimens that can be analyzed per one hour by the specimen analyzer is 130 or more and 400 or less.

26. A specimen processing system comprising:
the specimen analyzer of claim 1 or 2; and
a smear preparation device.

27. The specimen processing system of claim 26, wherein
the smear preparation device comprises
a smear preparation unit configured to prepare a smear of a specimen in the specimen container; and
a transport unit configured to transport the specimen rack transported from the specimen analyzer to a start position at which the smear preparation unit starts preparing the smear, and
the transport unit of the smear preparation device comprises a third collection region which is disposed in front of the smear preparation unit and in which a plurality of the specimen racks can be collected, and a fourth collection region which is disposed in the left-right direction relative to the third collection region and in which a plurality of the specimen racks can be collected.

28. A specimen analyzer that uses a specimen rack in which a plurality of specimen containers can be held to analyze a specimen in each of the specimen containers, the specimen analyzer comprising:
a measurement unit configured to measure the specimen; and
a transport unit comprising a placement region in which a plurality of the specimen racks can be placed, the transport unit configured to transport the specimen racks placed in the placement region to a start position at which the measurement unit starts measurement, wherein
a number of the specimen containers which can be placed in the placement region at one time is 160 or more and 800 or less, and
a number of specimens that can be analyzed per one hour by the specimen analyzer is 130 or more and 400 or less.

29. The specimen analyzer of claim 28, wherein the placement region includes a first placement region which is disposed in front of the measurement unit and in which a plurality of the specimen racks can be placed, and a second placement region which is disposed in a left-right direction relative to the first placement region and in which a plurality of the specimen racks can be placed.

30. The specimen analyzer of claim 29, wherein the transport unit further comprises a first collection region which is disposed in front of the measurement unit and in which a plurality of the specimen racks can be collected, and a second collection region which is disposed in the left-right direction relative to the first collection region and in which a plurality of the specimen racks can be collected.
